(19) Europäisches Patentamt / European Patent Office / Office européen des brevets

(11) EP 1 269 012 B1

(12) EUROPEAN PATENT SPECIFICATION

(45) Date of publication and mention
of the grant of the patent:
07.03.2012 Bulletin 2012/10

(51) Int Cl.:
F03B 13/00 (2006.01)

(21) Application number: 01902631.9

(86) International application number:
PCT/IT2001/000007

(22) Date of filing: 12.01.2001

(87) International publication number:
WO 2001/052613 (26.07.2001 Gazette 2001/30)

(54) "VARIABLE DROPLET IRRIGATOR" FOR DROPLET OR SPRINKLER IRRIGATION OF FLAT AND SLOPING LANDS

"WECHSELTROPFBEWÄSSERUNGSANLAGE" FÜR TROPF- ODER SPRINKLERBEWÄSSERUNG VON FLACHEN UND SCHRÄGEN BÖDEN

DISPOSITIF D'IRRIGATION AU GOUTTE-A-GOUTTE A DEBIT VARIABLE DESTINE A L'IRRIGATION AU GOUTTE-A-GOUTTE OU PAR ASPERSION DE TERRAINS PLATS ET EN PENTE

(84) Designated Contracting States:
AT BE CH CY DE DK ES FI FR GB GR IE IT LI LU MC NL PT SE TR
Designated Extension States:
SI

(30) Priority: 17.01.2000 IT MI20000034

(43) Date of publication of application:
02.01.2003 Bulletin 2003/01

(73) Proprietor: Corbellini, Pierfranco
20130 Milano Ticinese (IT)

(72) Inventor: Corbellini, Pierfranco
20130 Milano Ticinese (IT)

(56) References cited:
GB-A- 884 564          US-A- 4 132 364
US-A- 4 190 206        US-A- 4 331 293
US-A- 4 589 595

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 269 012 B1

**Description**

The variable a droplet irrigator is an invention that will lead to great savings in water, while still irrigating the crops to the same extent thanks to a minimal and constant flow of water. From US-A-4 132 364 is known an irrigator comprising a plug with a hollowshaft, external ring and pressure ring, in combination with a counterplug.

For the irrigation tube to work correctly, an electronic programmer is needed to activate, control and cut the flow of water to the irrigators by means of a solenoid valve.

When the irrigation system is used in domestic applications, a different type of irrigator can be used in addition to the droplet irrigator, thanks to the easy conversion of the so-called «plugs» that are responsible for creating the jet of water, fine sprinkling and free flow from a shutter-type orifice.

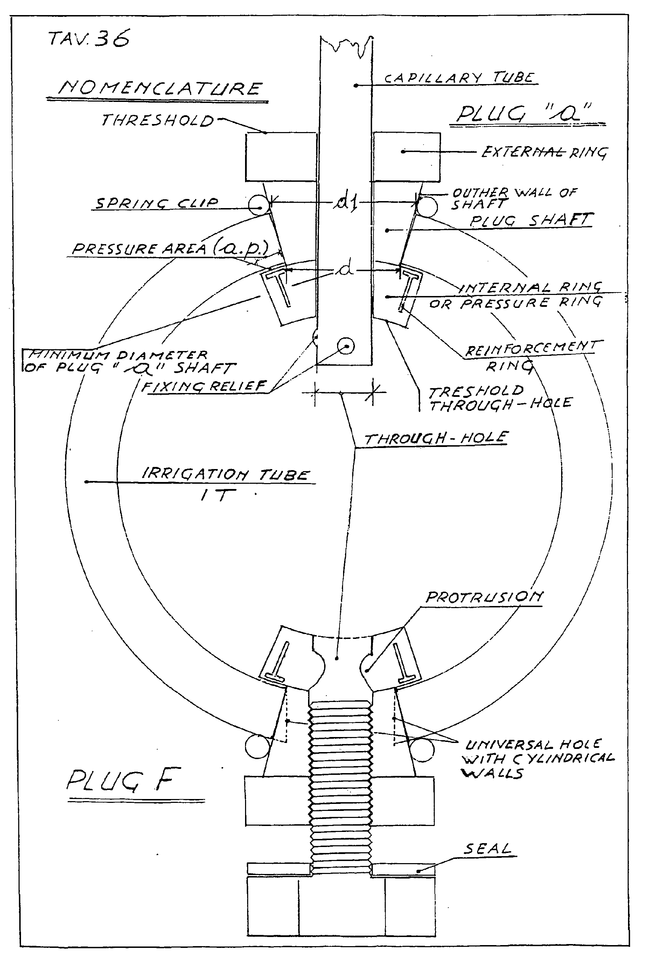

A small «capillary» tube can be inserted in the gap within the plugs (see fig. 36), capable of multiplying the irrigation as required by activating a number of small irrigators.

The simplified hydraulic organisation that extends the application of the variable droplet irrigator is shown in the simplified hydraulic connections described at point 92. This leads to shorter irrigation system assembly times, whether using resin tubes or metal pipes of different diameters and thickness, and even avoids the need for costly conventional hydraulic components.

The cultivator no longer needs to call on the services of a plumber to construct and convert any irrigation system, thanks to the reorganisation described below.

When adjusting the variable droplet irrigators (hereafter «VDI»), one must bear in mind the hardness of the water and its source. The best source of water for this invention is rainwater or melted snow.

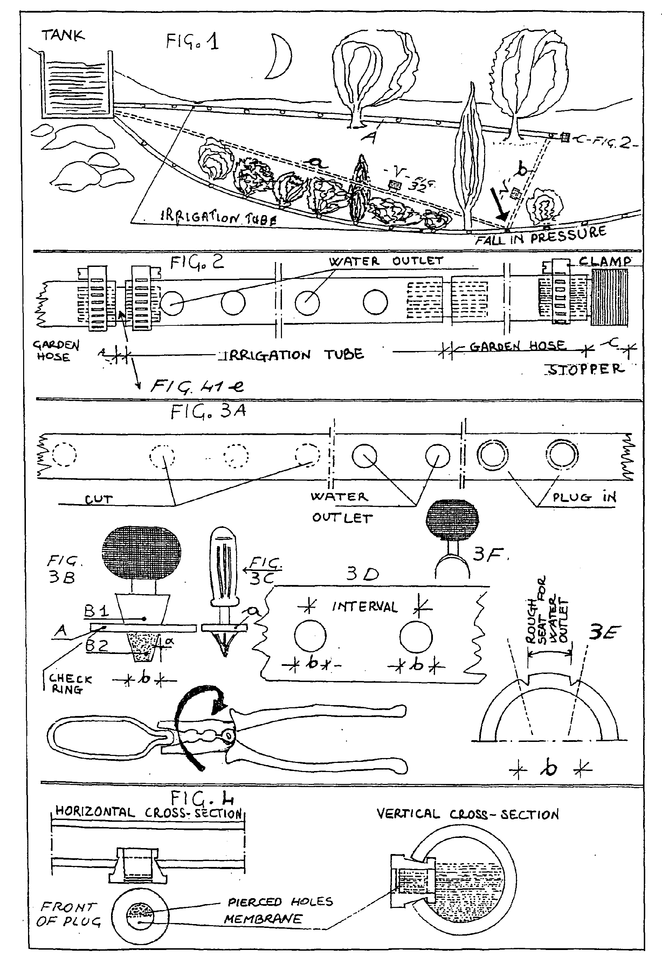

**2** fig. 1

The irrigation tube (hereafter «IT») with plugs normally consists of a rubber garden hose of varying diameter. To construct the tube, universal holes must be made at regular intervals (3D), of a length decided by the manufacturer, fixed in the open field by the cultivator.

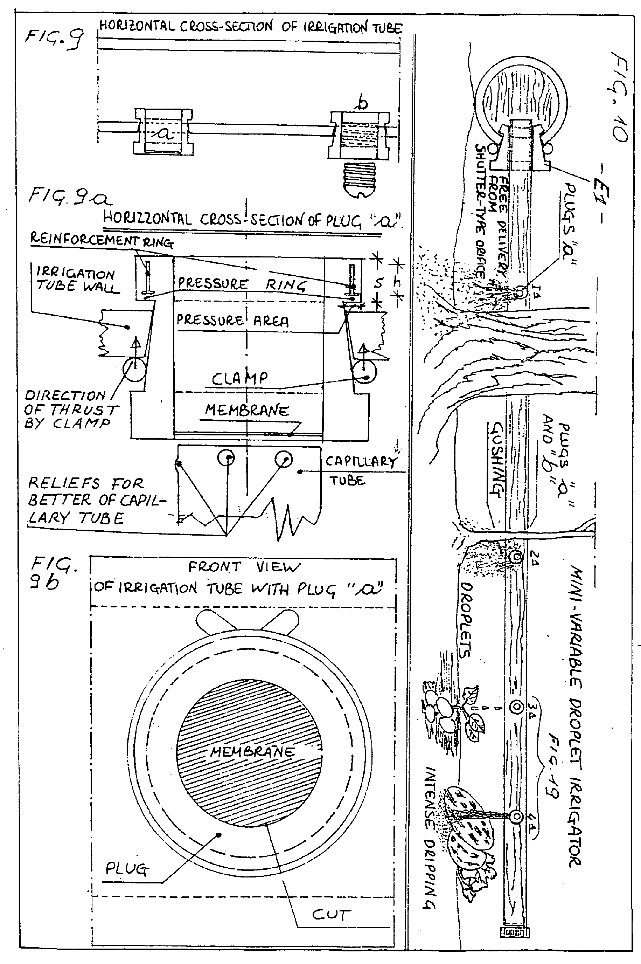

Soft plastic plugs are then fitted in these holes, such as plug «a» (see fig. 9), that can be converted into VDI's, if and when required.

When the arrow points to «drop in pressure», tank connection type «a» should be made using the hydraulic components forming the System, or connection type «b», for that stretch of IT where a significant drop in pressure has occurred due to an excessive number of irrigation points.

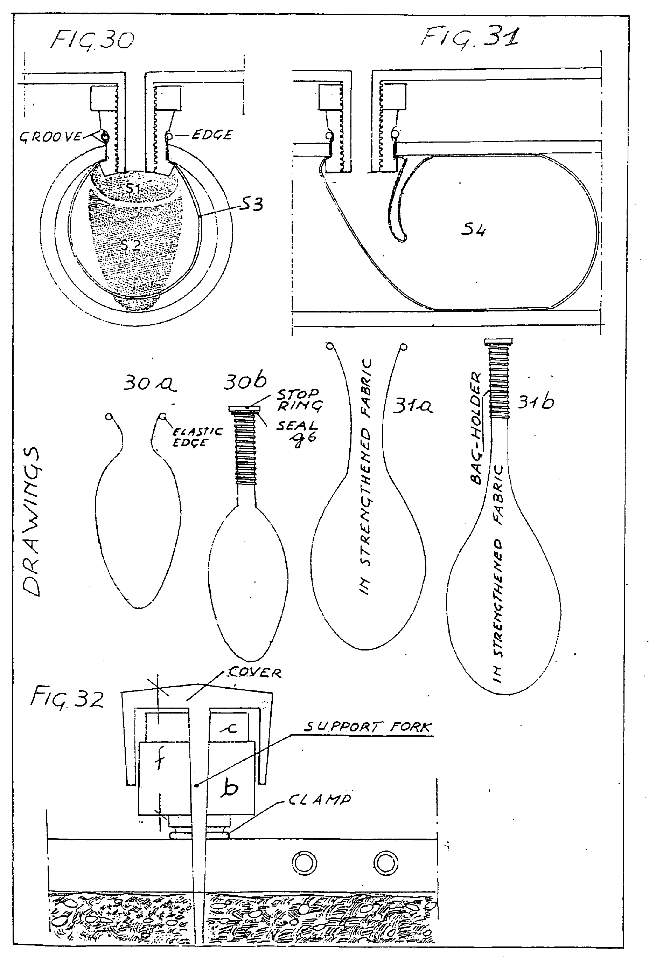

Connection type «b» is possible as long as this does not penalise the irrigation of crops using tube «A». If this is affected, carefully adjust the flow rate at «b» using valve «V» provided for this purpose (see fig. 32).

**3** fig. 2

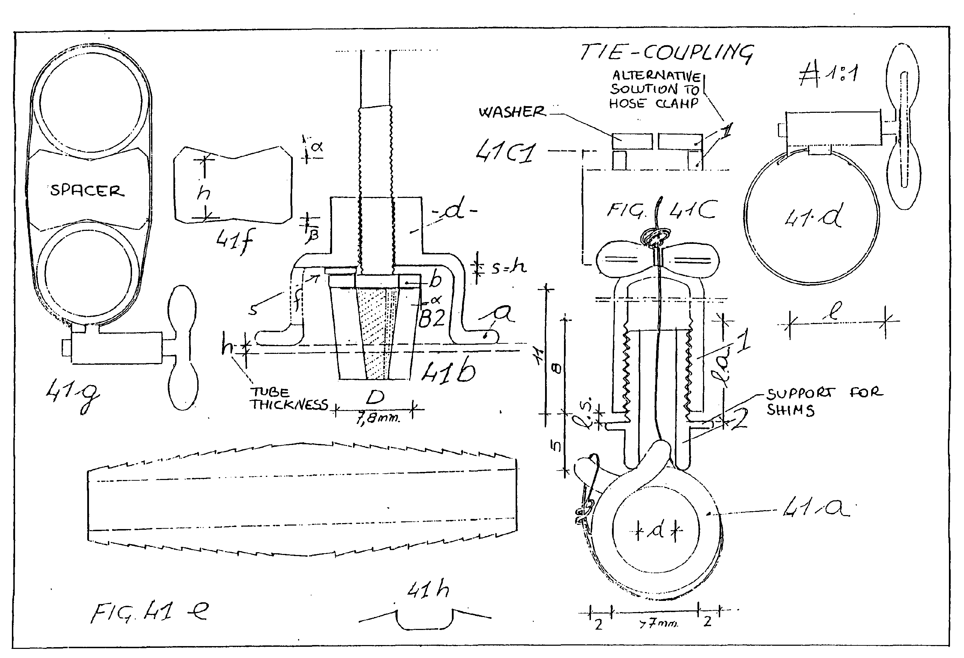

The IT can also be constructed using different lengths of any elastic tube to hand, connected to another elastic tube using a common union, as indicated on the left of the figure (see fig. 41 E).

An IT can also be built using a common garden hose, making some universal holes of a certain diameter in this.

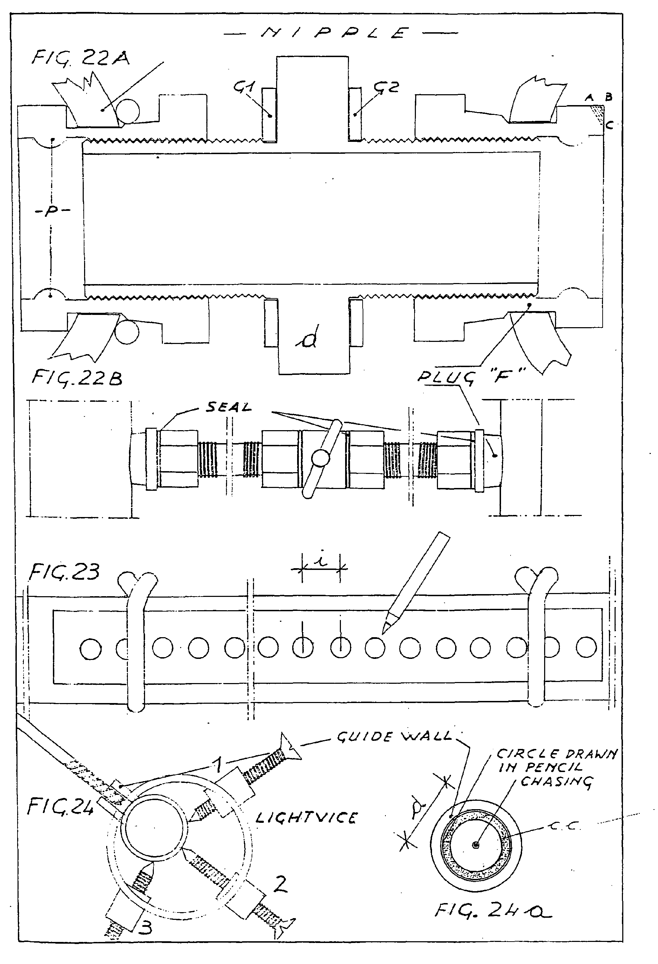

The SYSTEM connections, such as that shown in fig. 22A, mean tubes of different diameters, thickness and composition can be joined together, leading to large savings in money when it comes to creating any type of irrigation system.

In this way, one can use any tubes recovered from existing systems, only needing to make the universal holes (or enlarge existing holes), while ensuring that the VDI is efficient and lasts a long time.

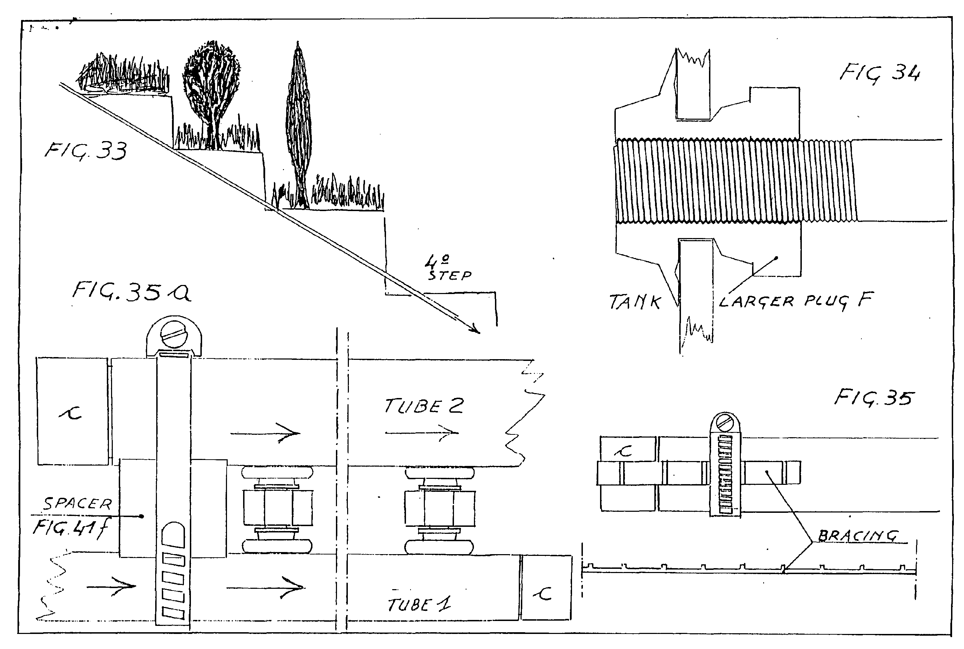

Next, add a simple closure «c» to the VDI to check the flow of water when required - such as when the pressure is too high - using either a brace (see fig. 35) or metal hose clamp (see fig. 41 D) to fix this securely to the tube. The PVC closure «c» has a full, relatively stiff body with a tapered and lengthened end so that it fits better to the inside walls of the IT.

**4** fig. 3

The elastic tube can also have some cuts, such as notches (see fig. 3 A), required o remove portions of the circular wall of the tube when needed and the rough seat of the universal hole.

Use a pair of pliers to grip each circular portion of elastic tube and then twist off, though this is only possible if the plastic tubes are quite soft. It's also possible to make rough holes in an elastic tube using a heated cross-head screwdriver; these holes can then be carefully reamed so that the plug «a» fits properly.

Fig. 3C shows a type of screwdriver fitted with a check tab «A» to prevent the opposite wall of the IT from being damaged by the hot tip of the screwdriver when making the hole, as such elastic tubes tend to deform very easily.

Fig. 3B shows the so-called «counter-sink» tool consisting of a knob with a steel rod and several aligned bodies. The first such body is the truncated cone «B1» (immediately followed by tab «A») united to the truncated cone body «B2» that has a finely abrasive surface or may be fitted with sharp blades along the generatrix to countersink the rough seat of the universal hole, honing this perfectly.

When a finely abrasive body is used to grind the hole, the plug «a» (see fig. 9) may not fit perfectly to the walls of the universal hole, needed to guarantee the perfect water-tightness of the VDI when working at high pressure.

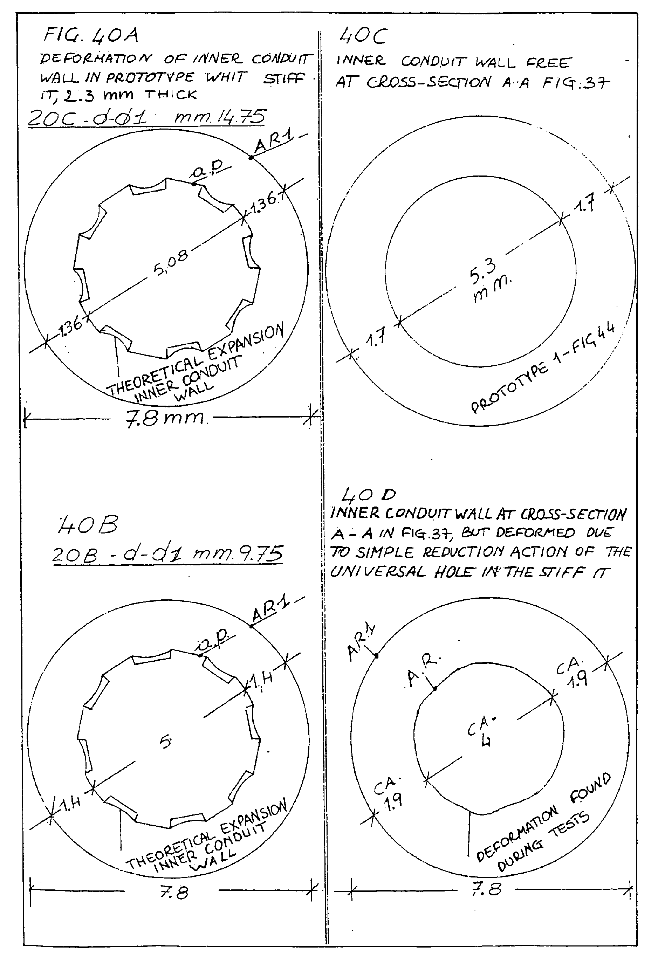

When inserted in the universal hole (see fig. 36), the hollow body of the prototype plug «a» (see fig. 40 D) presses against the cylindrical/tapered sides until the right level of pressure is obtained to guarantee the water-tightness of the VDI in all applications envisaged by the project.

**5** fig. 4

A small-diameter IT is suitable for a small kitchen garden and can also be used as a garden hose if fitted with solid plugs (see fig. 9 A), or with several suitably holed plugs providing an acceptable jet of water.

If the holes deliver too much water for the crops as their requirements change, each pierced plug can be used again in one of two ways: firstly, by inserting the plug in a universal hole so that the number and spacing of the holes are suitable for the new development of the crop; or by removing the membrane using a saw-blade (see tool in fig. 3F) and then turning this until it is in line with the incision (see fig. 9 B).

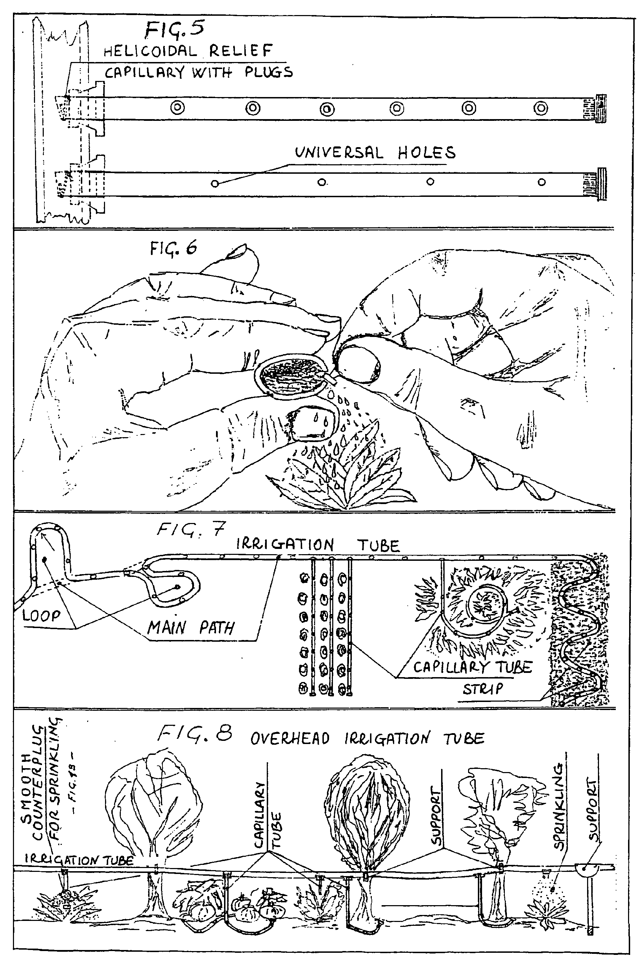

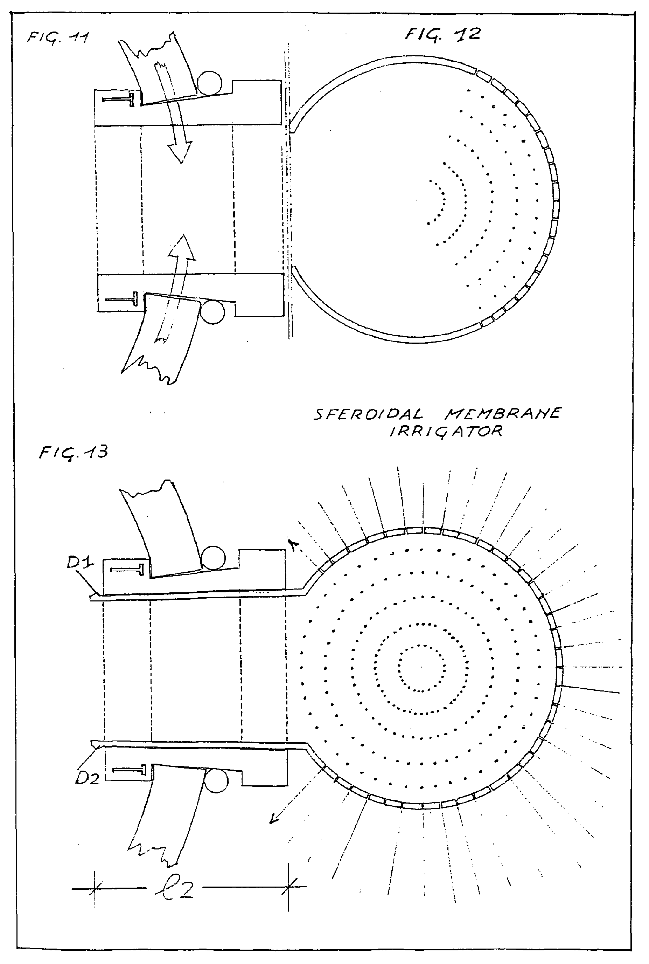

Once the membrane of plug «a» has been removed, one can produce «variable droplet irrigators», the basic components of the entire SYSTEM, though it might be a good idea to add other components, such as the capillary tube (see fig. 36 and fig. 5) or the spheroid counterplug (see fig. 13) with a complete membrane that can be pierced as and when needed.

In the case of water with low levels of sludge, a medium-sized needle should be used to make the hole; if the water comes from a rainwater tank or aqueduct, a very fine needle is needed to get an accurate flow rate that increases as each new hole is made.

**6** fig. 5

The capillary tube can house several smaller tubes to produce continuity of the irrigation system.

Each capillary tube has a helicoid relief (see fig. 5) or bubble relief (see fig. 9 A) on its outside, which forms a check on the corresponding sill.

The purpose of the relief is to stop, where possible, the capillary tube from being pulled out in the event of accidental tugging or where the tube itself is particularly long and installed on a very steep slope.

Both the helicoid and the bubble reliefs are burnt-in using appropriate pincers, while a spring clip (see fig. 9 B) is used to keep the coupling between the capillary tube and the plug «a» stable, offering enough grip to guarantee the water-tightness of the new connection.

**7** fig. 6

To insert plug «a» in the universal hole, press the sides of the inner ring (also known as the pressure ring) with your fingers (see fig. 36) and then gently insert the plug, preferably at an angle.

Using this inclination, turn plug «a», pivoting this on the edge of the universal hole while at the same time pushing the plug into the tube until it snaps into the inner ring.

Immediately pull the plug towards the outside of the IT until the inner ring see fig. 36) fits the pressure area perfectly (see fig. 9 A).

To remove plug «a», hold the IT securely in one hand and use the thumb on your other hand to press the hollow section (see fig. 36) against the edge of the universal hole; then pivot this, immediately and firmly grabbing the entire plug «a» and turning this towards the outside until it can be extracted with a snap. The specific design and size of plug «a» ensures that this is possible.

**8** fig. 7

The IT with its plugs can be used to water plants a little distance from where it actually lies as it can be fitted with several water inlets over a limited area (loop) and so multiply the flow at will.

This is also possible with a capillary tube fitted in any plug «a» with its membrane removed (see fig. 9 A) and fitted with small irrigators where the membranes are pierced a certain number of times to water a limited area, previously decided upon as a temporary or permanent measure.

With the minimum inside diameter of the capillary tube about 3.3 mm in the gap (see fig. 36) of plug «a» and minimum working pressure, only a few irrigation points are possible. This is true even when just a few holes have been made in the membrane (see fig. 4), as is also the case with the irrigators in fig. 12. When the flow rate drops in an IT due to capillary tubes taking too much water, the SYSTEM hydraulic components can be used to correct the flow rate (see point 67 on page 42) until the correct flow rate is restored to the irrigators (see fig. 13 and fig. 12), for instance in the case of an IT laid out on a long strip of land.

**9** fig. 8

The IT with plugs can be buried underground or suspended at the required height. If buried, it irrigates the land solely on the basis of the large diameter holes in the membranes (see fig, 9 B) or in the irrigator itself (see fig. 12).

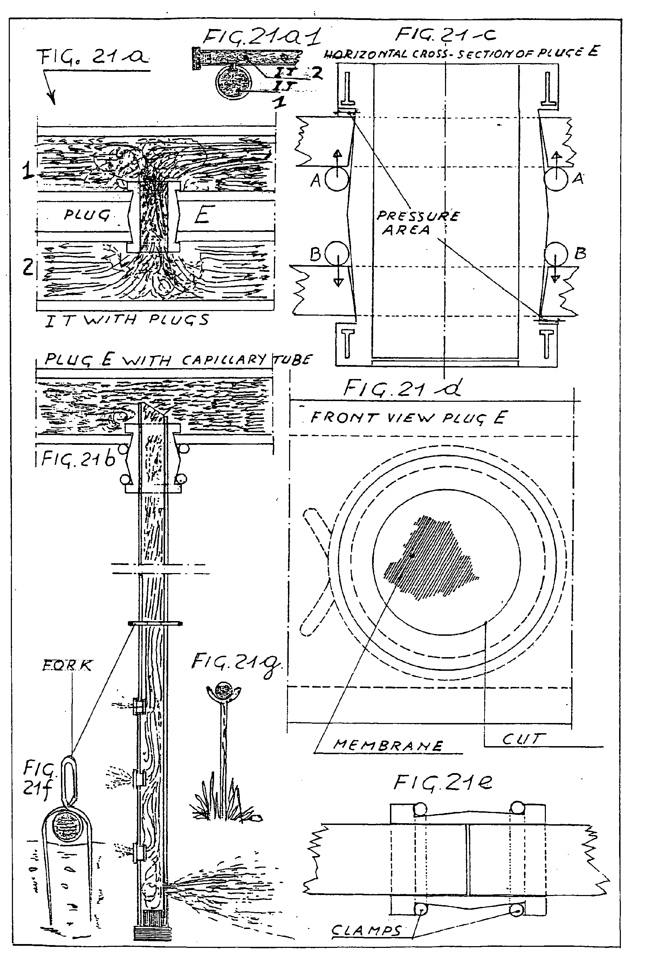

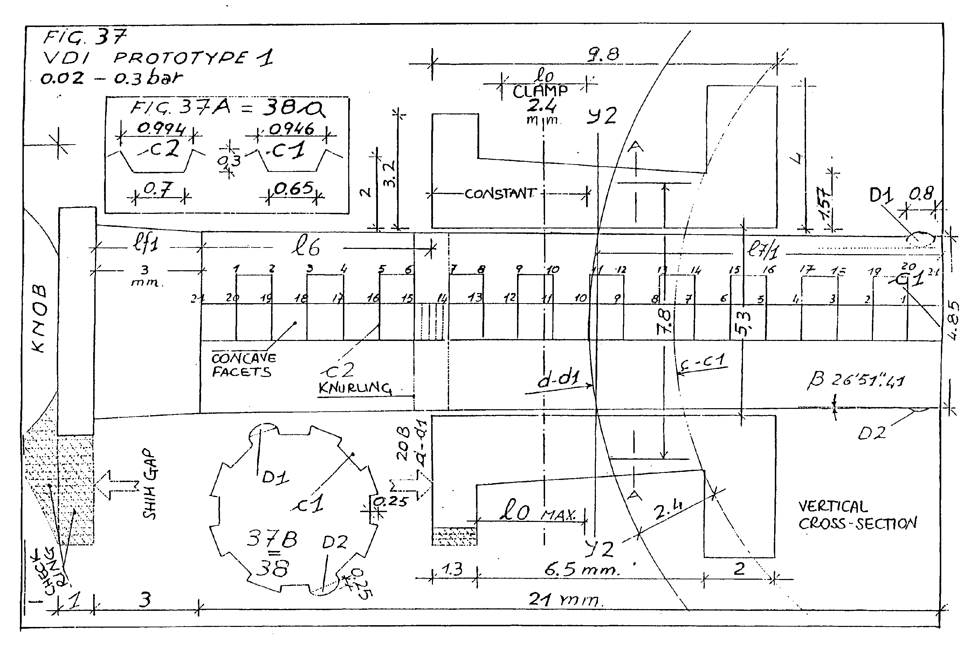

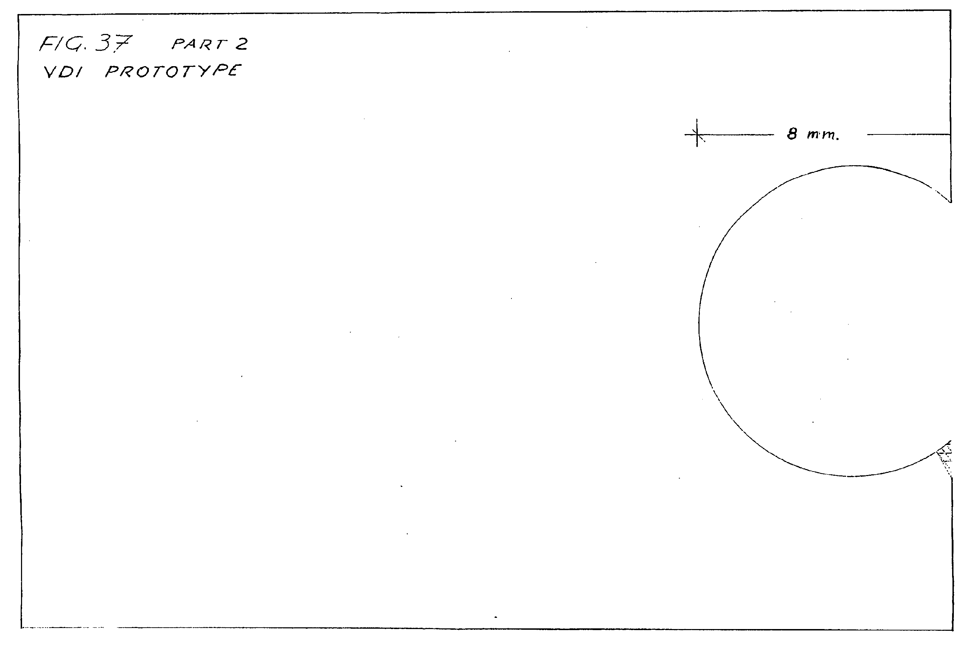

Both the VDI (see fig. 37) and a few capillary tubes in plugs «a» (see fig. 9A) can be used in the case of a suspended IT. They can be protected against the risk of being pulled out by means of a hose clamp (see fig. 41 D) and by fixing these securely to the soil with common forks (see fig. 21 F) to allow for targeted flows to the smaller VDI.

**10** fig. 9

Below are two types of plug:

plug «a» and plug «b»

Each plug must adhere precisely to the walls of the universal hole and should apply enough pressure to prevent any leakage of water. To ensure this, make the universal holes slightly smaller in circumference «d» than the shaft of the plug (fig. 36).

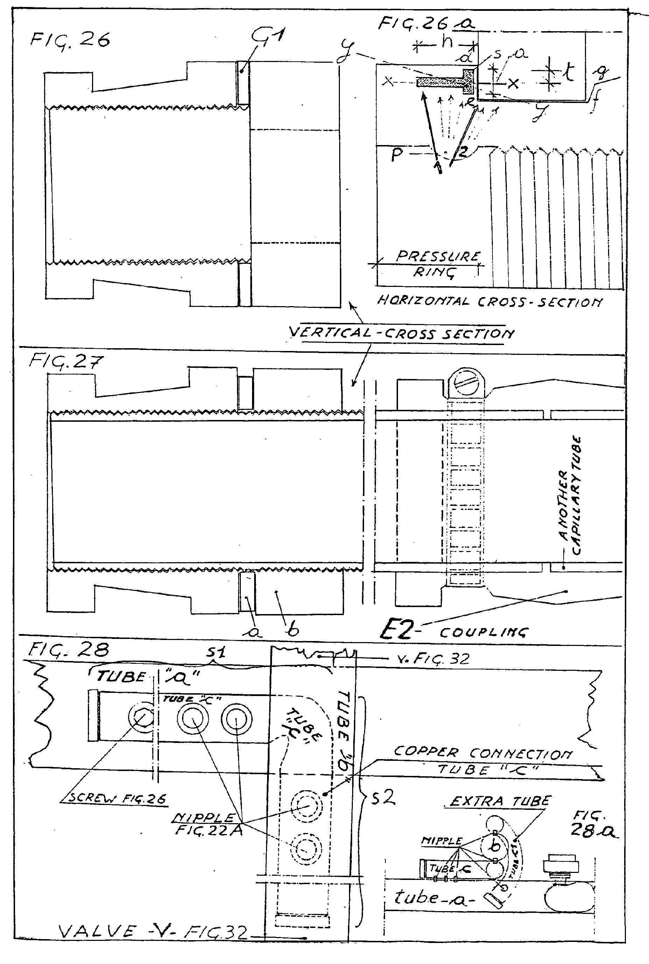

a) Water-tightness is only guaranteed when the hollow shaft of the plug «a» inserted in a universal hole of suitable diameter presses against its wall with sufficient force almost immediately.
Plug «a» or the VDI itself can be said to be water-tight when the former has unaltered elasticity over time.
A sunken reinforcement ring in the pressure ring (see fig. 36) can be seen in the horizontal cross-section of the plug «a» (see fig. 9 A). This is made from high strength steel with a T section suitable for strengthening the pressure on the inside wall of the IT.
To get a good level of pressure between the ring and the «pressure area» (see
b) fig. 36), pull the plug «a» towards you firmly, immediately after inserting this in the universal hole. The pressure obtained with the operation described at point c is thus consolidated.
The steel reinforcement ring (see fig. 26 A) also has the function of correcting any loss in elasticity due to prolonged bending of the pressure ring.
It has been found that if the IT is accidentally hit, its water-tightness is unaffected in that its elastic plugs acts as shock absorbers and can maintain the adherence required of the pressure ring in the pressure area (see fig. 36).
Pull the plug «a» towards you and push the clamp against the IT (see fig. 36) to obtain a secure connection between the tube and the VDI, in that:
c) with deliberately metered out traction force on plug «a» inserted in the universal hole, the required pressure value between the pressure ring and the «pressure area» (fig. 36) can be fixed and then stabilised by prompt application of the non-reversing clamp (see fig. 41 A).

This precise adherence between the two touching surfaces, secured by the clamp, could also favour water-tightness of plug «a» when placed in highly elastic and curved tubes (see fig. 7, arrow on loop), with hydraulic pressures that may even become too much as a result of a net reduction in the «pressure area» (fig. 36), such as that caused by still acceptable stretching in the universal hole of an IT that's too curved or elastic.

Another way to make the pressure ring more resistant to bending, and thus allowing for more pressure on the «pressure area», is to make this thicker at «s» and increase the height «h» of the reinforcement ring «T» (see fig. 9 A).

However, if the thickness «s» is increased but there is no reinforcement ring, the actual effect of the increased thickness is minimal on the «pressure area» due to the degree of elasticity (see fig. 40 D) that is attributed to plug «a».

To irrigate land using a stiff resin or metal IT, a suitably elastic plug «a» should be used to guarantee water-tightness. This plug can then be inserted or removed without problem from a universal hole of minimum diameter or a more functional hole with regard to hydraulic mechanics of the VDI.

In the case of somewhat elastic IT's, a tested composition needs to be fitted to the plug «a» and should be soft and suitable for guaranteeing water-tightness over long periods. Extreme summer weather should, however, also be taken into consideration, when excessive and undeniable softening of the two elements may take place.

In the case of systems formed of tubes made from the same material, the plug «a» should also be made from a suitable compound that, on the basis of its degree of elasticity, proves it can guarantee water-tightness over long periods after testing.

An elastic PVC plug «a» (see fig. 40 D) offers good levels of performance in terms of climatic conditions, such as:

at -10°C (use of preheated irrigation water) and at over 30°C.

Plug «a» (see fig. 40 D) can also be used to good effect in non-elastic tubes or those made from various elastic compositions, bent and working at just over 30°C.

**11** fig. 10

There follows a comparison between two possible applications attributable to mini irrigators and «sample» irrigators (see fig. 37, prototype).

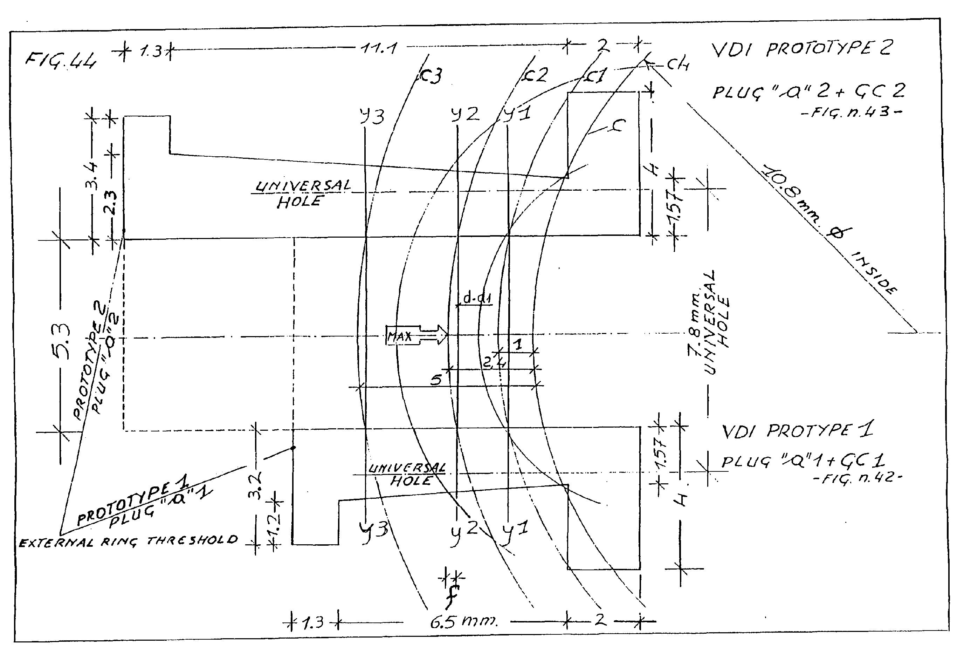

Using plug «a» (see fig. 44, prototype n° 1) with a capillary tube measuring just 5.3 mm outside diameter, it's possible to fit this with particularly small mini irrigators, that, if not very functional, should be redesigned to suit a larger diameter capillary tube.

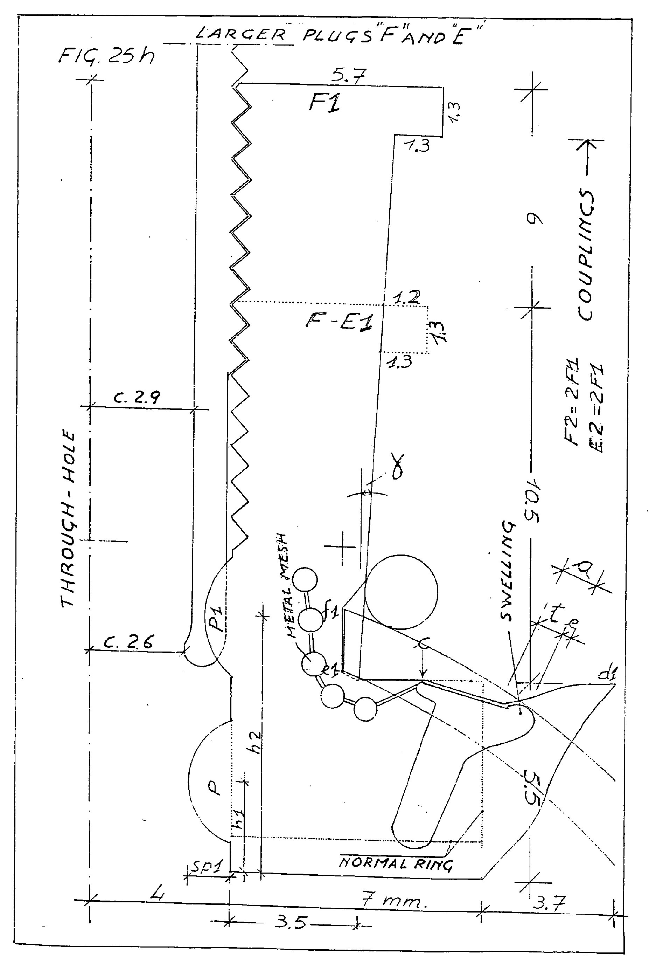

Hypothesis A concerns the use of a capillary tube with an outside diameter of at least 8 mm, to be fitted in the larger plug «E1» (see fig. 25 H), which will house VDI's of a far smaller size than the prototype (fig. 37).

Hypothesis B concerns elastic IT «2» (see fig. 21 A1), used in the same way as a capillary tube and suitable for connection to any other elastic or stiff IT of another diameter by means of one or more plugs «E» (see fig. 21C, Table 7, on page 68).

The inside diameter of tube «2» is large enough to allow for the insertion of the intact grooved counterplug («GC») of the prototype (see fig. 37 and fig. 20C, 1st irrigation, hypothesis A, tree or shrub with a large trunk). This establishes the free flow from the shutter-type orifice of the mini plug «a» or from the same universal hole made in the capillary tube measuring c. 8 mm.

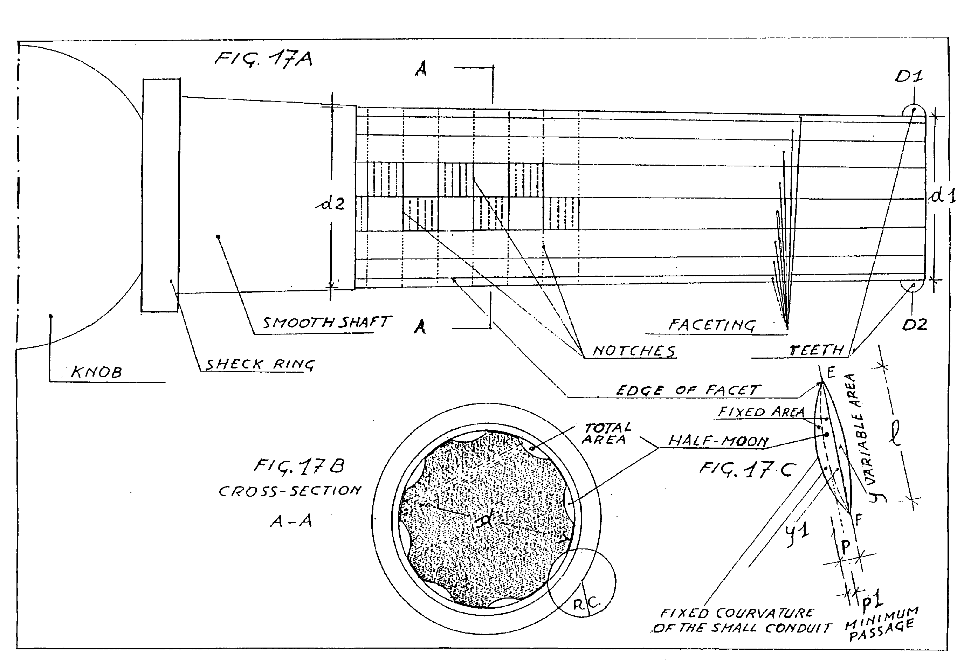

The mini plug «a» can also be capped with a corresponding mini counterplug (see fig. 17) or the spheroid plug with intact membrane (see fig. 13).

Hypothesis B: if you want to stop the flow temporarily from water outlet «1a», use the grooved counterplug (see fig. 17), at the same time forming the prototype (see fig. 37), or you can insert the spheroid counterplug with intact membrane (see fig. 13) instead of plug «a».

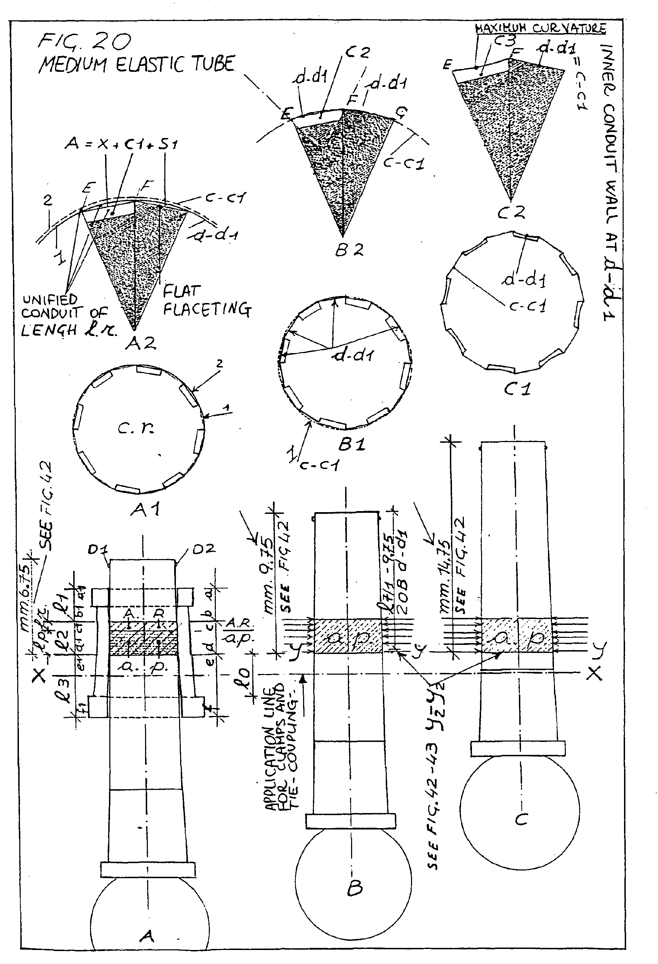

The grooved counterplug of the prototype (see fig. 37) has the advantage of producing an abundant flow of water when inserted as shown in fig. 20 A, with teeth «D1» and «D2» striking against the pressure ring (see fig. 36). This means that it's a suitable solution for increasing the flow rate of the VDI, where possible.

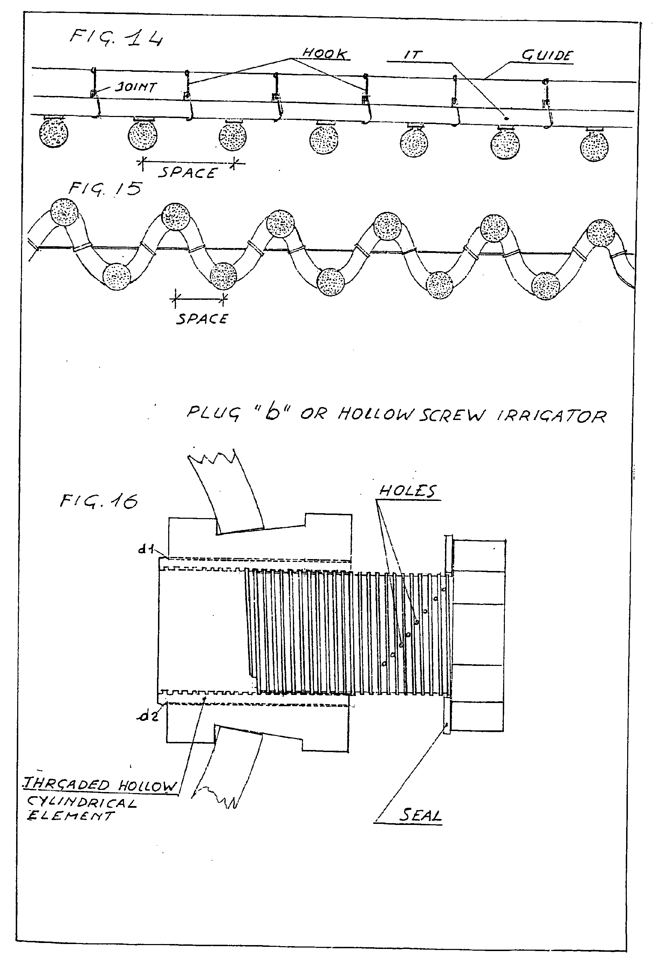

Hypothesis A: Second example - irrigation with jets of water using one or more jets. The mini plug «a» is used here with its membrane pierced only to a limited extent, or the mini irrigator with hollow screw «b» (see fig. 16), or the mini irrigator with spheroid membrane (see fig. 12 and 13) that allows for more holes than «b» as the membrane has a wider surface area.

Hypothesis B: The membrane of plug «a» (see fig. 9 A or fig. 44, prototype n° 1) should be pierced several times until you get a jet of water of the required intensity.

If the membrane is removed, however, using the tool shown in fig. 3F, the counterplug with pierced or intact spheroid membrane (see fig. 12) can be used in its place.

Plug «b» (see fig. 16) lets you vary the number of jets at will, by simply unscrewing the hollow screw. However, it should be noted that plug «b» is nothing more than an acceptable way of reusing plug «a» with its membrane removed. In the same way, the irrigators shown in fig. 12 and fig. 13 can also be used in small domestic systems.

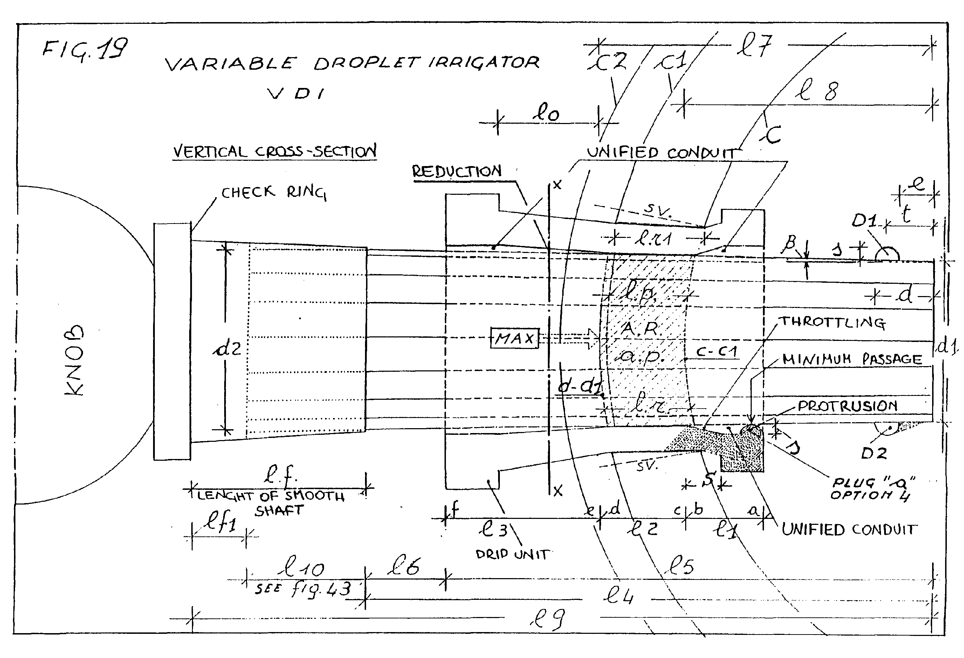

Hypothesis A: Third example - simple droplet. Here the mini VDI is used (see fig. 19) and must be designed in strict compliance with the 8 restrictions (see page 12, point 28) concerning any other feasible prototype.

Hypothesis B: here, however, the prototype is used (see fig. 37).

In the fourth example, the VDI is again used with a higher drip rate, benefiting further growth of the crop.

counterplug with intact spheroid membrane and irrigator with spheroid membrane.

The stiff, smooth shaft of the counterplug of length 12 is inserted in the gap (see fig. 36) of the plug «a» without membrane, creating passive resistance between the two elements in contact. This serves to prevent the spheroid from being ejected when the pressure exceeds 1 bar. However, to retain this at higher pressure levels, the diameter of the universal hole needs to be reduced (i.e. less than the usual 7.8 mm).

The membrane of the spheroid grooved counterplug can be pierced a higher number of times than the other membranes considered above. The result can be a jet of water with the water flowing within c. 270°.

More holes can be produced industrially in the irrigator (see fig. 13) of varying sizes so that it can irrigate both as a sprinkler and along guides

**13 fig. 14 and 15**

Here the VDI is suspended (see fig. 8, sprinkling, and fig. 14 and 15). It can also be laid along the ground, for instance, on plots of land (see fig. 7) planted with strip crops.

Using articulated hooks running along a suitable guide that groups (see fig. 15) or separates the VDI's. If many spheroid membrane irrigators are used (see fig. 13), the flow rate will have to be adjusted several times (see - organisation type 1) using duty tubes above the IT's.

**14 fig. 16**

The plug is the same as that shown in fig. 9. This is obtained by removing the membrane from the plug «a», inserting a hollow cylindrical threaded element in the gap and then screwing a hollow resin screw into this with thin walls, to be pierced as required.

The head of the hollow screw has a rubber seal to prevent drips from the internal thread and should be unscrewed to create the number of jets required. When tightly screwed, the irrigator again becomes water-tight. There should be the.minimum of radial attrition between the threading, just enough to exclude the risk of the screw accidentally coming loose.

**15 grooved counterplug fig. 17**

The non-elastic grooved counterplug (hereafter «GC») is a component of the invention that, once inserted in the through-hole of the component «a» or plug «a» without membrane (see fig. 9 A and 19) constantly called plug «a», forms the droplet irrigator - the basic invention - aimed at producing variable yet controlled drip rates and called the «VARIABLE DROPLET IRRIGATOR» (VDI).

**Foreword to 1**

In accordance with patent and construction purposes:

the VDI consists of a plug «a» and a grooved or faceted counterplug (initially separate) that form the basic functios of the VDI once assembled in the universal hole in the IT. The risk of the GC being ejected is avoided thanks to teeth D1 and D2.

The VDI is considered as a single and unquestionable invention for patent purposes, even though it consists of two initially separate elements.

**1 Reference to claim**

The component «a» of the VDI is one of the two basic components produced by hot-moulding that differs from the plug «a» with its membrane removed due to the fact that this retains minimal remnants of the membrane, not completely removed by the blade (see fig. 3 F).

Both the component «a» and plug «a» with its membrane removed, well fitted, have the same goal. The component «a» moulded without a membrane (see fig. 44) is the best possible component for the creation of the VDI and, for patent purposes, should be considered as the single and unquestionable invention (see fig. 37, prototype).

With regard to the aim of the SYSTEM, the plug «a» with membrane, suitable for becoming the second component of the VDI, should be considered as a cheaper means to plug several universal holes temporarily while deciding which of the other components described in the following chapters should be inserted.

**16 Fundamental components of the VDI**

component «a» or plug «a»

(in this description and the claim, reference is made to the plug «a» only in order not to repeat the distinction continuously) and

**grooved counterplug (GC)**

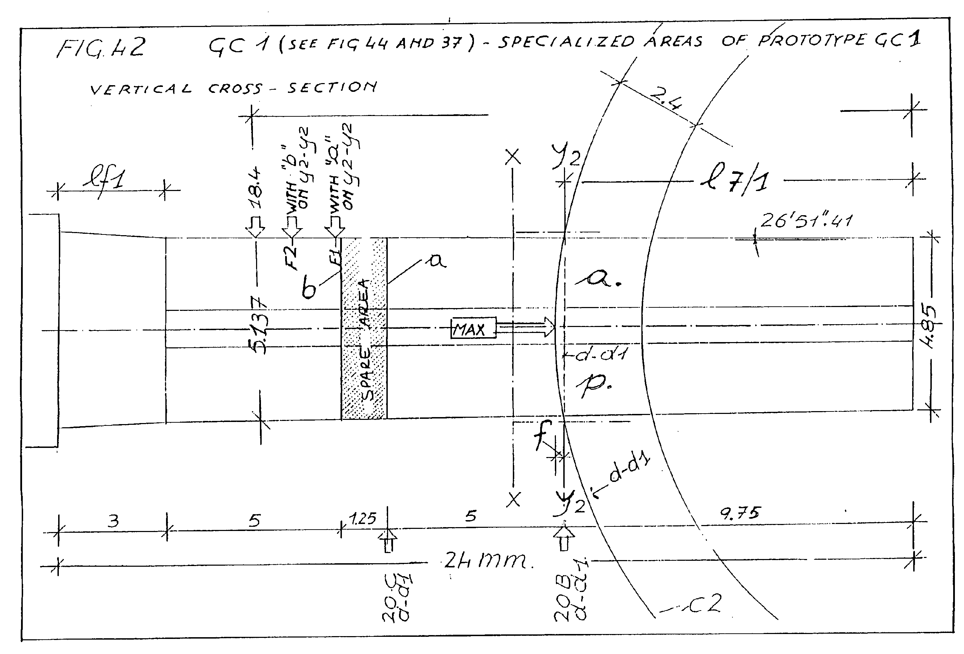

The way the invention works requires a second profile of the concave facets, i.e., another GC in addition to that shown in fig. 37 A - prototype - and in fig. 42, in order to keep the performance of the VDI unaltered in the presence of higher hydraulic pressure in the IT that may compromise this.

The small conduits in the VDI obtained in a.p. (area of pressure) (see fig. 20 A) are the result of the use of a certain profile of GC that creates minimal passages to remove impurities in the irrigated water. If hardness tests find that this is not suitable, the smoothness of the GC should be improved to avoid the formation of limescale deposits.

**17 Fixed and additional auxiliary VDI components**

fig. 41 A - 41 D - 41 C and 41 C1

These are needed to stabilise the GC within the plug «a» in the presence of adverse water pressure levels, i.e., when the pressure reaches a level where the GC has to be blocked to prevent this from shifting or being ejected. The auxiliary components also let you reduce the flow rate, thus also helping you select the exact drip rate. These components comprise:

metal spring clip (see fig. 41 A)
hose clamp (see fig. 41 D)
autonomous tie couplings (see fig. 41 C and 41 C1)
clip couplings (see fig. 41 A and 41 C1)

**18** Concerning the GC and VDI

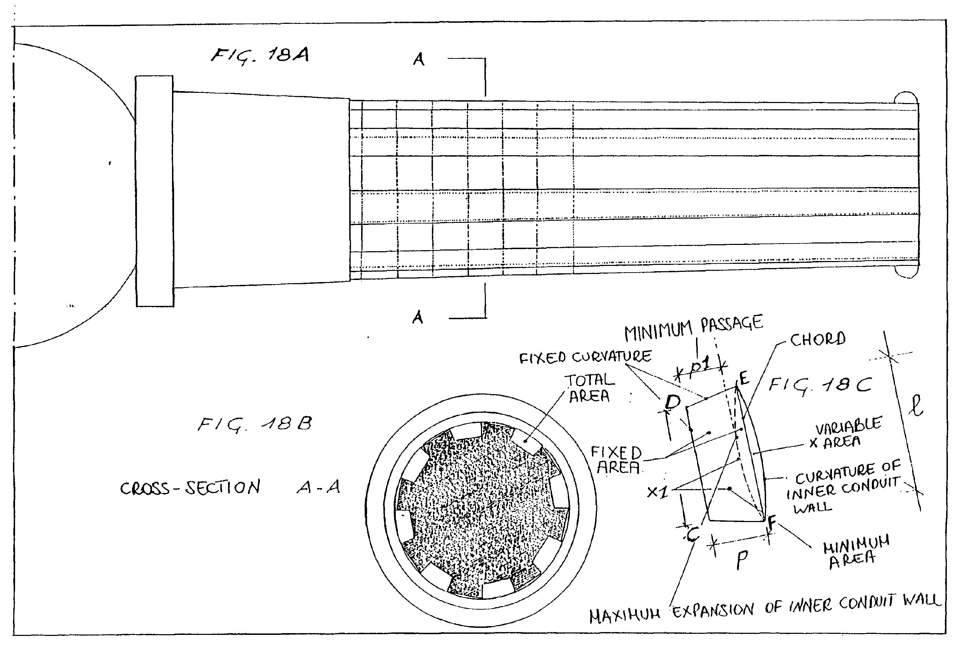

The small conduits of each GC have a fixed trapezoid (see fig. 18 C) or half-moon (see fig. 17 C) cellular construction. A gradual reduction in their cross-section is obtained within the a.p. (see fig. 19 and page 7).
The VDI thus offers an easy way to vary the drip rate, from high frequency to a very slow frequency and vice-versa. This is made possible by shifting the GC towards the outside or inside of the IT. If you want to stop the flow of water completely, the GC should be inserted fully in the through-hole until the smooth shaft (see fig. 17 A) seals it completely.
If the GC is then inserted a little bit further into the tube, the drip rate is slowed down immediately, while the opposite is true when you pull on the GC.
The VDI offers a great advantage when placed in an IT lying on a slope, as it manages to neutralize the effect of the progressive increase in pressures of the water that tends to speed up the drip rate.
Grooved counterplug with 16 facets (see fig. 17 A).
This is mostly made from stiff PVC. Cross-section A-A (see fig. 17 B) shows the profile of the shaft with its 16 arcs or concave facets, each of which alternates with the convex arcs.
Each convex facet is 1/16 of the curved lateral surface of a frustum of cone, whose bases are obtained from the circumference of the diameters D1 and D2.
As the counterplug moves within the through-hole, each convex facet progressively reduces the thickness of the inner conduit wall within the a.p. (see fig. 19).

**19 Key to abbreviations in fig. 19**

AR1 (see fig. 40 A and fig. 40 D, etc.) - this is the external area of the hollow shaft of the plug «a» and is reduced or compressed by the wall of the various profiles given to the universal hole.
(In this stable constraint, the thickness of the wall of the hollow shaft increases (see fig. 40 D) and the diameter of the through-hole drops significantly, due also to the elastic degree of the IT and the plug «a» itself.)
l.r.l. (length of AR1) - this is the universal hole, which may be cylindrical or tapered. In fig. 19, the cylindrical wall of the universal hole leads to a precise reduction AR1 in the external shaft of the plug «a», being cylindrical in shape and length l.r.l.
AR (see fig. 40 D), regarding plug «a» of the prototype VDI (see fig. 37) - deducted from the VDI in the comparative drawing shown in fig. 19 - is the result of the effect of pressure on AR1 (see fig. 40 D). It's also due to the countersunk universal hole, which depends on the degree to which the GC has been inserted. This leads to an AR of a length less than l.p. Such a small AR only anticipates the formation of the unified conduit 13 without creating problems in the functioning of the invention.
l.r. (length of AR) - this is the length along which the most consistent reduction in the calibre of the through-hole can be obtained for the reasons given above for AR
L2 - this simply represents one of the many thicknesses of the IT used and coincides with l.r. in fig. 19, as this refers to a cylindrical universal hole.
a.p. - this is the precise area of the inner conduit wall defined within that of the AR (see fig. 19) affected by the various degrees of compression applied by the convex facets of the GC, with profile a.p. that changes as the GC is inserted in line with the cylindrical or tapered shape of the walls of the universal hole and is also altered depending on the degree of elasticity of the IT and the plug «a» when used together.

The continuous transformation of a.p. also depends on the extension and profile of the type of reduction obtained overall in the through-hole in AR due to the precise diameter of the universal hole dictated, to a lesser degree, by the slight tapering of the shaft of the plug «a».

**Water-tightness of the VDI:**

The degree of insertion of the GC shown in fig. 19, considering the use of an IT with average elasticity, is already enough to press the entire AR against the convex facets (see fig. 37 - prototype), or at least that now fully transformed in a.p.

In fig. 20 A, the insertion of the GC is such that a.p. along l.p. represents about 70% of the former AR.

The value of passive resistance established between the walls of the universal hole and those of the shaft of the plug «a» in AR1 (see fig. 40 D) increases as the GC is inserted further. As the inner conduit wall becomes increasingly compressed (as shown in fig. 40 A and fig. 40 B) there is a continual improvement in the conditions in AR1 to guarantee the water-tightness of the VDI.

This reduction in the thickness of the inner conduit wall increases in a cylindrical universal hole in a stiff IT, but decreases in a tapered universal hole in a very elastic tube. In the latter case, it's a good idea to correct the water-tightness of the VDI using a greater pressure of the pressure ring in the pressure area (see fig. 36).

Below are a few comments on the stability of the GC and its tendency to be ejected due to excessive hydraulic pressure:

the level of passive resistance or initial detachment in the a.p. when using a cylindrical universal hole increases by bending c towards c1 (see fig. 19), while in the case of a tapered universal hole, with the same minimum diameter of the cylindrical hole, the passive resistance tends to rise to its maximum level before reaching c1, considering that the important insertions of the GC shown in fig. 20 B and fig. 20 C are usually enough to ensure the stability of the GC.

The useful value of resistance to be set is obtained using a suitable diameter in the universal hole, respecting the composition of the IT used. The effectiveness of this is judged by rising the water pressure until the limit of GC stability is reached.

If the tube is particularly elastic and has highly countersunk walls in the universal hole ("sv" in fig. 19), the a.p. drops significantly, as does the relative value of static attrition or initial detachment, to the point that the performance of the VDI is found to drop considerably.

The maximum values of static attrition obtained in the a.p. are essential in keeping the right level of VDI performance. These values rise until the maximum level of insertion of the GC is reached (see below), thus cutting the flow rate.

Tests carried out have confirmed that in adverse conditions (such as a «very elastic» tube, universal hole countersunk by 7.8 mm), the performance of the VDI can be retained (see fig. 37) with water pressure values a little higher than those of the second water pressure range (see Table 4) or just over 0.7 bar.

It has been found that, at such water pressures, the stability of the GC is consolidated in the a.p. on the basis of the mechanical pressure created between just the 8 convex facets and the inner conduit wall, while selection of the minimum drip rate (below 60 droplets/min) becomes particularly difficult, if not impossible, i.e., when the VDI operates below 0.7 bar.

This situation arises when the VDI is placed in very elastic PVC IT's with tapered universal holes produced using the tool (see fig. 3 B).

**20 Functioning of the VDI**

Each concave facet in a.p. forms a small conduit with opposing corners that press down on the inner conduit wall along l.p.

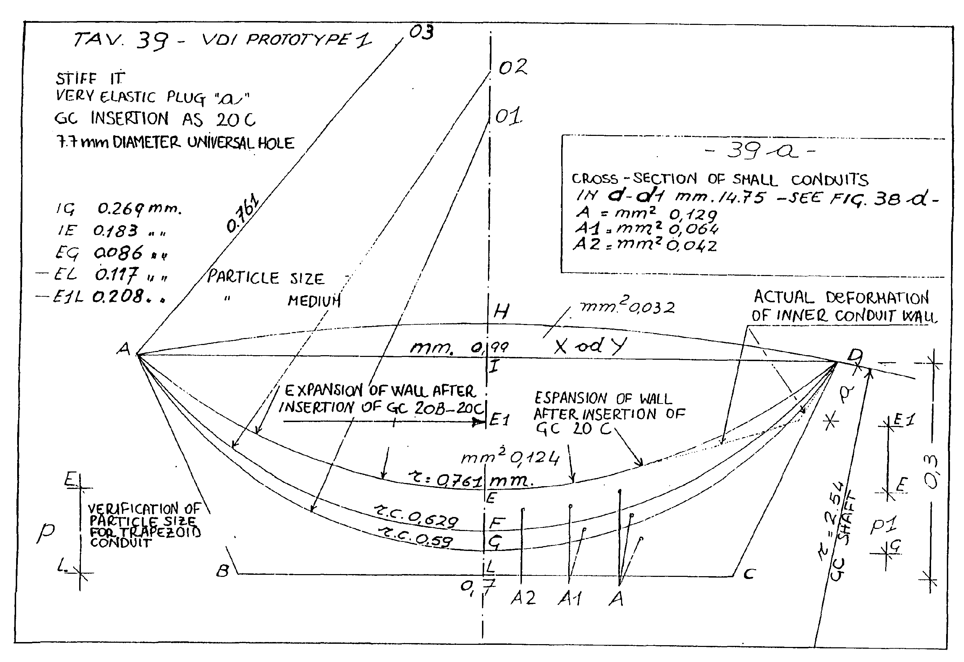

The inner conduit wall thus produces the circular segment «y» (see fig. 17 C and fig. 39) and «x» (see fig. 18 C) or the so-called variable cross-section of each small conduit.

The circular segments change shape and quickly become smaller in size when a slightly elastic or non-elastic tube is used, and may even disappear in such a case with minimal insertion of the GC (see fig. 19).

As the GC is gradually extracted, the deformed cross-section «y» immediately returns to its proper original shape, as shown by tests carried out on the elasticity of the PVC plug «a» (see fig. 40 D).

Variations in the flow rate in each conduit depend on the reduction of the area «y» alone. Each stream of water flows into the unified conduit 13 (see fig. 19), creating a flow of droplets that gradually reduces past the drip point (see fig. 19).

The minimum area «y1» (see fig. 17 C) or «x1» (see fig. 18 C) of the small conduit can be reduced even further depending on several factors, the most important being the composition of the IT's used and the tested reduction of the diameter of the universal hole.

Force applied by fingers when selecting the drip rate.

The resistance to dynamic attrition created in a.p. decreases as the GC is firmly pushed within the tube, however the force applied by the finger on the knob at the GC insertion limit is felt for longer, as this is almost cancelled (see fig. 19, 16). This is also the case when you are forced to slow down the speed of movement to check the notches (see fig. 17) in order to find the exact stop position. With continuous use of the prototype (see fig. 37), the static and dynamic attrition obtained with the use of an average and highly elastic tube require modest manual force to start and complete the insertion and extraction of the GC during the resetting of the VDI. It has been found that more than one hundred consecutive adjustments can be made without the finger becoming tired.

Such a number of consecutive adjustments in a non-elastic tube have led to the fingers becoming somewhat tired.

**21 Use of the GC with adverse water pressures in the VDI**

To obtain the nominal flow rate when the water pressure exceeds 2 bar in non-elastic tubes, the half-moon cross-section is used as shown in Table 4.

To get a minimum flow rate at more than 2 bar in the VDI, with more elastic IT's than foreseen, a half-moon conduit of suitable depth «p» (see fig. 17 C) can be used. This conduit is reduced in depth depending on the adoption of a higher curve radius (see fig. 17 B, RC (radius of curvature) - see prototypes, fig. 39). Table 4 provides a useful criteria to be used when assigning the type of GC to the corresponding plug «a» or the VDI, having first linked the IT to the water pressure range. Tables 2 and 3, on the other hand, show the settings for the VDI, bearing in mind the other assessments described below.

**22 Brief comments on stretches 11 - 12 - 13**

fig. 19 (basic outline / summary)

stretch 11

The fluid leaving the IT is sent to stretch 11, suffering flow resistance due to the change in direction until the point of being throttled S (see fig. 19) (see page 40,line 16 onward and page 45, lines 58 to 59) stretch 12

A significant reduction in the cross-section of the small conduit (cylindrical universal hole) occurs at point «d». This becomes very useful on insertion of the GC (see fig. 20 B), as has been found with the prototype (see fig. 37), due to the formation of 8 small trapezoid conduits with a suitable cross-section producing an interesting degree of flow resistance (useful cross-section, see page 13 , lines 6 and fig. 39) that continues into stretch 13.

In the prototype (see fig. 37), the elastic inner conduit walls are thinner at limit «d» in stretch 12 (see fig. 19, outline diagram and fig. 40 B), due to the considerable effect of the cylindrical universal hole when the GC is inserted (see fig. 20 B) and the use of a non-elastic tube.

Fig. 20 on page 19 describes how the VDI works in terms of the gradual reduction in the small conduits in the a.p.

stretch 13

Following the maximum reduction in the cross-section of the small conduits in stretch 12, the inner conduit wall suddenly widens in stretch 13 (as in stretch 11). In the case of the prototype, this becomes cylindrical again after just 1 mm in stretch 13 (see fig. 37).

**23 Angle**

β When the inclination of the facets in the GC (angle β) is increased even slightly with respect to centre of gravity, while D1 and 14 remain unchanged, there is a greater and interesting rise in the volume in the a.p. in line with the length of insertion at 15, leading to a greater drop in the flow rate.

If you reduce angle P appropriately, while keeping the diameters d1 and d2 (see fig. 19) unaltered, the GC is longer at 14, with a smaller volume in the a.p. of an equal length of insertion as that set at 15.

The lengthened GC is a solution that helps you select precise and minimal changes in the drip rate to suit its greater length of movement in a.p., found to be between 0.2 and 0.3 bar.

There are several ways to vary the flow rate, none of which are difficult or complex, but imply the necessary experience in setting the VDI's accurately in order to select the required drip rates quickly and smoothly.

When using very elastic IT's, you're forced to adopt the options in Table 5 in order to overcome the conditions that make it difficult to create and maintain the minimum delivery rate. A typical adverse situation is excessive dilation of the universal hole as a result of bending the IT into a loop (see fig. 7), hich gets worse if left for long periods in the summer sun.

For all IT compositions, whether elastic or otherwise, a specific cross-section of the small conduits is formed in the a.p., the insertion of the GC, type 15 (see fig. 19), being the same. If using two GC's of exactly the same type - such as type 14, with d1 and angle β (see fig. 19) of the same size etc., in addition to universal holes of the same diameter and fitted with walls of the same profile, at identical pressure values, with the same length of insertion of the GC type 15 between 20B and 20C, of importance with respect to the performance of the VDI - youobviously get the same delivery rate, but if you increase the elasticity of the IT and want to keep the rate the same, you must insert the GC further.

## 24 Factors reducing the minimum area

To establish the minimum area of type 17 C or 18C in order to get minimum drip rates, in line with the greater insertion of the GC ≥ that shown in fig. 20 C, several factors must be taken into account. Especially important here when deciding the angle of the VDI are the water pressure

Conduit walls or wall of the shaft of plug "a"

This needs to be kept the same throughout the same IT in order to allow the convex facets of the GC to sink to the same depth in the inner conduit walls when the GC is inserted to the same extent.

thickness of the inner conduit wall or that of the shaft of the plug "a"

The thickness has an effect on the performance of the VDI and generally needs to be kept the same in all VDI's, placed in an IT of equal composition.

When the universal hole has a diameter of the right size and plug "a" has inner conduit walls of optimal elasticity and thickness (such as those of the prototypes shown in fig. 44), the GC sinks into the walls thanks to its convex facets without you having to apply excessive force with your finger, while the inner conduit walls bend to suit the concave facets. This guarantees the expansion normally needed (see fig. 18 C, with arc "EF" shown as a broken line) on insertion (see fig. 20 C). This expansion reduces in various ways the cross-section of each small conduit (see fig. 20 C2).

Minimum drip rates not obtained by inserting the GC as shown in fig. 20 C can be had by inserting the GC even further than shown. If the water pressure is too difficult for the angle of the VDI, accessories can be used to make it easier to select minimum drip rates.

Further notes on the reduction of the small conduits (see page 8, in the VDI (see fig. 37):

Figures 20 A2, 20 B2 and 20 C2 show the size of the reduction obtained in the cross-section of the small trapezoid conduits in a VDI placed on an IT of medium elasticity. When the GC is inserted (see fig. 20 B), the inner conduit wall deforms, roughly speaking like that of a IT with 160% ultimate elongation (see page 37) and to the extent of cord "EF" (see fig. 18 C) due to the above factors (also mentioned in page 49). The variable cross-section of the small conduit or the circular segment x in fig. 18 C (Y in fig. 17 C) virtually disappears. At the same time, in addition to circular segments x and y, also the cross-section S1 on the side of each of the 8 small conduits tend to disappear. These are originally found between the surface of the flat facet and the curved inner conduit wall (see fig. 20 A2).

## 25 Roughness and faults in the universal hole produced in the field

The inner conduit wall must sometimes absorb the roughness or faults in the perfect roundness of the universal holes. In fact, some quick universal holes may need to be made in the field using the tools provided (see fig. 3 B, 3 C and 41 B) in order for the invention to work properly. Or, when you want to convert short lengths of common garden hose in to IT's, you also need to bear in mind the possible lack of expertise of some workers, resulting in some imprecise universal holes that will prevent the precise delivery of the invention.

When converting a garden hose, if the tools are not used correctly, you even may find some large humps in the a.p. once the GC's have been inserted.

When a convex facet of the GC runs and presses against a hump, it doesn't sink into the inner conduit wall as intended. Likewise, the multiple and precise formation of the 8 small conduits (see fig. 17 C and 18 C) is prevented. The right water pressure balance may be affected (see fig. 17, point 13), thus making it impossible to get the minimum and accurate drip rates required. During tests, it was found that in "very elastic" tubes (with over 200% timate elongation - see page 37) the convex facets run over a hump rather than sinking into the wall, thus causing minimal widening of the universal hole or several small conduits, which could result in an unwanted gush of water.

If, on the other hand, non-elastic or only slightly elastic tubes were used, it was found that there was a gradual though satisfactory reduction in the cross-section of the small conduits in the prototype (see fig. 37) in the presence of minor imperfections in the universal hole, without actually compromising the efficiency of the invention.

Consistent reduction in the cross-section of the small conduits obtained with non-elastic IT's makes for good efficiency of the invention; while in the case of very elastic and bent tubes, it becomes particularly difficult to avoid the unwanted dilation of the common universal holes (7-8 mm in diameter), which then requires you adopt other options or make these with a suitably smaller diameter.

The options listed in Table 5 and the accessories in Table 4 can be used to reduce the excessive delivery rate by limiting the unwanted dilation of universal holes in the presence of small humps (far more of a problem with very elastic IT's or where the IT's are left out in the summer sun).

## 26 specific minimum cross-section

The reduction of the delivery rate depends on the size of the reduction in the cross-section of each small conduit. This starts with the cancellation of the circular segments x or y (see prototype, fig. 39), called "variable sections", and then continues with respect to the fixed section, to a good extent depending on the level of elasticity of the IT, in the diameter of the universal hole (see point 70 page 49) to get the "minimum section" that may be either a half-moon (see fig. 17 C) or a trapezoid (see fig. 18 C).

The "specific minimum cross-section" is that found in IT's of identical composition, having universal holes of the same diameter and profile, i.e. the same cross-section is found in each small conduit and repeated in a.p. with the same angle of the VDI and the GC's inserted in the same manner (see fig. 20 A, where the a.p. also includes the section of the concave facet).

The "minimum cross-section", on the other hand, is the minimum cross-section of the small conduit in the a.p. between c - c1 and d - d1 and beyond d - d1 (see fig. 20 A), such as that found in the VDI (see fig. 37) placed in a tube of any thickness (e.g., c2 in fig. 19).

The minimum spaces (p1 in fig. 18 C and 17 C) represent the minimum height of the small trapezoid conduit and the maximum height of the half-moon conduit and are useful references when it comes to calculating the ejection of impurities in the irrigation water, where the particle size should be carefully measured before forming the final angles of the VDI.

The smaller the ratio between the minimum section and the total section of the small conduit (variable section + fixed section in fig. 18 C), the greater the delivery rate in the VDI, as can be seen with some simple field tests as the worker sets the required drip rate, normally used to get both maximum savings in water and agronomic benefits.

If you want to set a slower drip rate in a "minimum section" that you consider to be still too large, even once the GC has been further inserted (see fig. 20 C), you should use a different type of GC with more suitable concave facets in order to get the minimum section required. If this is still not possible, you could use another sample GC with common options from Table 5 (e.g., 2a and 3a).

If the delivery rate becomes too high as a result of excessive water pressure when using the VDI's in a basic configuration, inserted in universal holes of an equal diameter and profile, it may be useful to extend the irrigation system to cover a crop on a slope. It may also be a good idea to use a GC at a smaller overall depth of insertion ("p" in fig. 18 C and 17 C) or fitted with option 3 (see page 38) in order to get the "minimum cross-section" needed in order to reduce the drip rate to the required rate.

Such a situation stresses the need to a full set of spare GC's in order to get the "minimum cross-section" required via individual tests.

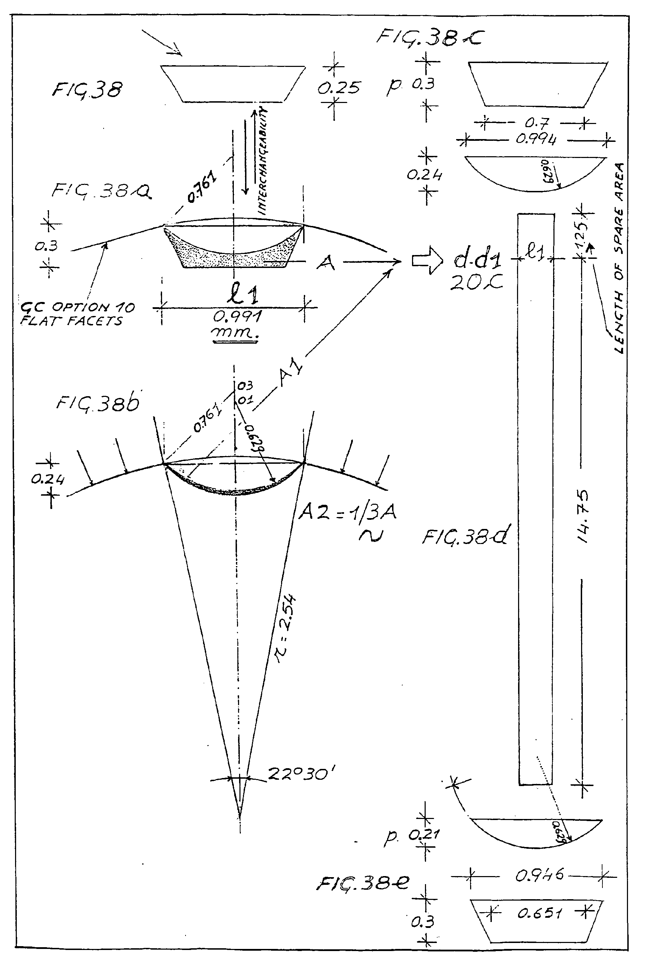

The small trapezoid conduit (see fig. 38 and 39) shows how you can get a 0.02 bar deviation in the required delivery rate using plug "a" in prototype 1 (see fig. 44). Instead, by using the half-moon conduit at the same water pressure and with the GC (see fig. 20 A) inserted to the same extent, you get an initially unsuitable delivery rate for certain crops during their full development. If, however, the GC is inserted further, the drip rate falls way below the required frequency.

The same benefits are not possible if the cross-section of the half-moon conduit is inserted to the same depth ("p1" in fig. 18 C) as the trapezoid conduit achieves when the GC is inserted. These benefits comprise the flat surface CD and constant depth "p1" (see fig. 18 C), which are the characteristics required to get rid of larger impurities in the water.

With regard to the half-moon conduit, it should be noted that when using rainwater for irrigation, drawn from tanks and free of salts and with only tiny impurities, you can reduce the minimum cross-section (see fig. 17 C) beyond the insertion of the GC (see fig. 20 C) as this will not give rise to possible blockages.

The short-term tests, the only ones possible to date, have shown that when using the invention (see fig. 37), the minimum hardness of irrigation waters together with impurities of the foreseen size combine to slow down the drip rate as required.

**27 The most likely composition of the VDI**

As the main cause for blockages in the working of the invention lies with the presence of calcium salts, the PVC plugs "a" have been given a suitable chemical compound to make their surfaces coming into contact with the water smoother in order to cut the treacherous build-up of calcium bicarbonate. These smooth surfaces are also useful in helping expel the various types of impurities in the water.

The trapezoid section of the small conduit is the best solution for getting rid of the bicarbonates mixed up with impurities in the water, especially if its depth "p" (see fig. 18 C) and point 10 on page 42) is increased as required.

Should you find problems with prototype n° 1 (see fig. 44), a PVC plug "a" with a special treatment to give it a more slippery surface should be used instead to prevent the VDI's from getting blocked with such water. You could also use such a plug together with the stiff Teflon-coated GC or increase the slipperiness of the two components further, as long as the advantages obtained in several crops in a row make the more expensive VDI good business sense. Special evaluation is required in the case of large crops where you expect to use more than 10 VDI's per square metre.

**28 design constraints for another VDI**

1) Ideal number of facets in the GC

This is found by starting with the diameter of the universal hole to be fitted with a VDI fitted with a GC capable of reducing the delivery rate to the minimum, stable drip rate required.

Large concave facets are obtained from the pentagonal sides in a circle with a circumference of 24.5 mm (the prototype's universal hole, see fig. 37). These facets are not suitable to get the minimum drip rate required, even if the water pressure is low (see Table 4, page 34).

A high number of convex facets requires too much manual force to insert the GC (see fig. 20 C) in the inner conduit wall (see also constraint 7) below), without getting the best expansion of the this (see prototype, fig. 37) within the concave facets (see constraint 2) below). The diameter of the universal hole is thus an important detail when it comes to designing the GC or the entire VDI. However, there are several other constraints concerning the number and profile of the facets.

2) Optimal expansion of the inner conduit wall

The optimal expansion of the inner conduit wall inside the small conduit can be found in the prototype only during tests, with respect to the causes that determine this, described at point 70, page 49, including the degree of elasticity of the wall itself. If this constraint can be overcome, it helps attribute the precise depth of the small conduit.

3) Determination of a good drip rate

If the inner walls of the conduit are too deep (see "p" in fig. 18 C), larger impurities in the water can pass. However, with medium to high water pressure in the invention (see fig. 37, page 34), it may not be possible to get a good, steady minimum drip rate.

4) Acceptable levels of impurities in the water or design size of the "minimum passages" possible with a prototype

The minimum passages (see "c3" in fig. 20 C2) made in the small conduits must have the depth "p1" in fig 18 C ("EL" in fig. 39) or "p1" in fig 17 C ("EG" in fig. 39) needed to deal with the impurities depending on the size accepted by the design.

5) Sufficient stability of the "minimum cross-section"

The minimum cross-section of each small conduit equal to or less than "A" in fig. 39 must be as stable as possible to keep the steady drip rate required.

The elasticity of the inner conduit wall must be established to ensure that it doesn't become too thin due to the nominal pressure of the water and thus does not give rise an unwanted increase in the set cross-section of the small conduit.

This "minimum cross-section" may also be affected by excessive expansion of the universal hole, caused by the nominal water pressure in a tube that's too elastic. This cross-section can be further reduced as needs be using the GC options (see Table 5).

6) Maximum water pressure values within which the delivery rate can adjusted to suit the crop using just the basic components (see Table 4 on page 34)

The drip rate of the prototype shown in fig. 37 can be adjusted by hand when the water pressure is below or equal to 2.8 Bar (see page 50), without having to use the tie coupling (see fig. 41 C) or having to restrain the GC from the risk of being ejected due to minimum, but constant increases in the water pressure.

7) Easy adjustment of the drip rate based on movement of the GC

When using the prototype (see fig. 37) and a non-elastic IT, you need to apply more pressure on the knob to adjust the minimum drip rate just before and after the insertion (see fig. 20 C) than is the case with elastic IT's. However, this doesn't lead to limitations in use, as the invention has still proved to be effective during trials. Indeed, it has been possible to adjust the VDI variously using the GC. Having said this, however, a suitable level of passive resistance in the a.p. is necessary to be able to overcome constraint 8) below.

8) Stable impediment of the ejection of the GC

To stop the GC from slipping or being ejected, there has to be a suitable level of passive resistance in the a.p., depending on the composition of the tube, as well as the use of universal holes of a weighted diameter in order to get the required attrition to suit the relevant insertions of the GC (see fig. 20 B and 20 C). In particular, with regard to constraints 6) and 8) above, the test described in point 71 on page 50 conducted using a universal hole of diameter 7.5 mm has shown that the GC can be restrained in the prototype (see fig. 37) when the water pressure rises to 3 Bar and more. The all-important factor here is the static attrition in the a.p., together with the use of a non-elastic or only slightly elastic tube.

Unfavourable levels of water pressure usually found when the VDI is installed on sloping ground can thus be countered thanks to the basic structure of the VDI (see page 34, line 5) and the use of IT's with only slight elasticity (or non-elastic IT's) with optional universal holes to get the required static attrition in the a.p.

**29 Constant reduction in the cross-section of small conduits, as obtained in the tests on the prototypes**

fig. 39

Trapezoid area "ABCD" + area "x" (fig. 18 C) or "y" (see fig. 17 C)

$$0.285 \ / \ 0.253 + 0.032 \ / \ x \ 8 = 2.28 \ mm^2$$

Maximum expansion of the inner conduit wall on insertion of the GC (see fig. 20 C) in a non-elastic tube with use of a highly elastic sample plug "a" expansion "AED"
0.124 x 8 - 0.99 mm$^2$
1.29 mm$^2$
Cross-section of small conduit 0.285 mm$^2$
2.53 + 0.032)

$$A \qquad 0.129 \ / \ 0.285 = 45.26 \ \%$$

$$A1 \qquad 0.064 \ / \ 0.285 = 22.45 \ \%$$

$$A2 \qquad 0.042 \ / \ 0.285 = 14.73 \ \%$$

**Table 2 - Reference to claim**

The effectiveness of the invention (often involving the use of tubes of different diameters) could thus implyconsiderable changes to the VDI (see fig. 37) or mini VDI's, the use of different profiles and numbers of small conduits, a different size of the plug "a", a different thickness of the inner conduit wall, a different length of the faceted area of the GC (14 in fig. 19) or a different size of angle β, etc. order to continue using the small diameter tubes. But still obtaining acceptable efficiency of the invention and the same mechanical and hydraulic performance of the prototype (see fig. 37), without thus actually affecting the novelty or originality of the invention, but simply adapting the structure of the invention to suit different applications.

**30 Conduit closures and elasticity of the plug "a"**

Intense and constant sun during the summer months increases the risk of the small conduits becoming closed due to the slow softening of the plug "a", i.e., when the "minimum cross-section" set after insertion of the GC ≥ that shown in fig. 20 C, thus making the closure of the small conduits more probable when you use slightly elastic or stiff tubes, especially with concave facets with a radius of curvature of 0.629 mm.

In fact, it may happen that after installing the VDI, the delivery rate remains unchanged for some time, but then starts dropping slowly but gradually: this is due to an inner conduit wall that had originally been compressed correctly (see fig. 40 A) now tending to expand too much in the concave facet.

On reaching the fixed curvature in the small conduit (see fig. 17 C) or the base "DC" (see fig. 18 C), it may stick to this and press this forcibly, resulting in a multiple unwanted closures of the small conduits (which remain closed even when the water pressure starts to rise).

To overcome this problem, several compositions of the plug "a" have been tested. Worthy of special mention here is that consisting of silicone rubber with hardness of about 60 Sh A and ultimate elongation of 350%.

Obviously, during tests at temperatures of more than 50 °C, the silicone rubber did not block the small conduit due to the effect of the summer sun. Likewise, it didn't produce the reduction in the required delivery rate after resetting. Just a small increase in the water pressure was enough to get delivery rates that tended to lessen in certain VDI configurations.

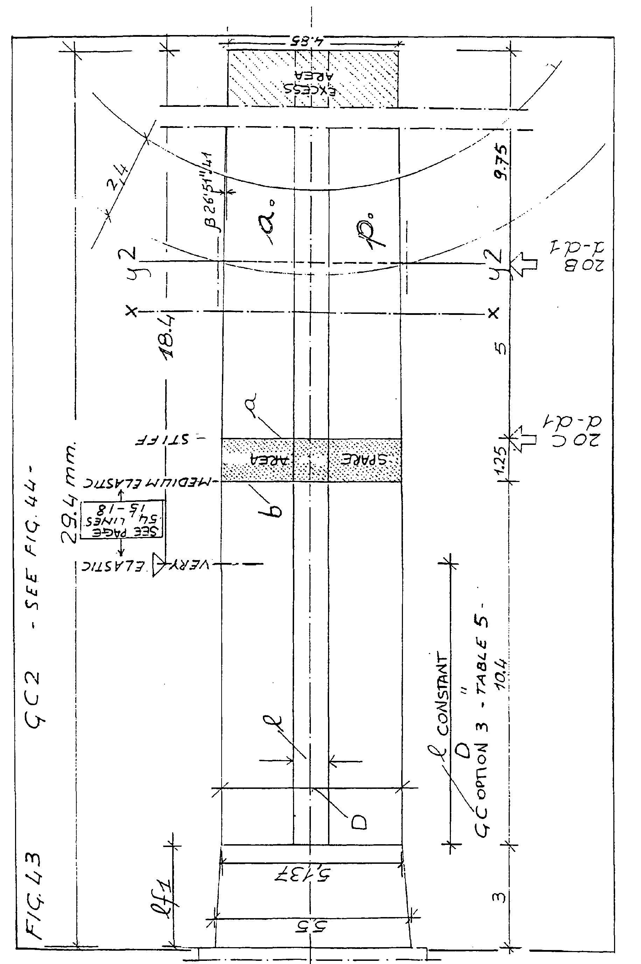

In other tests, we deliberately blocked the small conduit by inserting the GC deeply into the IT (see fig. 20 C) and thus relying on the effectiveness of the GC "2" in fig. 43 together with the plug "a" type 1 (see fig. 44) made from silicone rubber, in a non-elastic tube. Significant yield in the inner conduit walls was not found at pressures of up to 3 Bar due to the thrust of the water alone.

At over 3 Bar, or thereabouts, a small gap appeared in all of the blocked small conduits, creating a minimum but stable rate of delivery thanks to the higher water pressure used.

The same is also true with the elastic plug "a" (see fig. 40 D), when the pressure of the two surfaces in contact (the inner wall and the fixed curvature of the conduits, see fig. 17 C and 18 C) drops as the water pressure rises. This causes a gap to open at l.p. (see page 7) and so allows for steady delivery from the VDI's, though this disappears as soon as the water pressure drops to its previous value.

This shows how the elasticity of the plug "a" used in the prototype (see fig. 40 D) should be reduced via lab tests as unfavourable water pressure levels rise, or with the maximum value, and then needs to be adapted in the field using the sample plugs "a" with various levels of elasticity.

During tests we've also found that when a plug "a" (see fig. 40 D) with 2 or 3 small conduits is very near to becoming closed, the other conduits continue to provide a virtually unchanged delivery rate compared to the other VDI's nearby installed in the same manner and subjected to the same water pressure (in flat plains).

To date we haven't been able to establish exactly the delivery rate of each small conduit in the a.p when slight pressure is applied to the contact surfaces. However, we can expect that a small imperceptible rise in the flow rate often occurs there.

This is also the case when the closure is caused by a GC inserted beyond the point shown in fig. 20 C, whose axis is not in line with that of the plug "a". In tests we've found that the VDI still works well despite such a misalignment.

**Table 3 Reference to claim**

Each chemical composition or degree of elasticity of the inner conduit wall need to be tested to find the maximum water pressure at which the minimum cross-section can be maintained in a given configuration of the VDI. You also need to establish the pressure needed to open a gap in the l.p. (see page 7) when the conduit is completely closed. More tests are needed to determine the maximum insertion of the GC to get quick excessive reduction of the cross-section of the small conduits or their multiple closure in a given VDI configuration that is affected by the higher temperatures during the summer months, but also by the composition of the IT used and the diameter of the universal hole (see point 70 on page 49).

Silicone rubber leads to higher production costs than is the case with PVC, but this composition offers you a total guarantee against the risk of unwanted closure of the small conduits, which occurs after various periods when different materials are used for the plug "a" after installation in the VDI (without being affected by an increase in the water pressure above the nominal value).

Silicone rubber should also be used when the VDI has to have a particularly small stable "minimum cross-section". This is best achieved with a stiff tube, but can be reduced the most when GC type 2 (see fig. 43) is used with 0.629 mm radius of curvature (length 14 in fig. 19, longer than in fig. 42) and including option 3 in Table 5. This option should be fitted to the plug "a" (type 1 in fig. 44) to get far smaller cross-section suitable for several VDI's using shims (see point 72 on page 50) inserted in the relevant gap (see fig. 37).

### 31 comments on constraint 4) (point 28)

If using a half-moon conduit with a minimum gap ("p1" in fig. 17 C or "EG" in A1 in fig. 39), it's obvious that even the smallest of impurities cannot be filtered out, leading to fast and even excessive reduction of the half-moon.

If the impurities in the water differ in size and are of a hardness that affects even minimally the working of the VDI above, the result will be a reduction in the drip rate leading sooner or later to the total obstruction of the small conduits.

To delay such a problem for as long as possible, the size of the through-hole ("p1" = "EG" in fig. 39) in the half-moon should be increased carefully, measuring the GC precisely at 16 in fig. 19.

This means that we need to look at the unfavourable aspect of the half-moon conduit in terms of its inability to deal with water impurities. Detailed tests were conducted on several configuration types made to run at maximum limits, i.e. in excess of the minimum passage ("p1" in fig. 17C), for as long as the VDI's delivered the required drip rate, in order to discover how long said rate could be maintained.

The results show that the acceptable size of the impurities in the water is 3/5 the diameter of the minimum passage ("p1" in fig. 17C). This size of impurity also slips through the various natural filters, such as sand, and can be expelled for the longest period by the half-moon when this measures "AD" (see fig. 39).

In fact, the "minimum passage" ("EG" in A1 in fig. 39) decreases at a slower rate than "p1" in fig. 17 C (for comparison purposes only) or than at the edges "E" and "F", meaning that it makes sense to use a GC with 0.59 mm radius of curvature and a minimum passage greater than "EG", fixed at a minimum of 0.134 mm, in order confirm after the tests whether a particle size of DIAMETER 0.06 mm can be accepted for a minimum cross-section suitably greater than "Al".

Before impurities measuring 0.08 mm can pass, they will hit against the edges of the 0.59 mm radius of curvature half-moon more frequently. However, if the edges are moved further apart during the experimental area ("increased Al"), this will lessen the frequency, creating an area with a minimum passage "pl" of at least 0.134 mm (compared to 0.086 mm EG in fig. 39).

Following turbulence in the water, impurities are easily sucked into the conduit (13) after passing a suitably high gap in a.p., although there may be a slight slowdown here as the particles hit possible scaling that's built up over long periods of time. The half-moon conduit can thus be seen as a suitable means for slowing down the drip rate, but should mainly be used with irrigation water collected in rainfall tanks.

### Table 4 Reference to claim

With regard to constraint 4), i.e., the most acceptable particle size of the impurities discussed above, we found that a half-moon with a radius of curvature of 0.59 mm ("AD" in fig. 39) is best with rainfall irrigation water, **although** this implies a little effort in finding the right configuration type, especially in order to prevent the closure of the small conduits over time. This may be useful if soft water is used temporarily with an acceptably small size of impurities.

To establish whether or not the drip rate will be effected when larger impurities are met, the GC should be inserted depending on the way the invention has been set up, using shims (see point 74 on page 52) to form a suitable minimum passage greater than "EG" (see fig. 39) or a suitable depth ("pl") of the 8 small conduits to suit constraints 1) and 4).

### 32 concerning constraints 1) and 4)

To keep the VDI efficient in the long term, you should carefully increase "EG" in fig. 39, while still getting the necessary static attrition in the a.p. You should also ensure that impurities are dealt with properly, such as those with a particle size of 1.05 mm in diameter. This implies a minimum passage at "ElG" of 1.75 mm, obtained by carefully extracting the GC to the right degree. To get passage "ElG", the inner conduit wall ("IE1") needs to be expanded; alternatively, you may consider altering the configuration prompted by experience in irrigation (see page 45) or using the shims in the relevant gap (see fig. 37). You need to make a note of the impurities in the water passing through the minimum passage, the accepted hardness, the nominal water pressure and the elasticity of the IT (i.e., how much each unaltered configuration of the VDI lets you get a constant delivery rate in each stretch of tube with identical configurations, see page 45).

To limit the obstruction of the small conduits for as long as possible, use a GC with suitable half-moon facets, together with option 4 (see fig. 19) of plug "a", as described in Table 5. This option offers the advantage of letting the GC move its own axis in line with that of plug "a". Option 4 for plug "a" also lets you repeat the 8 "minimum cross-sections" perfectly, favouring the formation of the minimum passages ("pl" in fig. 17 C and 18 C) with a constant height, thus best avoiding the obstruction of the small conduits when there are impurities in the water of known size.

During tests we've found that the 8 minimum passages do not necessarily retain the exact nominal cross-section, but enough water flows through to the VDI to produce a constant delivery rate. The imperfect formation of the minimum cross-section is due more to impurities more than anything else.

### 33 Notches

These are formed by coloured knurled details (see fig. 17 A) and are used to measure the insertion of the GC at sight from above thanks to alignment of the external ring of plug "a" ("f" in fig. 20 A) to the notch below (see prototype, fig. 37). The millimetre grading of the notches also let you get a chessboard effect (see fig. 17 A) where the intervals are represented by alternating black and white squares

### 34 Recourse to other concave facets and GC options to get the best minimum cross - sections

a) cross-section 0.629 mm in fig. 39, 7.7 mm universal hole

To use the minimum cross-section created by the GC with 0.629 mm radius of curvature in a stiff or slightly elastic tube, you should bear in mind that its variable area "y" = 0.032 mm$^2$ represents about 16% of the total area of 0.198 mm$^2$ (0.032 + 0.042 + 0.124), while the area eroded by expansion of the inner conduit wall is about 62% (0.124 out of 0.198), in order to get a minimum cross-section of 21% or 0.042 mm$^2$ at A2.

b) advantages of the trapezoid conduit

Detail 38a in fig. 39 at 0.629

When the GC is inserted (see fig. 20 C) between the small conduit radius of curvature of 0.629 mm and the conduit (detail 38a), the resulting minimum cross-section "A" measures 0.129 mm and the minimum passage "EL" is 0.11 mm. The impurities in the water passing through this at "BC" (see fig. 39) lead to a surely lower risk of obstruction than in the case of a small conduit with a radius of curvature of 0.629 mm. The trapezoid solution thus makes it more acceptable to use softer water, provided that the fixed curvature of the small conduit ("ABCD" in fig. 39) is made more slippery by using a suitable chemical compound for the GC.

How to get the advantages of the conduit (detail 38a) for a cross-section of 0.629 mm

With the 0.629 mm cross-section and minimum passage "EF" obtained by inserting the GC (see fig. 20 C), a far smaller minimum cross-section can be had than that in fig. 38 A. The hot summer sun could increase the reduction, even immediately after installation, especially when the GC is fully inserted (see fig. 20 C) and even more so when the VDI is installed in a stiff tube with an optional universal hole. Greater future damage is also caused when even slightly "hard" irrigation water is used.

In such conditions, it makes sense to prevent the formation of the minimum passage ("EF" in fig. 39) in terms of expansion of the inner conduit walls ("IE"), preferring the use of passage "ElF", but without being able to benefit from the advantage offered by the constant height "EL" at base "BC" relating to cross-section A.

To produce expansion "IE1", you need to accept a low amount of static attrition in the a.p., though this can be compensated lower down (at 10 in fig. 37) using a tie-coupling (see fig. 41 C) or a spring clip to prevent the GC from moving if the water pressure rises too much.

Fig. 39 - how to reduce an excessive minimum cross-section (see fig. 38 A) in very elastic tubes

In such tubes, the inner conduit walls expand too much within the fixed curvature when the GC is inserted (see fig. 20 C).

After failing to get the nominal drip rate using a GC with the options listed in Table 5, you can try changing the conduit with the 0.629 one (detail 37a in fig. 38 A or detail 38a in fig. 39), still using the options in Table 5, plus an optional universal hole further reduced to 7.45 mm ( see page 31, line 61). When trying to find the best configuration of the VDI, the minimum passages need to be adjusted to suit the particle size of the impurities found in the irrigation water and its hardness. In this case, we recommend using test specimens (see point 68 on page 43) provided these have also been calculated to suit the exact composition of the IT used.

If the water pressure still isn't right to get the nominal drip rate, the clip (see fig. 41 A) can be used to adjust the minimum passages (fixed at roughly "EIF") by making up for a lack of static attrition in the a.p. at "10" in fig. 19. Equally, the excessive elasticity of the IT can be reduced by means of the tie-coupling (see fig. 41 C).

35 Conclusion of tests on the prototype

We were able to get optimal modulation of the drip rate with 16 facets in the GC, thanks also to the inclination of the planes of the convex facets (see prototype, fig. 37) at an angle of 0°26'51".41 with respect to the axis of the GC.

Lengthy irrigation trials were conducted using a VDI with a through-hole of 5.3 mm in diameter and length 9.8 mm, fitted with a GC with 8 facets having a trapezoid cross-section and depth "p" in fig. 37 A of 0.3 mm. It was possible to adjust the constant drip rate at less than 0.02 Bar to just 20 drips/min. or less.

When the pressure rose to more than 3 Bar, we selected and maintained the same drip rate by using the tie-coupling (see fig. 41 C) using just one cable.

**Table 5 Reference to claim**

**necessary variation to the profiles of the GC**

When the water pressure is unsuitable for the VDI, it becomes impossible to guarantee the constant minimum delivery rate. In this case, the GC can be replaced to get a smaller "minimum cross-section" than that possible when the previous GC was fully inserted in the tube. You need to assess whether the minimum cross-section produced by the concave facet of the type shown in fig. 18 B or the curved type (see fig. 17 B) has been reduced to the nominal level required.

The required drip rate can be obtained by trial and error, by switching from one GC to another that offers a smaller minimum cross-section, such as by switching from the GC shown in fig. 37 A (0 38a) to the prototype (see fig. 38) with depth "p" in fig. 18 C reduced to 0.25 mm, etc.

The basic structure of the VDI isn't changed, with the addition of more concave facets, but its efficiency is improved as the variable area (see fig. 18 C) disappears, while the fixed area (see fig. 17 C and 18 C) is reduced to get the nominal "minimum cross-section" or that required to get the steady minimum drip rate needed.

**Table 6 a different drawing of the small conduit**

Compared to Table 5, a different form of concave facet does not affect the originality of the invention provided the mechanical and hydraulic aspects are respected.

It's therefore worthwhile creating other profiles for the concave facets in addition to those described above. Half-moon profiles with variable radii of curvature, for instance.

**Table 7 Reference to claim**

**accessories 41a, 41c, 41c1 and 41d**

The cross-section of the half-moon that has been unable to control the delivery rate can be altered, using different concave facets with a greater radius of curvature, when you find that the sample GC (see fig. 38, detail 38a, radius of curvature 0.629, etc.) is ineffective. Alternatively, an accessory (see fig. 41 A) fitted in "10" in fig. 19 lets you apply the tie-coupling (see fig. 41 C).

The spring clip (see fig. 41 A) can be used when you find that the use of several GC's fails to obtain the required drip rates, even when these GC's have been fitted with the options listed in Table 5, or when these start slipping during tests as a result of unsuitable water pressures for the given configuration of the VDI.

In such a case, you can use the constriction of the tie-coupling (see fig. 41 C) on the spring clamp (see fig. 41 A), solution 1) on page 26. This lets you get the minimum drip rates and the stability needed at "10" (see fig. 19) when several GC's are used.

The spring clip used in solutions 2) and 3) on page 27 may have the same effect as the precise action of tie-coupling "41c" + clip "41a" in brief stretches of tube.

**36 fine sprinkling in a small irrigation system**

A raised structure can used in small plots of land or in small greenhouses. Consisting of capillary tubes with an outside diameter of 8 or more mm and about 100 mini VDI' per square metre grouped together as shown in fig. 15, used to intensify the irrigation of the crop.

A complex irrigation system can be created using other inventions making up the System, comprising parallel tubes about three metres off the ground and about 4-5 metres or more apart. Each of these tubes has several T-unions ("E1" in Table 7) which are fitted with the capillary tubes (see fig. 21 B) at intervals of about 10 cm and held in position in the "E1" by hose clamps (see fig. 41 D).

In windy environments, very light capillary tubes could pass through semi-rigid "sails" to vary the drip points.

A very fine net needs to be stretched below such a complex irrigation system at the right height from the ground to get suitably fine sprinkling from the droplets created by the VDI's.

If the speed of the wind is not constant, the capillaries can be pulled to-and-fro by means of a single cable connected to each of these and driven by an electrically powered device. This device draws power from cadmium lead batteries recharged by a small wind/photovoltaic system. This supplies the total energy needed to irrigate the crop using the invention (see points 83 a) and b) on page 57), including daily heating of the water to create more acclimatised irrigation.

Such a complex system can create the fine sprinkling needed to reduce water wastage in small plots, using the alternating droplet irrigation system described on page 115.

**37 comments on the most common configurations of the VDI**

configuration of the VDI using an IT of medium elasticity, 2.5 mm thick, 135% ultimate elongation, fitted with a cylindrical universal hole.

- **comparison with other possible configurations** Using a tube with medium elasticity, 2.5 mm thick, 135% ultimate elongation (see point 61 on
- see page 37), with the GC inserted (see fig. 20 A), you can already find a minimal expansion in the universal hole at "12" in fig. 20 A and the consequent definition between the a.p. and AR leading to the formation of a unified conduit at "12" with minimum length l.r., being the extension of the unified conduit "11".

  * With a very tapered universal hole (l.r.), this becomes 1.p. to create, in this case, early formation of the unified conduit "13".

  * In very elastic tubes (see page 37) fitted with tapered universal holes and with the GC inserted (see fig. 20 A), small conduits with a suitable cross-section can be obtained to get good efficiency of the VDI. This configuration allows for an already abundant delivery rate just beyond the 2nd water pressure range in Table 4.

The prototype (see fig. 37), using the elasticity of plug "a" as shown in fig. 40 D, continues to work in the same very elastic IT's at the same nominal pressure rates, even if placed in a very countersunk universal hole produced in the field using the tools 3C and 3B.

  * Using an IT of any degree of elasticity considered in point 61 on page 37, the inserted GC (see fig. 20 A) of the prototype (see fig. 37) produces enough passive resistance to prevent the GC from being ejected at pressure rates of up to 0.7 Bar or thereabouts.
  * If you use a stiff IT and a cylindrical IT, the two contingent areas (a.p. and AR) become almost completely just a.p. once the GC "20 A" has been inserted (see page 49 - reasons for a reduction - ).
  * when the VDI is installed in a mesh tube with medium/high elasticity about 1 mm thick and with a universal hole ground using the countersink tool "B2" in fig. 38, this becomes even more efficient when the GC "20A" is inserted.

With the GC apparently unstable, during tests we got enough static attrition in the a.p. to prevent the GC from slipping outside the VDI until just over 0.7 Bar.

When the GC presses against the a.p. (see fig. 20 B) in an IT of medium elasticity with 135% ultimate elongation, the inner conduit walls just touch the fixed area (see fig. 18 C and page 49).

  * If a stiff tube is used instead, and the GC is inserted to the same degree, the result would be significant curvature within the fixed area (see fig. 18 C and fig. 17 C), just less than IE1 (see fig. 39).

38 Notes on fig. 20 **comparative diagrams**

of a VDI in an IT of medium elasticity and 150% ultimate elongation (see page 37 fitted with a cylindrical universal hole.

Fig. 20 A

Fig. 20 A2 shows the curvature "2" (broken line) of the through-hole created at c-c1 on insertion of the GC (20 A). Compared to the curvature "1" at d-d1, curvature "2" is only a little distance from the flat facets of the GC in the prototype (see fig. 37), though still producing a unified conduit measuring l.r. in length as an extension of 11 in 12 via the contingent lines AR/a.p.

The small trapezoid conduit (C1 in fig. 20 A2) is topped by the circular segment "x" within the curvature at "1" (see fig. 18 C), where the arc of the circle E-F is the same as the upper profile of the small compressing conduit, i.e. the inner conduit wall.

With modest water pressure levels, such as those at the end of an irrigation system on a flat plain, the best delivery rate can be obtained by using the GC with optional facets (e.g., 37 A = 38a or 37 B = 38) at the sides of each small trapezoid conduit, in order to add the additional cross-section "S1" see fig. 20 A2) that determines a (minimum) increase in the delivery rate required.

Thanks to these flat facets, it's easier to get suitable drip rates for the crops using the prototype (see fig. 37) even when the water pressure falls below 0.02 Bar.

Until now we've considered the insertion (see fig. 20 A) of the GC, but if we extract this to the point that it's held in position by just the teeth D1-D2 catching against the inner ring (see fig. 36), the result will be a far greater delivery rate, while still avoiding the ejection of the GC.

With this unusual configuration of the VDI, the maximum delivery rate is guaranteed for the relevant water pressures in the IT, but this cannot be maintained in a series of VDI's, unless you adopt the sequence of flow transfers described in point 66 1a) (plain organisation) on page 148.

Fig. 20 B

The GC is inserted here to the point that the a.p. is in the centre of the faceted area (14 in fig. 19), with the inner conduit compressed in the a.p. by the flat facets of the GC, already improving the delivery rate of the invention on a slight slope.

Using an IT of medium elasticity and 150% ultimate elongation in fig. 20 B, the a.p. or the l.p. shown in fig. 20 A are almost extended completely (12). The external arrow in fig. 20 B1 shows the curvature of the inner conduit wall at c-c1, again using a schematic diagram, not representing the actual curvature of fig. 39 or the prototype in fig. 37, but showing the actual deformation of the inner conduit wall.

The internal arrows show the inner conduit walls that coincide with the 8 sides of a regular polygon at d-d1, where the 8 facets (here flat) would compress the soft surfaces of the inner conduit walls in the a.p. at a slightly higher rate (as happens in the prototype in fig. 37) than at c-c1. Fig. 20 B2 shows how the small conduit "C2" takes on a precise trapezoid cross-section, though this depends on the reducing factors listed on page49, while the inner conduit wall at d-d1 coincides with the longest side of the trapezoid (see chord EF in fig. 18 C).

The arc drawn with a broken line shows the position of the inner conduit wall at c-c1, that in the prototype (see fig. 37) is extremely compressed by the flat facet, bearing in mind the level of insertion of the GC in an elastic IT of 150% ultimate elongation, this being still possible despite the expansion in the universal hole.

Fig. 20 C

The faceted or grooved area of the GC is inserted almost completely (14) or close to the cancellation (16 in fig. 19), i.e. close to the limit of maximum reduction in the drip rate. The GC compresses the inner conduit walls at the maximum rate here due to its greater volume in a.p. With this degree of insertion, if true to the diagram (see fig. 20 A), the smooth shaft (see fig. 17 A) would be completely sealed if not for the use of GC option 7 (see page 38) with prototype 1 (see fig. 37).

The inner conduit wall compressed between the angles of each concave facet in the GC is pressed back to create a "good curvature" at C3 (see fig. 20 C2) , corresponding in any case to the factors mentioned on page 49.

An IT of medium elasticity only allows for good curvature in the inner conduit wall within C3 when the GC is fully inserted.

When the GC is inserted (see fig. 20 C), the further compression of the inner conduit wall from c-c1 to d-d1 creates 8 small conduits measuring 12 in length and an almost non-existent "cross-section" (see prototype in fig. 37 - this becomes maximum beyond the insertion shown in fig. 20 C) and almost constant from c-c1 to d-dl.

**39 sample» plugs "a "**

cf.: plug "a" in fig. 40 D on page 4 line 30 onwards)

When a VDI is fitted in a very elastic tube, you may find that the inner conduit wall doesn't expand within detail C3 (see fig. 20 C2 = AED in ABCD in fig. 39) or only expands to a minimal and inadequate degree in order to perform its intended function considering the excessive expansion in the universal hole when the GC is fully inserted.

The convex facets of the GC in this case cannot compress the hollow shaft of the plug "a" (inner conduit wall) in order to provoke the required expansion needed to get the correct size of small conduit (C3).

OTo improve the efficiency of the VDI in producing a minimum drip rate in such a situation, the particular characteristics of PVC need to be obtained during processing by inserting a soft elastic polymer capable of absorbing the impact stress and the energy introduced and to lower the stiffness to a more precise level.

Depending on the quantity of soft polymer inserted in the plug "a" compound, you can greatly improve the performance of the VDI's to get the minimum drip rates required and not possible with a plug "a" made from a different compound.

The prototype in fig. 40 D (see page 4 line 30) is suitable for use with IT's of varying compositions, including highly elastic tubes (see page 37), until the nominal drip rate can be achieved using a more elastic IT than necessary without having to use the options in Table 5.

The use of several plugs "a" means being able to lower the cost of the VDI installations in some cases, also in the case of long IT's.

(In fact, you can insert some additives to the compound for these plugs "a" altering the index of refraction of the shock-proofing component to meet that of PVC in order to get suitable crystalline transparency. The advantage here is that it lets you detect any scaling immediately, consisting of a light and easily recognisable initial opacity.)

## 40 performance tests on VDI's subjected to the summer sun in order to give them the right plug "a"

In the prototype (see fig. 37) consisting of an elastic PVC plug "a" (see fig. 40 D) in a stiff IT with a universal hole of 7.8 mm in diameter, held at a temperature of about 45°C, it was only necessary to apply a reduced level of thrust to make the GC shift between the critical insertion points of 20 B and 20 A during the critical stage of softening of the plug "a".

This temperature is the maximum that the IT can be expected to reach after exposure to the summer sun in most regions of Italy when irrigation takes place (though sometimes this is not advisable) and where a sudden rise in the water pressure about 1 Bar could lead to the GC being expelled from a IT of medium elasticity (see page 37). The GC should thus be held in place using option 5 or 5a in Table 5, or, if really necessary, relying on the teeth D1 and D2 (see fig. 19) and using a clamp (see fig. 41 A) to keep the whole thing stable.

The universal hole expands too much in the case of IT's of medium to high elasticity exposed to the summer sun for long periods, thus causing a fall in the static attrition in a.p. To get around this, you can use a universal hole of a different, experimental size, or the more adapt GC options. However, a stronger and more expensive clamp (see fig. 41 A) may often have to be used. The options in Table 5 can be used to strengthen the VDI and so restore its efficiency when this has been weakened in the hottest climates as a result of the softening of the IT. However, at times, these countermeasures are not enough.

To eliminate the risk of further problems due to low static attrition in a.p., further reduced as a result of the higher summer temperatures in which the invention is expected to work, you can more simply resort to the use of a silicon rubber plug "a". This solution makes the VDI efficient even under the hottest sun found in the Sahara desert, in the regions between the USA and Mexico, in mid-west Australia etc. The tests described on page 36 are also needed to determine the right configuration in such a case.

By using a silicone rubber plug "a" with roughly 60 Sh A hardness and 350% ultimate elongation in a medium elastic IT with 100% ultimate elongation, you can get almost stable static attrition in a.p. at temperatures above 50°C, and throughout the simplified configuration of the VDI at above 1 Bar.

In the case of installations on sloping ground, the high water pressure and strong summer sun recommend the use of a VDI with a silicon rubber plug "a" to avoid any possible negative effects on the previously reliable delivery rates.

## 41 How to organise an irrigation system with IT's of different compositions and plugs "a" by means of a preliminary study of the "specific minimum cross-section" required.

Before constructing an irrigation system, you must consider the aim of the System, including the reuse of any tubes already available or already installed (see Table 3, on page 31,line 51) and the possible problems if these are used at 2-2.5 bar.

If you decide to use tubes already available, but made from different compounds, you must first consider which conversion criteria apply in order to organise the new system. We recommend starting by testing the tubes made from the same compound fitted with functional VDI's (i.e., each fitted with the right plug "a" for the climate, even if there is a slight variation in elasticity) in order to discover with which type of VDI in its simplest configuration you can get the smallest drip rate or the required "specific minimum cross-section".

Having found the best combination of IT of the given elasticity and composition and the plug "a", you need to separate these tubes and then repeat the tests to decide on the exact type of plug "a" of tested elasticity and compound.

## 42 Recycled tubes

Another important aim of the System is to reduce the overall system costs through the use of IT's made from plastic of various densities that may become more cost-effective if made from a extensive, planned recycling of plastic materials. Equally, garden hoses made from various compounds may also be used, and even industrial hoses.
To use these, individual tests must be carried out (see page 36) in order to find the optimum configurations of the VDI as the configurations described in the Configuration Table on page 161 are not necessarily possible as these apply to the types of tube most commonly found on the market.

## 43 mini-VDI's

To save on the cost of tubes, mini-VDI's may also be used. Smaller than the VDI shown in fig. 37, these need to be designed in line with the 8 constraints (see page 12) to get the performance described on page 76.
These mini-VDI's should be used in small diameter, and thus cheaper, tubes fitted with a smaller size of GC than that for the VDI shown in fig. 37. Detail "e" in fig. 19 should be reduced to the minimum (GC option 4 in Table 5).
Using a GC with a reduced faceted cross-section (14 in fig. 19), you can easily and accurately raise the delivery rate of the VDI by increasing the water pressure.
In order to guarantee the advantages listed on page 40 with this version of the invention, you should produce it in its "100% stabilised" form.

## 44 checking of the GC with critical water pressure levels ("1.f." in fig. 19) and its conversion

Distance l.f. represents the length of any smooth shaft that has the role of keeping several VDI's 100% sealed, also to suspend irrigation in a given stretch of the system.
This distance l.f. normally exceeds the initial reduction in diameter of the through-hole in the VDI caused by the walls of the universal hole (with curvature between c-c1, see fig. 19).

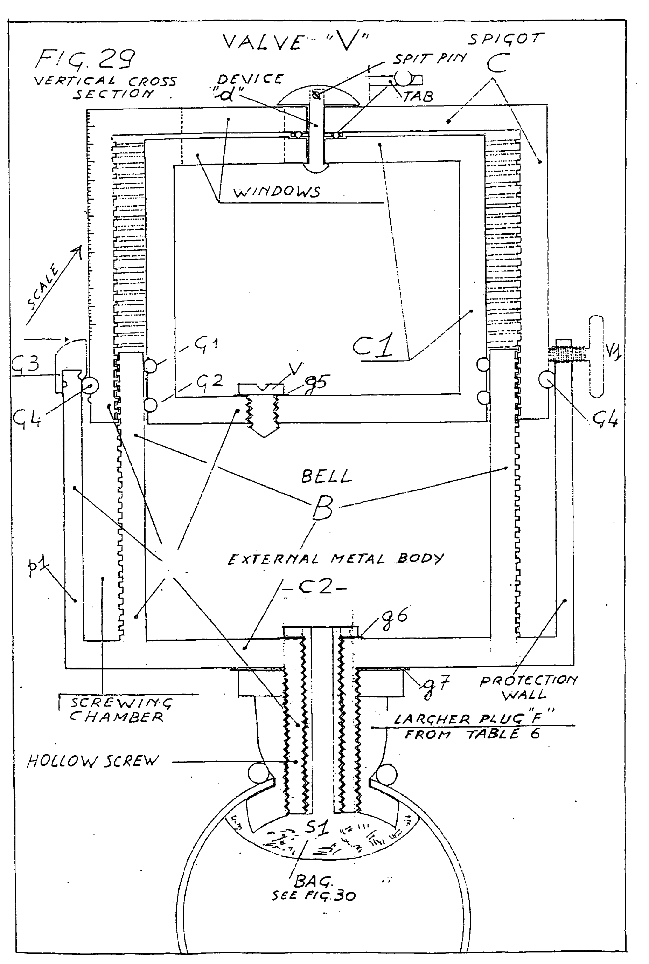

a)To hold the GC more securely in position in the presence of high water pressure, certain accessories can be used at x-x1 of 10 in 13 in fig. 19.
However, these should be used as little as possible, preferring the use of simple and often sufficient static attrition in a.p. where possible, and which can be increased by closing the hole with l.f.
With a seal formed by l.f. in an a.p., even if of length l.p. less than 12 (see fig. 19), the ejection of the GC can be avoided on steep slopes at over 3 Bar thanks to the triple action of the passive resistance in touching areas (l.f. + convex facets in a.p. + a clamp 41a at 10).
Alternatively ,you can use the l.f. and convex facing and either a stiff IT or one of minimum elasticity, or even an IT with an optional universal hole.
b; by suspending and activating the delivery rate of many VDI's using the valve "V" in fig. 29 and 32, you can do away with the need to use the smooth shaft l.f., using a longer faceted cross-section (14 in fig. 19). If made in the prototype GC shown in fig. 42, this longer cross-section could lead to a further (but minimal) reduction in the minimum cross-section when compared to that possible with l.f1.

## 45 choice of IT thickness

Prototype n° 1 in fig. 37 (see page 54) can be used in resin or metal tubes. Plug "a" with l.d.p. longer than 9.8 mm can be used in IT's from 1 to 2.4 mm thick.
The stretches of conduit (see fig. 19) for prototype n° 1 in fig. 37 thus become:

li - unified, this becomes 2.85 mm when used in an IT with an inside diameter of 21.6 mm, 2.4 mm thick, as in fig. 37.
12 - if used in an IT some 3.5 mm thick, the curvature (c1 in fig. 19) of the tube 2.4 mm thick moves to 13, thus expanding the a.p. dictated by curvature c2.
13 - with a tube some 3.5 mm thick, this unified conduit is reduced in the prototype (see fig. 37) to about 3.45 mm, but could lengthen if there is a countersunk universal hole.

If thicker tubes are used with the prototype in fig. 37, the reduction in the small conduit (C3 in fig. 20 c2) lessens as a result, since the GC can move further along d-d1 (see fig. 20 A) within the faceted area 14 (see fig. 19) and so compress the inner conduit walls to a greater extent until you get a higher level of expansion at EF in fig. 20 C2, until the cancellation point is reached at 16.

This is an important technical solution as it allows for maximum reduction of the cross-section of the small conduits, especially useful on slopes, with the simple use of thicker IT's.

If you use an IT measuring 3.5 mm thick, the prototype in fig. 37 can still be used with the clamp (see fig. 41 A) to guarantee maximum stability of the VDI, but a sufficiently long stretch is needed (13 in fig. 19) to hold this, as is often the case with plug "a" with option 6 (see Table 5), suitable for prototype n° 2 in fig. 44.

**46 GC options 1 and 2 (Table 5) to get the right VDI configuration**

GC option n° 1 produces early formation of the minimum cross-section (C3 in fig. 20 C2) in very elastic, small diameter tubes. This is the result of a minimum increase in angle β beyond 26'51".41 in the GC (see fig. 42 and 37). The GC can also be fitted with option n° 2 (see fig. 43) to improve the configuration further by making this cylindrical with diameter D = 5.13 mm at the end.

When used with plug "a" n° 1 (see fig. 44) the GC shown in fig. 43 produces a greater volume in a.p. than that shown in fig. 37 (see also fig. 42) when fully inserted. However, in other cases it may be better to opt for a different valid organisation using several of the options listed in Table 5 or even by adding option n° 3 (see page 38), which lets you get a far smaller minimum cross-section in a.p. with excessively elastic tubes. Once again this shows how it's possible to adapt the VDI to meet new circumstances by simply replacing its basic components (see fig. 37) with the options. Standard tests should always be carried out beforehand (see page 36) in the field or in the laboratory in order to improve the performance of the VDI substantially.

**47 specialisation, pros and cons of the GC's**

The only VDI capable of withstanding high water pressure rates is that fitted in a metal or stiff resin tube (see pages 37). This is the aspect of the basic structure of the VDI that makes it suitable for use with high water pressure (see Table 4), as this often makes it impossible to obtain the minimum drip rates required, especially if IT's are used that are only just slightly more elastic than necessary.

Conversely, if you use VDI n° 1 (for use with pressure values 1 and 2 in Table 4 and medium/highly elastic tubes) in a stiff tube with the GC inserted (see fig. 20 C), the inner conduit walls expand to get an r.c. beyond 0.761 with the result that the delivery rate is reduced even further, also at the top of the 4th range of water pressure values (see).

In this case, the small conduit with a trapezoid cross-section (see fig. 38 A) can replace that shown in fig. 38 (half-moon, with r.c. 0.59 mm). However, the system is aimed at stabilising the minimum drip rates more than anything else via the use of concave facets capable of simplifying the selection process by creating a system of reduced and articulated delivery rates.

Accessories need not be used in stiff or slightly elastic tubes at up to 3 Bar, especially by eliminating the use of the costly tie-coupling (see fig. 41 C), as the system depends on the use of a small-diameter universal hole, such as that in Table 2, making it possible to simplify the composition of the various configurations of the VDI as much as possible.

**48 teeth D1 - D2, preventing the ejection of the GC - bland calibration**

The teeth should be positioned at the distance "t" required to prevent the GC from moving past the insertion point 17/1 (see page XXX) attributed to the VDI configuration for the specific water pressure value shown in Table 4. Distance "t" should be increased as the water pressure values increase, bearing in mind the greater risk of the GC slipping, so that the teeth come up against the edge of the inner ring (see fig. 36) as quickly as possible. This will avoid excessive waste of water in the event of a sudden rise in the pressure within the tubes, which may cause the GC to be ejected.

Depending on the extraction length of the GC (16 in fig. 19), you can determine whether the GC should be fitted with option 5 (see Table 5), i.e., with the teeth D1-D2 at 14 in fig. 19 (bland calibration). These teeth may also need a lip ("s" in fig. 19 - D2) with an arrow profile to let them slot in the a.p. without having to push them too much with your fingers.

You will need to apply more pressure when using an optional universal hole (see page 84, point 4), especially if combined with a stiff tube, but the pressure required shouldn't be too much, especially when you have to set a whole series of VDI's.

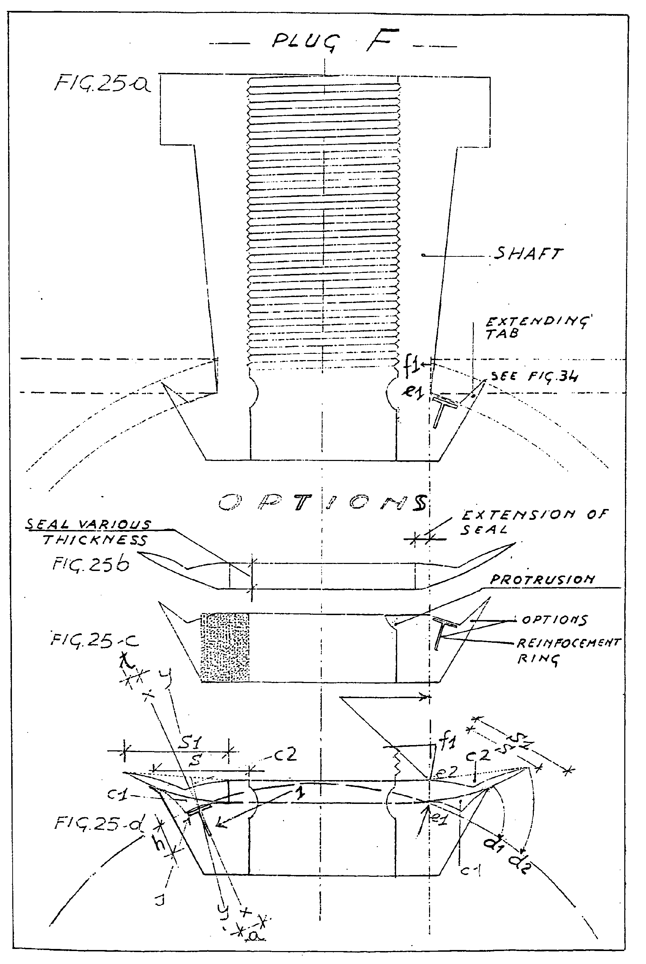

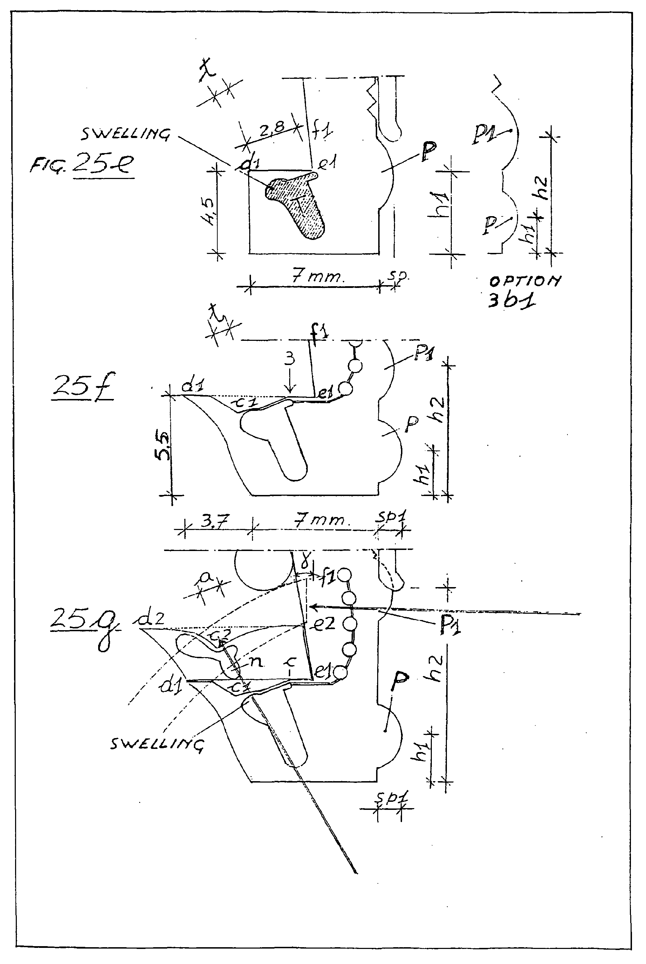

To set the bland configuration (t.b.) at "t" between close water pressure values, you also need to determine the useful thickness of the seals (see fig. 25 "g" - prototype) for each VDI in order to adjust the position of the teeth at 14 in fig. 19 accordingly.

**49 differentiated calibration of the GC's**

Distance "t" increases for the teeth (see fig. 19) as the water pressure rises, to the point that the cross-section of the small conduits needs to be reduced in order to get the required delivery rate in view of the water pressure accurately measured at each VDI.

Distance "t" should be established by trial and error, using the tests on page 36 , to get "differentiated" calibration that needs to be repeated at each VDI within the same stretch of equal configuration or where the pressure is found to change very little within a certain stretch of tube.

Distance "t" (see fig. 19) with differentiated calibration (t.d.) is suitable in the case of water pressure values where many VDI's have been installed, as happens with irrigation systems on a plain comprising identical IT's.

The VDI's in this case need to be set in exactly the same way to lower/raise the delivery rates using an alternative droplet irrigator (see point 68 on page 43) via the reduction or increase in water pressure.

In a different configuration, when the system is installed on a slope, for instance (see page 46), each GC is given a consecutive number in order to make it easier for the operator to place it in the corresponding plug "a" (also numbered). The seals of varying thickness (see fig. 25 G) are also numbered, as is the universal hole.

The GC needs to be inserted in the plug "a" in both the installation types mentioned above, making sure that the a.p. and inner ring (see fig. 36) go past its teeth D1 and D2. Then, you need to pull the GC firmly so it stops against the inner ring and thus automatically delivers the required drip rate. Teeth D1-D2 in fig. 19 depend on a precise profile "s" that securely stops against the respective check (see fig. 36), also possible in the presence of projection "p" (see fig. 19), i.e., to the exact point where the VDI is fitted as required.

**50 checks required before installing the VDI's to keep them efficient over time**

To establish the correct installation of a VDI, you need to calculate a very small "minimum cross-section" to suit the exact content of calcium salts dissolved in the irrigation water to avoid the risk of obstructions, as well as allowing for the best disposal of any impurities (see Table 1). To do this, the options listed in Table 5 should be used, as established during the tests on page 36, especially if using a universal hole with a particularly small diameter in a stiff or only slightly elastic tube.

In addition to the individual tests, you can also use the technical specimen tests (see line 14 on page 45) used to attribute a suitably tested configuration for the VDI.

**Table 1**

**main variants in the configuration of the VDI**

(N.B.: the configurations proposed here should not be considered as being the best possible in terms of the mechanical hydraulics of the System or offering top efficiency at the water pressure rates shown, as it hasn't been possible to "fine-tune" the various components of the trial configurations using the corrective accessories in Table 5, or the clamps bearing in mind their precise force of constriction (see page 96), or even the precise tie-couplings: just the basic structure of the invention (see fig. 37) has been tested to such a point that it can be attributed an acceptable method of use including a careful combination of the VDI configuration.)

Below are the main variants to be used with the prototype (see fig. 37) or that can be found in the table of settings (see page 161) for irrigation with differing water pressure values, bearing in mind the size of the impurities in the irrigation water and the hardness of the water.

Here we shall look at the use of an IT with minimum elasticity and 60% ultimate elongation

**including:**

a VDI fitted with clamps (see fig. 41 A) + tie-coupling (see fig. 41 C) (indicated as *)

and a universal hole with a diameter of 7.8 mm

evaluation of the minimum passages required in the VDI:

The use of a "minimally elastic" tube with 60% ultimate elongation, corresponds to a smaller expansion in the inner wall of the small conduit (see fig. 38 A) when the GC (see fig, 20 C) is inserted compared to the curvature of 0.761 mm in fig. 39, especially due to the use of a universal hole of 7.8 mm compared to 7.7 mm in fig. 39.

| C | w | a | i | |
|---|---|---|---|---|
| L | a | d | n | |
| A | t | m | v | <u>fine</u> diameter (dm) > 0,11 mm. |

(continued)

| | | | | |
|---|---|---|---|---|
| S | e | l | e | GC insertion mote than 20C |
| S | r | s | n | medium dm. C. 0,20 cm. |
| I | | s | t | GC inserion a little more than 20B + 20/2 |
| F | p | i | i | large dm. > max 0,3 mm. |
| I | a | b | o | GC insertion just below that ib fig. 20A |
| C | r | l | n | |
| A | t | e | | |
| T | i | | | |
| I | c | w | | |
| O | l | h | | |
| N | e | i | | |
| | | t | | |
| | s | h | | |
| | i | | | |
| | z | | | |
| | e | | | |

for impurity particle size of diameter = 0 more than 0.3 mm, see Table 10 on page 42)

| | |
|---|---|
| 1) very low to medium water pressure (0,02 - 07 Bar) whit hard water containing dissolved calcium salts of more than lg/l and impurities whit a diameter less than diameter 0.03 mm. | the trapezoid conduit is used (see fig. 39 and 38A) and VDI whit an antiscaling additive |
| | sole use of the clamp (see fig. 41A) |
| 2) high water pressure (0.7 - 2 Bar, see Table 4) with water containing dissolved calcium salts of just over g/l and impurities with a diameter less than 0.11 mm. | The trapezoid conduit is used (see fig. 38 = fig. 37B) and VDI whit extra slipperiness spring clip + tie- coupling under 2 Bar whit inferior estension "IE" In fig. 39 obtained in the inner conduit wall (i.e., less that of the 0,761 mm. GC similar to fig. 20C. The result is a munimum" passage (pl in fig. |
| | 18c )more than 0,11 mm. high (EL fig. 39), despite he use of a conduit (see fig. 38) with dept "p " (see fig. 18C) of 0,25 mm. |
| (See point 32 on page 16 if using a GC instead of that in fig. 38 or 37 B.) | with 0.59 mm r.c. at 0.7 -2 Bar |
| 3) very high water pressure (2 - 3.5 Bar) with rainwater, melted snows or | the half - moon conduit with 0,59 mm. r.c. and normal slipperiness is used stronger spring clip under 3 Bar whit tie-coupling (see fig. 41C) whit a single tie (see pag. 102) above 3 Bar. |

**51 spring clip**

The first version of the clip allows for a reduction in the conduit at 10 of 13 in fig. 19 for a cross-section corresponding to about that produced within the curvature "1" in d-d1 of fig. 20 A2.

This solution consists of a 1-2 mm ring and is ideal for ensuring the water-tightness of the VDI (see point c) on page 3), while at the same time preventing the GC from slipping due to the thrust of the water.

By summing the reduction in the "minimum cross-sections" due to the insertion of the GC ≥ that shown in fig. 20 C with that obtained with the spring clip (see fig. 41 A) on the 8 "reductions" at x-x in 10 in fig. 19, the delivery rate at 10 already established in the a.p. remains unchanged.

Here are a few alternative ways to reduce the delivery rate, starting with the "stronger" clip (option 2) that should be used when the 1st option is found to be ineffective in lowering the drip rate as required.

The 2nd solution - the "stronger" clip - has a ring measuring at least 2 mm in diameter and is used in the invention to prevent slippage of the GC at pressure rates of 1.5-3 Bar in IT's with 80-90% ultimate elongation and a universal hole with a diameter of 7.6 mm. This produces sufficient resistance at 10 (see fig. 19) preventing slippage of the GC, but at the measure determined by a precise setting of the VDI.

some possible solutions for setting the VDI

using just a very small universal hole (diameter = 7.65 mm) and clip option n° 3, you can stop the GC from slipping and fix the minimum delivery rates in tubes of medium elasticity with c. 75% ultimate elongation (see page 32) at pressure values of up to 2.6 Bar (minimum) and so avoid the need to use a tie-coupling (see fig. 41 C). If using a «sample» spring clip (option 1), however, the use of the tie-coupling (see fig. 41 C) may help in getting the required drip rates at over 2 Bar, which would otherwise be impossible even with a stronger clip.

If you want to avoid using the more expensive tie-coupling (see fig. 41 C), you can use the 3rd type of clip (see fig. 41 A). This consists of a larger steel ring with greatly improved mechanical strength and can be fitted on stretches of tube at up to 2.6 Bar before having to resort to the use of the tie-coupling in order to get the required drip rate. Very low drip rates of 60 droplets/min or less are not, however, possible.

Several spring clips with "at least" 3 degrees of strength are needed in such a case, to get the required delivery rate, as well as the precise insertion of the GC (found through testing) in the field at 16 (see fig. 19), as described at point 72 on page 51, line 38.

concerning the efficacy of the accessories

The reduction in the cross-section of the conduit at 10 thanks to the use of accessories (see fig. 41 D, 41 C and 41 C1) allows for quicker selection of the required drip rates based on a gradual and consistent reduction in the cross-section of the 8 "reductions" (see fig. 19) than is possible with the fixed configurations or the use of solutions 2 and 3 (see fig. 41 A).

comments on the extension of the hydraulic mechanics of the invention with regard to a reduction in the drip rates

If the tests listed on page 129 are not carried out, you can still get the right reduction in the cross-section of the 8 small conduits at a.p. needed to obtain the required delivery rate, even when the GC is inserted further than shown in fig. 20 C, by adjusting the 8 "reductions" at 10 (see fig. 19) to suit the appropriate configuration indicated in Tables 2-4.

Difficulties may be found in reducing the delivery rate at 10 in the case of very elastic tubes due to an expansion in the universal hole making it impossible to insert the GC at higher water pressure levels, also affecting the selection of the required drip rate at 10.

52 hose clamp

As an alternative to the spring clip + tie-coupling solution, you can use a hose clamp (see 41 D) that requires more labour to set the VDI in the IT than the solution in fig. 41 A, as described at point c) on page 3.

When you pull plug "a" towards you and push the spring clip shown in fig. 41 A against the IT until it clicks into position, this immediately grips the slightly tapered shaft of the plug "a" and the IT, thus obtaining an easy and secure result, with less effort than in the case of the hose clamp (see fig. 41 D).

In fact, the hose clamp requires the use of both hands: one needed to hold the shaft of the plug "a" steady while the other must push the ring against the IT before you can adjust the pressure with the key as required.

The hose clamp has the sole advantage of being securely installed once you've guaranteed the water-tightness of the VDI, acting as a convenient and cheap alternative to the tie-coupling + clip + tie. **53 tie-coupling for spring clips with a more substantial cut in the 8 "reductions"**

Fig. 41 C shows a tie-coupling used with the spring clips consisting of a body "1" topped by a key grip with a through-hole in the middle of this.

A double knot is made in a strong, thin nylon tie before threading this through the through-hole in the grip and then through the screwed bodies "1" and "2". It's then finally fixed to the end of the projection in the clip before being used to tighten the shaft of the plug "a" at point x-x shown in fig. 37 by tightening up the body "1".

Body "1" can become simply cylindrical (see fig. 41) and then topped with a washer with a tie running through its hole. A knot has been made in one end of the tie beforehand. When the body "1" is screwed up, the tie is tensioned making the washer adhere well to this.

The washer is simply a useful means to avoid extra expense in the production of the clamp (see fig. 41 C), as well as offering a better grip.

The component shown in fig. 41 c1 is only useful as a means of tightening in terms of lowering the costs of the plant in the case of a more expensive installation on a slope due to the continuous need to use tie-couplings. It should be remembered that the main aim of this System is to make the invention (see fig. 37) applicable on a broad scale, relying on the cheapness of its components.

A highly constraining spring clip (see fig. 41 A), such as solution 2 or 3, shouldn't be used with a tie-coupling (see fig. 41 C or 41 c1) as there would thus be less room for adjustment of the drip rate (often necessary).

**54 combined action of the spring clip + double tie and the tie-coupling + single tie**

The reduction in the cross-section of the 8 "reductions" (see fig. 19) obtained with the spring clip + double tie offers a better level of constraint than that obtained with a simple tie-coupling + spring clip (see fig. 41 A). The reason for this is that it lets one get a greater reduction in the cross-section of each "reduction".

Thanks to the tension applied by the tie-coupling on the tie, a high level of pressure is applied on the shaft of the plug "a" as a result of the greater unit load and the thinness of the tie which enters the soft inner conduit wall evenly, thus producing an overall reduction in the cross-section at 10 of the 8 "reductions".

When using pure water (rainfall) and the tie-coupling in fig. 41 C plus a single tie, you can even reduce the cross-section of the 8 "reductions" at 10 too much, as simple and effective filtering of such a type of water may do away with the need to evaluate the actual suitability of repeated "minimum cross-sections".

**55 applications of the tie-coupling + single tie**

Assuming we use irrigation water from a rainfall tank at a working pressure of more than 3.5 Bar, the "spring-clip + tie-coupling + tie" can be replaced by the use of the "tie-coupling + single tie" wound twice around the shaft of the plug "a" to get the maximum reduction in the cross-section of the 8 "reductions". However, this system still requires the use of a tie to get the equivalent function ("c" on page 12) obtained with the spring clip shown in fig. 41 A. **56 reductions applied to the unified conduit in the prototype (10 in fig.**

**37) with increasing water pressure**

1 spring clip
2 spring clip + tie-coupling or hose clamp
3 spring clip + tie-coupling with double tie
4 tie-coupling with double tie

Another valid means as an alternative to the spring clip (solution 3 in fig. 41 A) with a further reduction in the cross-section of the 8 "reductions" at x-x at 10 is the use of GC option n° 3 (see page 38). **57 personalised organisation of an irrigation plant consisting of an IT with**

**constant composition (see Table 2)**

a) With a minimally elastic IT, Table 2 shows how the cost of the plant can be cut by avoiding the use of the accessories (41 C, 41 C1 and 41 D) in several identical stretches (see page 45). To this end, smaller or optional universal holes are used (7.7, 7.65, 7.6 or 7.55 mm) and a very tight spring clip (see fig. 41 A) in order to cut the delivery rate as required with the addition of shims (see point 74 on page 52).

b) The accessories (see fig. 41 C) shown as "other" are those that have proved necessary in order to get the minimum drip rates required in VDI's that rely on universal holes measuring 7.7 mm or 7.8 mm in diameter, such as those found in existing tubes with composition as described in point a) on page 28 and where the VDI has proved ineffective during the tests (see page 49).

These accessories become fundamental tools to counteract the effect of the pressure of the fluid on the drip rate in basic configurations of the VDI (GC + plug "a"), while improving this in other cases.

**Table 2**              (see  page 25, lines 16-24)

```
water pressures on slopes with the fluid flowing in a tube with minimum
elasticity
pressure       s              t c    t
values and     p              I o    i
universal      r              e u    e
conduit        i c              p
type           n l              l              hole
               g I              i
                 p              n            diameter
                                g
                                             (mm.)


         (s.c.)----------(tc.)--(t.)
              |
              |
           + strongar
           constraint

     _____


0.02 - 0.3      yes ------------no-------------------- 7.8
Bar
trapezoid
fig. 39


0.3 - 0.7 Bar  yes ------------no-------------------7,8
trapezoid
fig. 38


0.7 - 2 Bar        yes------------no------------| 7,8  |---7,7
trapezoid           c                           | s.c. |
fig. 38                                         |over  |    b.c.
                                                |1 Bar |
                                                | t.c. |
                                                 other*


2 - 3.5 Bar                                     | 7.7  |---7.65
trapezoid                                       | s.c. |    d.c.
fig. 38                                         | t.c. |
                   yes ------------no-----------|      |
                                                 other*

            solution
               3

3.5 - 4 Bar     yes -----------yes-------yes |  7.7 |---7.6
half-moon                                    | t.c |    **
0.59 r.c.                                    | t   |    d.c.
                                             |     |
                                              other*


just over 4 Bar------------- yes------yes -------------7.55
half-moon                                             d.c.
0.59 r.c.                                             * *

or
0.629 r.c.
```

```
if                        yes-----yes------------ 7.6
plug "a" is less                                  d.c.
elastic than that
in fig. 40 D
key to symbols: *              costant use  of the tie-coupling

smaller universal hole **        less use of GC options (see Table 5) partly
due to use of the tie-coupling + tie

I()I other configuration or that based on basic universal holes with a
diameter of 7.8 or 7.7 mm already produced in IT on stock and that require the
use of the tie-coupling

b.c. (bland calibration) in very short ranges of water pressure
d.c. (differentiated calibration)

Notes to Table 2
the role of the small trapezoid conduit (see fig. 38) with reduced depth "p"
of 0.25 mm is important with pressure values up to 3.5 Bar. This lets you set
the minimum drip rates with great ease, depending mostly on the clever use of
an IT of minimum elasticity with 60% ultimate elongation.
Compared to fig. 39, using the conduit shown in fig. 38 A with depth "p" of
0.3 mm in a VDI placed in a universal hole with a diameter of 7.7 mm in a
stiff tube, when the solution shown in fig. 38 is used with the GC inserted
beyond the point shown in fig. 20 C (universal hole 7.65 mm), you get
expansion in the inner conduit wall equal to that with curvature 0.761 mm. The
result is a cross-section of less than A and so the required drip rates can be
obtained even at 3.5 Bar (see  page 14 ,lines 51-54 and point 70 49 for
details of reduced  drip rates).
The increasingly stronger spring clips (solutions 2 and 3) with their larger
diameter rings help keep the required drip rates in VDI's in identical
stretches at up to 3.5 Bar (see page 45).
From 3.5 to 4 Bar, you need to use a smaller universal hole (diameter = 7.6
mm) and a tie-coupling with a single tie wound twice around the shaft to get
the required drip rates without too much difficulty (see page 49). In other
words, using factor 3: a thicker elastic inner conduit wall in a plug "a".
```

**Table R**

**Here are a few examples of the reversibility of the VDI configurations**

Table 2, water pressure range 0.7 - 2 Bar, VDI configurations possible:

1) 7.8 mm universal hole + f + td in a tube of minimum elasticity with 60% ultimate elongation
If the 7.8 mm universal holes in tubes held on stock are too big in several identical stretches (see page 45) when it comes to constructing the irrigation system, simply use another GC (option 2 or 3 in table 5) and then use a stronger clip (solution 2) or a tie-coupling + clip (see fig. 41 A) at about 1 Bar.
2) different configuration (not considered in Table 2), allowing for a delivery rate of less than 60 droplets/minute
Here a 7.7 mm universal hole should be made in an IT from stock of the same composition, thus removing the need to use a tie-coupling to get the required drip rate until 0.9 Bar, provided a stronger spring clip (solution 2 or 3) is used. From 0.9 - 2 Bar, you can use the spring clip shown in fig. 41 A plus the tie-coupling in fig. 41 C.
Up to 0.9 Bar, the maximum insertion of the GC and the spring clips mentioned above avoid the need to use the options listed in Table 5.
3) According to Table 2, the 7.6 mm universal holes in an IT tube with 60% ultimate elongation are suitable for use with water pressure of between 3.5 and 4 Bar where the VDI has a small half-moon conduit with 0.59 r.c., plus the use of a tie-coupling and single tie wound twice in order to get the required drip rate.
4) A future possible configuration of the VDI (see 3a in Table 4 and fig. 37) for the water pressure range 0.7-2 Bar can still be used in an IT with minimum elasticity and 60% ultimate elongation as in 3) above provided with a universal hole measuring just 7.6 mm in diameter.

However, the conduit shown in fig. 37 A can be used in the third water pressure range instead of the one with r.c. = 0.59 mm. The required drip rate can be obtained up to 1 Bar in this case as the VDI with the strengthened spring clip solution 2 (see fig. 41 A and page 26) works well up to this point.

After 1 Bar, however, the tie-coupling shown in fig. 41 C with a spring clip (see fig. 41 A, solution 1) is needed in order to maintain the required drip rate.

The GC options listed in Table 5 (see page 135) can come in useful in such situations. The level of insertion needs to be adapted to suit the new GC via tests (see page 36) or performed by expert plumbers (see page 45, line 14) . Plug "a" options listed in Table 5 (1, 2, 2a, 3a, 3b and 4) serve to ensure the water-tightness of the VDI in the event that this is affected or may be affected by strong summer sun. Option 6, on the other hand, adapts the VDI to the greater thickness of the IT's used. Moreover:

the seal shown in fig. 25 (option 2 on page 37) not only guarantees the water-tightness of the VDI at AR1 (see page 7), but also allows for extended insertion of the GC in the a.p. (together with other solutions) in order to get the required drip rate should this be difficult to achieve.

**Table 3**

(cf. lines 14-25 on page 91)

**economic organisation of a droplet irrigation system**

The organisation of a droplet irrigation system on a slop is shown here, mainly consisting of tubes obtained from existing stocks and fitted with VDI's in order to create a new low-cost system of irrigation.

The applicable ranges of water pressure (*) for the IT's are the same as in Table 4.

**0.02 - 0.3 Bar (*)**

very elastic tubes: with 7.8 mm universal hole + small conduit (see fig. 38 A) .

**0.3 - 0.7 Bar (*)**

medium to very elastic tubes: nearing 0.6 Bar, you need to use thicker IT's of medium elasticity to allow for the required reduction in the cross-section of the small conduits. There are sudden differences in the irrigation plain (0.8 Bar) and the minimum delivery rates are achieved using IT's with 120% ultimate elongation, depending on the configurations with the spring clip shown in fig. 41 A (solution 2) and GC with concave facets (see fig. 38) and a universal hole with diameter 7.8 mm.

**0.7 - 2 Bar (*)**

medium elastic tube, max. 130% ultimate elongation (see page 37), trapezoid conduit (see fig. 38) and 7.8 mm universal hole.

From 0.9 to 2 Bar the necessary reduction in the cross-section of the 8 "reductions" (10 in fig. 37) can be obtained using a tie-coupling + spring clip in order to get a drip rate of c. 60 droplets/min.

At 1.5 Bar, the ring with an extendible tab (see fig. 25 C and option 1 in Table 5) should be added to the plug "a", together with the seals in fig. 25 G increasing the thickness in order to maintain the water-tightness of the VDI even if the IT is slightly bent.

2 - 2.5 Bar

Only an unsuitable "highly elastic" IT is possible here (see page 37) with ultimate elongation of 160%. Using a manifold to get up to 2.2 Bar along the entire length of the tube with universal holes of 7.55 mm. If the irrigation water contains a negligible amount of calcium salts and small impurities, the following configuration can be used at 2 Bar: GC fully inserted with half-moon conduit and 0.59 mm r.c. The water-tightness can then be improved using plug "a" option 1 (see fig. 44) plus options 1, 2 or 3 in Table 5. The required minimum drip rate can be obtained using the tie- coupling shown in fig. 41 C + a single tie.

At 2.1 Bar, you need to add the seal shown in fig. 25 g (2.5 mm thick) to the plug "a" and make smaller universal holes (7.45 mm).

Notes:

The hydraulic materials used to form the configurations of the VDI's are always shown in the list of basic components in Table 4, plus the options in Table 5 and any accessories as required. These are needed to get the ideal performance from the invention (see fig. 37) depending on the length of the tubes already available (of various compounds, thickness and diameter).

By "compound" or "composition" we mean the chemical name of the tube indicating its mechanical, thermal and electrical properties. The mechanical properties concerned are expressed as the modulus of elasticity (tensile stress or torsional stress), but normal operators may find it easier to carry out the tests indicated on page 37, lines 31-35 to establish the ultimate elongation of any irrigation tube at hand and so make the VDI's from other applications reversible.

**- 8 -**

The reversibility of the VDI configurations is one of the specific aims of the System in order to reduce the costs of the irrigation system. This allows for weighted reuse of the components held on stock in order to get new functional VDI configurations.

To create these configurations using the most commonly available types of tubes, tests on samples are required (see page 45). Such tests also have the aim of making it possible to reuse existing materials to make equally functional new VDI configurations within each of the ranges of water pressure indicated in Table 4, from the lowest to the highest value (i.e., switching from use on the plain to slopes and vice-versa).

The reversibility of the VDI configurations is also 100% programmable via individual tests (see page 36) to be able to reuse the materials available or from other sources.

**2.5 - 3.5 Bar**

- existing tube of medium elasticity, 75% ultimate elongation **up to 2.6 Bar**
- 7.65 mm universal hole
- GC (see fig. 42 or option 1 in fig. 44) with small half-moon conduit with 0.59 mm r.c.
- very strong spring clip (see fig. 41 A - solution 3) with large diameter ring

**over 2.6 Bar**

- 7.6 mm universal hole
- plug "a" (option 1 in fig. 44)
- tie-coupling (see fig. 41 C) plus normal spring clip (see fig. 41)

**over 3.2 Bar**

- seal of suitable thickness for the plug "a" (option 1 in fig. 44)
- smaller universal hole (7.5 mm) with tie-coupling + single tie wound twice.

**58 alternating droplet irrigation (ADI) with use of a computer:**

(see point 86 on page 211-212, test 3)

ADI lets you personalise droplet irrigation and offers the best possible advantages for the crops in the various species grown:

**IRRIGATION**

With the hydraulic components in the System, the mobile systems can be quickly assembled to suit new conditions of permeability in the soil via the adoption of an adequate drip rate.

The delivery rate of irrigation type 1 is constantly adapted to suit the growth of the specific crop in question in line with the number of times irrigation type 2 has already been supplied, starting from the seed stage.

---→ Irrigation type 1 has a drip rate that forms the ideal level of moisture for the roots of the seed until it becomes a young adult, or the level that needs to be maintained during subsequent irrigation type 2.
---→ Brief pause type b is needed to separate irrigation type 1 from type 2.
---→ Basic irrigation type 2
Like type 1, this is programmed by experts in agronomy to get drip rates suitable for each crop in question and that need to be corrected in the light of the permeability or particle size of the soil. It also needs to be adjusted to get a more precise number of daily irrigations to avoid wasting water or to release the precise volume of water required on a daily basis by minimal root systems and the far larger systems of the adult plant.
---→ variant 1a
change to basic irrigation type 2 following changes in the weather conditions As the crop grows, the operator may vary the delivery rate and the number of irrigations each day using a computerised system in order to adapt these better to the crops if they have been found inadequate since the initial sowing of the crop. In the same way, he can also decide to use a different daily program due to changes on the weather, using the ADI system aimed at maximum savings in water and the best possible yield.
--→ variant 2a
change to basic irrigation type 2 for drainage
This type of irrigation allows for useful drainage of the root system with carefully programmed greater delivery from the VDI (starting from roughly at least one irrigation every 10 min/sec. The aim here is provoke faster passage of the water in the soil around the root system in order to eliminate the salts that have built up owing to improper use of the irrigation waters.

Analysis and operations that become necessary in such a case when using the ADI system

1) High salt levels are found in various sources of irrigation water: you should opt for the source with the lowest level of bicarbonates, even if this implies greater extraction costs, in order to keep the fixed drip rates unaltered for long periods.
2) If you increase the delivery rate of the VDI's, you also need assess the size of the salt deposits with such water.
3) To determine the salinity of the water, you can use basic a conductance measuring device (an ohmmeter). These instruments are the size of a TV remote control and are used to measure the salinity of the saturated soil, or drainage soil, in order to find out whether this is compatible with the tolerances for such dissolved salts in the crops being grown.
4) On the basis of the results of the tests in point 3) above, if there is more salinity, you should decide whether or not to alter the basic irrigation program to get a larger flow from the VDI (e.g., at least 4 type 2 irrigations). (If you find that the level of salinity is still too high, despite having increased the delivery rate, you can try using rainwater collected in tanks to be mixed with the hard water.)
5) In any case, it's best to use rainwater for irrigation purposes (this is a useful invention requirement) as this also has the advantage of promoting a process of percolation in order to wash away the accumulation of salts in the layers of soil around the root systems.

**comments on point 3) above**

The salts most easily detected by means of conductance are chlorides, nitrates, sulphates, carbonates and bicarbonates, alkaline soil elements and sodium, calcium, magnesium and potassium.
If the irrigation water has low levels of conductance, it can be said to be soft or rain water. However, it's best to use a "hydrotimeter" to discover its exact content of calcium salts in order to plan the irrigation. These tests need to be carried out at regular intervals in order to prevent the initial clouding of the plug "a" or build-up of scale within the VDI.
It is, in any case, preferable that you determine the exact hardness of the water using lab analysis methods.

---→ pause type 1
long, to be repeated many times in order to then return to irrigation type 1 following irrigation type 1:
---→ several consecutive irrigations type 2, including changes 1a and 2a where appropriate
- after this:
---→ several long pauses type 1 for the set time
- then return to:

--→ irrigation type 1
- and then:
---→ pause type b, returning shortly afterwards to irrigation type 2, etc., to get the overall beneficial number of irrigations both night and day.

Another advantage offered by the ADI system is that it makes it possible to lower or raise the water pressure in the irrigation system (see page 43 line 57) and so adjust the drip rate as required across a wider surface area while still using the same hourly water consumption rate.

**Table 4**

(see 25, lines 16-24)

**criteria for the use of hydraulic components:**

- Fixed or basic VDI components
  Plug "a" and the various types of GC constitute the basic structure of the VDI with greater surface slipperiness (see page 35, line 36).
- * options in Table 5
- fixed accessories (see fig. 41 A)
- extra accessories (see fig. 41 C) that lets you adjust the VDI to get the required drip rate when the water pressure is unsuitable for the fixed components.
- Brief evaluation on the reasons for proposing a configuration of the VDI using the simpler and more effective options in Table 5

** IT's of the right composition to suit the water pressure range, using a universal hole with a diameter should be used, shown to be suitable during testing.

This is a system installed on a slope with four different water pressure ranges and a different IT of the right degree of elasticity used for each of these.

Rain water and piped water are mixed together to lower the calcium salt content of the irrigation water to less than 1g/l, bearing in mind also the presence of impurities of negligible size, passing through the filter and ejected by the small conduit with a radius of curvature of 0.59 mm.

**1st water pressure range**

very low (0.02-0.1 Bar) to low (0.1-0.3 Bar)
** IT: medium or very elastic (see pages 25, lines 16-24)
7.8 mm universal hole
VDI type 1

In the presence of flat facets, you can get another small conduit with cross-section "S1" (in addition to x + C1, as shown in fig. 20 A2) and so increase the delivery rate slightly from 0.02 Bar to over 0.1 Bar with this level of water pressure

```
                 |   plug "a" (see fig. 44 type 1)
  components |
                 |   GC with trapezoid conduits (see fig. 37 A) and 8 flat facets
```

- very elastic IT with over 200% ultimate elongation (see )
- with water pressure close to 0.3 Bar: you need to use a fixed accessory (spring clip in fig. 41 A).

GC colour: neutral

**2nd water pressure range**

medium (0.3-0.7 Bar)
** IT: medium or very elastic
7.8 mm universal hole
VDI type 2 - same as type 1

```
                 |   plug "a" without membrane (see fig. 44 type 1)
  Components |
                 |   GC with prototype trapezoid conduits (see fig. 37 A) (same for
                 |   VDI  type 1)
```

fixed accessory: spring clip (see fig. 41 A)

- very elastic IT with average 210% ultimate elongation with water pressure from 0.3 Bar upwards: you need to use the spring clip in fig. 41 A, solution 2 (see page 26).
  * towards 0.5 Bar, add the GC with option 2 from Table 5 to the VDI.
- medium elastic tube with average 110% ultimate elongation: add the normal strength spring clip in fig. 41 A throughout the entire water pressure range. GC colour: light blue

**3rd water pressure range**

high (0.7-2 Bar)
** IT: minimum or medium elastic
7.8 mm universal hole
VDI type 3

```
                 |   plug "a" without membrane (see fig. 44 type 1)
                 |
     components |
                 |   GC (see fig. 42) with trapezoid conduits (see fig.  38)
```

- minimally elastic IT up to 1 Bar: use the spring clip in fig. 41 A, increasingly stronger
  * before 1 Bar, use the GC with option 2 from Table 5 and the strong spring clip solution 3 or adjust the minimum drip rates using the extra accessory in fig. 41 C.
- medium elastic tube with average 100% ultimate elongation: add the extra strength spring clip in fig. 41 A (solution 2) and GC option 2.
  * over 0.9 Bar: use a tie-coupling (see fig. 41 C) with a «sample» spring clip (see fig. 41 A).
  + over 1.3 Bar: use plug "a" option 1.
  GC colour: blue

**4th water pressure range**

very high (2-3.5 Bar)
** IT: minimum elastic
7.7 mm universal hole or 7.6 mm at 2.8 Bar
VDI type 4

```
                              |   plug "a" (see fig. 44 type 1)
          components    |
              0               |    GC (see fig. 42) with half-moon conduits 0.59 mm radius of
                              |   curvature. (see fig.  39)
```

The VDI has to be fitted with the larger GC shown in fig. 20 C in a minimally elastic IT. The irrigation water should be a mix of stream water and rain water taken from a tank, having established the calcium salt content in the irrigation water at c. 0.5 g/l in order to avoid the risk of the conduit with 0.59 mm radius of curvature becoming quickly blocked.

(See page 46 , lines 39-43 for details of how to avoid the risk of the VDI becoming blocked even in the case of irrigation water with a bicarbonate concentration just above 0.5 g/l by resorting to a special chemical compound.)

* At 2.2 Bar: you need to use GC option 2.
* At about 3 Bar upwards: you can adjust the 8 "reductions" at 10 (see fig. 19) using the tie-coupling shown in fig. 41 C together with the spring clip in fig. 41 A to get a substantial drop in the delivery rate.
* At 3.2 Bar: use plug "a" option 1.
* At 3.3 Bar: use the tie-coupling shown in fig. 41 C together the spring clip with a single wire with two winds to adjust the VDI quickly and so get the required drip rate (60-140 droplets/min, see page 49)

GC colour: dark blue

**Beyond the 4th water pressure range**

If using a minimally elastic IT, you will need:

a smaller diameter universal hole (7.6 mm - see Table 2 on page 30, line 33),
a GC with the smaller conduit (0.59 mm radius of curvature) and the tie-coupling with a single wire with two winds. Options 1 and 2 in Table 5 for the plug "a" at 3.5 Bar.

Before 4 Bar, you should at most use a plug "a" with a lower degree of elasticity than that shown in fig. 40 D to keep the minimum cross-sections more stable (see page 52, lines 15-20). However, this should be decided on the results of tests using a sample plug "a".

**59 Purpose of measuring the elasticity of the IT's.**

Strong water pressure and greater insertion of the GC cause the universal hole to expand, especially in the case of very elastic tubes with ultimate elongation of more than 200%. When the water pressure gets too high for the VDI, the drip rate sudden increases greatly when compared to that at identical VDI's in minimally elastic or stiff IT's.

The elasticity of the IT's shown on page 37 is expressed as the ultimate elongation rather than as the elastic stress modulus, the reason being that the experience and technical equipment needed to assess the latter is not available to all.

To speed up the formation of the VDI configurations using the elastic stress modulus, you'd need to find at least this detail stamped on the tube so that you can then make a universal hole of suitable diameter for the pressure range in question.

The farmer could thus make quick VDI configurations, but only by repeating those already carefully tested on a tube of exactly the same composition, where the testers obtained the required drip rate using experimental criteria and a more simplified and functional configuration.

60 Ultimate elongation of IT's

The IT's can be more simply classified, if needs be, by means of their ultimate elongation, making it possible to find the most functional configurations of the VDI's with some simple tests.

The table on page 45 details the configurations proved by experience to be valid and obtained by technicians with an IT of slightly different ultimate elongation to obtain the minimum/maximum drip rates required.

As described in point 8 on page 48, such differences can compensate for minimum variations in the elastic stress modulus found between operating tubes and test tubes. In order to reproduce the same delivery rates along each IT, the operator should consult the information in point 68 on page 155 which provides him with the data needed to make any VDI fully functional in any working conditions.

**Tests** - useful for organising the autonomous operation of the invention:

Depending on the organisation of the IT's (see Tables 2-4), you can start planning the length of an available tube to suit the relevant water pressure ranges that you want to use and then find the most suitable VDI accessories.

To carry out the tests, you need all the sample hydraulic components in order to assemble the experimental configurations: the basic VDI components, the options in Table 5 plus the fixed and extra accessories. An operator can thus get smooth operation of the system as in Table 4, cut costs as in Table 3 (e.g., by recycling recovered IT's with water pressure up to 2.5 Bar) or produce a specialised system as in Table 2, using the length of minimally elastic IT of identical composition and so avoid the need to use the more expensive tie-couplings (see fig. 41 C or 41 D).

To do this, the operator needs to cut and organise the existing IT's in lengths of just 20 cm or thereabouts, even if the composition is not considered in the configuration Table on page 45, and so decide on the best pressure range for this in view of its degree of elasticity and one that can be obtained in a given stretch of the irrigation system.

Two universal holes need to be made in the 20 cm length to suit the configuration in question.

Using a pressure variator, the tube is tested under different pressure ranges until the maximum is reached for that tube fitted in order to decide on the most suitable VDI configurations (i.e., those where the drip rate is most easily achieved), always with an eye to the cheapest and simplest structure. On this basis, and with minor variations in the composition of the VDI configurations for one of the two universal holes previously made in the tube, you need to try to stay within two close pressure ranges (homogeneous configurations) measured with a high precision pressure gauge, without any changes in the appropriate drip rate or that to be reproduced in the operating tube.

Changes in the structure of the VDI needed to stabilise the drip rate may consist in inserting the GC to a greater or lesser degree in the tube, in the use of a stronger or weaker spring clip, in a thicker or thinner shim and in greater tightening of the tie-coupling shown in fig. 41 C, etc.

To help make the necessary choices, the operator can consult configuration (or "strip") Table on page 46, also when, for example, he has to decide on a suitable composition for the GC and the plug "a" to get a smoother surface in these and so ensure that the system works perfectly in the long term, taking into consideration the size of the impurities in the water and the possibility of unfavourable concentrations of calcium carbonate. He could also carry out any of the tests on the various VDI configurations to get a better idea of how these work without actually having to invest in the long-term irrigation tests (lasting several months) that some almost soft waters and perfectionism would otherwise require.

Having planned the VDI configurations using just the sample components, the farmer now needs to buy the required materials and organise the various lengths of tubes already available in order to build the entire irrigation system.

## 61 Determination of the elasticity of the tubes

From research carried out c/o local producers of tubes, we've found several compositions are suitable to make irrigation tubes. These have been tested for their ultimate elongation, with the following results:

Most of the tubes are "very elastic" with ultimate elongation of between 160-260%.

Braided tubes often fall within this range of elasticity.

Other tubes have been found with ultimate elongation of more than 300%, proving to be unsuitable for use with VDI's.

The average ultimate elongation is 60-160%.

Minimally elastic tubes with ultimate elongation of below 60%, in some cases virtually 0%, are of particular interest as the VDI proves to work almost perfectly with these in the simplest of configurations, even when the water pressure values are high (see page 105, 2-2.5 Bar).

```
                         1          2          3
                        very     average    minimum


                 ||||||||||||||||||||||||||||||||||||
                 |     |      |      |      |      |   |stiffness
             .
         over 260%     260-160%  160-60%    60-0%
```

Method used to discover the degree of elasticity:

a thin ring is cut from an IT using a pair of scissors or suitable sawblade. This is them stretched and measured against an elongation gauge until it snaps (ultimate elongation) to find the length needed to measure its elasticity.

## Table 5

(see page 24 , lines 16-24)

**«sample» plug "a" options**

These determine the efficiency of the VDI and its water-tightness.

| | |
|---|---|
| 1 | **ring with extending tab** (see fig. 25 C, fig. 25H prototype and page 65) |
| 2 | **seal** (see fig. 25 B, fig. 25 G "thicker version" and page 65) |
| 2a | **ribbed seal** "n" (see fig. 25 G and page 67) This requires the use of the 2nd protrusion. |
| 3a | **simple reinforcement ring** (see fig. 26 A - simple "T" to be sunk within the pressure ring, see page 66, function 4). |
| 3b | **reinforcement ring " T "** (for function 5 on page 66 and configurations fig. 25 E and fig. 26 A with protrusion "P"). |
| 3b1 | **reinforcement ring "T"** (see fig. 25 E, solution 2) This works with protrusion "P" at height "h1" (see page 67). |
| 3c | **reinforcement ring "T"** with swelling and a protrusion "P" of greater thickness ("sp1"). The "T" is hinged in the mesh at "c" in fig. 25 H (see page 243, configuration 25F or 25H) and its swelling presses against "a". |

Alternatively: with options 3c and 2a in fig. 25 G (seal) it makes sense for the "T" to apply concentrated pressure at "a" or within "c1", plus the selling at "n" (see page 67).

| | |
|---|---|
| 4 | **protrusion** 1(or single protrusion)"P" (see fig. 26 A, fig.25 H and point 63 on page 39). |
| 4a | **protrusion 2 "P1"** at height "h2" (see fig. 25 E and fig. 25 H). |

Options 1, 2, 2a, 3a, 3b1, 4 and 4a are suitable for "T" at "E1", while option 3c (and some of the aforementioned options) are suitable for "T" at "F" and "F1". Only options 1, 2, 3a and 5 are possible at "E" and "a".

| | |
|---|---|
| 5 | **greater protrusion of the external ring** This is the highlighted part in fig. 37 that compresses the shims (see point 74 on page 52) even further and is required in a round ring with a greater check function, having the same function as GC option 6. |
| 6 | **greater length** at 11 + 12 + 13 (see fig.19)of the prototype plug "a" see fig. 44 , solution 2)than prototype 1 ( see fig. 37 ) and point 45 on page 83 |

**GC options:**

**1 angle** $\beta$ **wider or smaller than 26'51".41** (see point 23 on page 9 and fig. 42).

2 * **14 in fig. 19, longer** or equal to that of the prototype (see fig. 43), being 26.4 mm, compared to 21 mm in the prototype shown in fig. 37 and 42.

3 * **with depth "p"** falling towards the knob or vice-versa (e.g., fig. 38 D on page 39).

4 **GC, with smaller overhang "e" to various degrees,** reducing the flow resistance in the IT (see fig. 19).

5 **bland calibration** (see point 48 on page 87). This consists of variation "t" in fig. 19 applied to several consecutive identical configurations (see page 45).

5a **differentiated calibration** (see point 49 on page 24). This concerns the position of the teeth at "t" in view of the water pressure used with the VDI in question.

5b **arrow-profile teeth** (see fig. 19).

These can also have protrusion "s" at D2 in fig. 19 to allow the GC to pass the very narrow opening at a.p. created by a very small diameter universal hole without having to apply excessive force. When the GC is extracted, the teeth come against the inner ring (see fig. 36) or a possible protrusion (plug "a" option 4 - see page 40).

6 **check ring** (see fig. 37). This has a wider diameter to allow for the wider diameter of the external ring (option 5 on page 38) and so press the shims shown at 16 in fig. 19 against these to get more precise insertion of the GC.

7 **variable length of the smooth shaft "lf"** (see fig. 19). This can be eliminated or made smaller ("lf1") as required to get a longer value at 14 (see fig. 42 - 43 and point 44 on page 22).

8 **chequered notches** (see fig. 17 A). Together with the knurling, these offer more precision in measuring the length of insertion of the GC (see fig. 73 and page 51).

9 **differently coloured GC knobs.** These have the following purposes: to indicate the start and finish of the water pressure range; to indicate the limits of "homogeneous stretches" with the same VDI configurations (see page 47); miscellaneous reasons, such as quick recognition of the options in a GC for faster configuration.

10 **flat facets instead of convex facets** (e.g., fig. 37 B and fog. 38 A). When using the small trapezoid conduit in the 1st water pressure range (see Table 4), these let you increase the delivery rate to the VDI.

**26 general rules for the use of plug "a" options in terms of water-tightness** (see page 91, lines 14-25)

The operator should use the following options on finding that there's even the slightest of leaks at AR1 (see fig. 40 A and page 24).

**\* option 1 - extending tab** (see fig. 25 H and page 262).

This should be used at around 2 Bar when using an IT of medium elasticity and 120% ultimate elongation or at above 3 Bar in a minimally elastic IT.

**\* option 2 - seal** (see fig. 25 G).

The more elastic the IT and excessive the universal hole, the more this should be used. Also when the water pressure levels are unfavourable for the VDI.
The seal is even more effective in pronounced bends (see fig. 7) in a very elastic IT when associated with option 1 (see fig. 25 C).

**\* option 3a - reinforcement ring "T"** (see fig. 25 E).

This should be used when the IT is more elastic than necessary, together with the following GC options:

- **options 1 and 4** - these are helpful in IT's that are too elastic and of small diameter. Option 1 further reduces the "minimum area" when the GC is inserted to the same degree, while option 4 cuts the flow resistance produced by each VDI in the tubes by eliminating the overhang "e" in fig. 19.
- **options 1 and 2.** When the GC is fully inserted, these options reduce the minimum area as required. In the case of the GC shown in fig. 19 at 14, option 1 (see fig. 43) needs 14 = 21 mm and 19 = 24 mm, while in fig. 43, GC option 2 needs 26.4 mm and 29.4 mm respectively.

When GC option 2 is inserted in the plug "a" type 1 shown in fig. 44, it produces the flow resistance needed to reduce the water pressure as required, with insertion length 18 in fig. 19 and even 19.3 mm in fig. 44 compared to the curvature "c" (i.e., when the GC is almost completely inserted and the VDI is still functioning).

**option 3**

This consists in the progressive reduction of the depth "p" (see fig. 17 C and fig. 18 C) of the GC towards the knob or opposite this in order to get a smaller fixed curvature of the small conduit (see fig. 38 E) of 0.21 mm at "p" at the end of the tapering of the GC shaft.
Option 3 mainly corrects unnecessary expansion of the inner conduit wall within the fixed curvature of the small conduit (see fig. 17 C) at "l.p." (see page 7, line 54) due to a universal hole whose diameter has become too wide as this has been made in an IT that's too elastic.
Option 3 is also useful when combining a sample GC and a plug "a" of insufficient elasticity in order to discover during tests the useful expansion of the inner conduit wall within the fixed curvature of the small conduit "ABCD" in fig. 39).
Option 3 is even more effective when associated with option 2.
Again, the low-cost option 3 can be used when the constraining force of spring clip solution 3 (see page 26) at x-x in 10 (see fig. 37) fails to limit the cross-sections of the 8 "reductions" (see fig. 19) as required, but simply prevents the GC from slipping. In this case, option 3 produces the necessary reduction in the 8 cross-sections at 10.

**63 option 4 - multipurpose protrusion.**

```
        X              d
     reduction         A       minimum
        |              |          |           axis of symmetry
  ------13-|-13-------12|12 -----11--|------------------------------------
        |              |          |           inner conduit walls or GC
        x              R       passage
                       d1
```

When the protrusion in the plug "a" (fig. 19) is gradually compressed as the GC is inserted, it invades the fixed curvature of each concave facet in the small conduit, thus causing further reduction in the cross-section of the 8 "minimum passages". The effect of this is more obvious when the pressure ring is made to press harder against the a.p. (see fig. 36).

The reinforcement ring "T" in fig. 25 E or fig. 26 A (if fitted) tends to turn at the same time as the GC is inserted, given the configuration (see fig. 25 D and page 239) until the extending tab (see fig. 25 C) and the seal ( see fig. 25 B) are compressed correctly. This depends on the thrust received in direction 1 from the compression of the protrusion in order to stabilise the water-tightness of the VDI as required when this was found to leak during tests.

passive resistance

"P". produces a certain amount of resistance for the GC and this is added to that established in a.p. and also x-x at 10 in fig. 19 (if appropriate) thanks to the use of fixed or extra accessory.

flow resistance

by finding the greatest flow resistance at 11 in fig. 19 by means of a new projection "s" attributed to "P", according to the greater degree of elasticity of the sample plug "a", you can find out through tests, whether the size of the advance in "P" within the fixed curvature of each concave facet of the GC has really created the reduction in the 8 cross-sections before 11 by comparing the test results with the minimum drip rates previously obtained when the GC is inserted to the same degree. In other words, you can assess the size of any slow-down in the drip rate.

differentiated calibration + protrusion

When the plug "a" (see prototype in fig. 40 D) is fitted with a protrusion, the teeth D1-D2 with arrow-profile (see lower section D2 in fig. 19) can easily get past this and come up against the protrusion when the GC is extracted, thus creating the differential calibration (see GC option 5 a).

In this case, the GC doesn't slip even when the water pressure exceeds 3 Bar if fitted in a plug "a" in a slightly elastic IT. The GC is even more stable when the VDI is fitted with a very strong spring clip (see fig. 41 A) at 10. The configuration of the GC can thus be perfected even further by managing to avoid the use of the tie-coupling by reducing the delivery rate using a very strong spring clip.

As the GC may be ejected from the plug "a" if the water pressure suddenly rises, the teeth Dl-D2 should sink into the protrusion. The resulting narrow passage in the a.p. for a universal hole of optional diameter, with the spring clip compressing this further at 10, makes it possible for the VDI in this configuration to withstand even fast changes in the water pressure within certain limits, such as happens when a tap is closed too quickly (see fig. 22 A).

**9 Reference to claim**

In such a configuration, the VDI is defined as being **"completely stabilised"** as it is fitted with GC option 5a, plug "a" option 4 and a very strong spring clip.

When fitted with just the two important options in Table 5, the VDI offers a simplified configuration that's especially useful in systems comprising IT's of identical composition, letting you vary the delivery rate in a plain setting to suit the rise of fall in the water pressure (see point 68 on page 43).

If you decide to eliminate a strong overhang "e" (GC option 4), you can make great savings in the cost of the system as it's possible to use tubes with a smaller diameter.

5 advantages in VDI efficiency offered by the protrusion:

1. It produces a flow resistance in the unified conduit (11) by forming 8 minimum passages as a result of its expansion within the fixed curvature of each concave facet, the size depending on the degree of elasticity of the same (or that of the plug "a") and its projection "s" (see fig. 19).

2. It helps keep the GC on the same axis of symmetry as the plug "a" and creates the "minimum passages" with symmetric cross-section, thus offering an advantage in terms of disposal of the impurities of admissible size in the water.

3. When the GC is fully inserted, the "P" is compressed to the point that it forms a slight amount of pressure on the "area of pressure" (a.p. in fig. 36) by means of the pressure ring and thus favours the water-tightness of the VDI.

4. It forms double the amount of passive resistance in the GC (triple if the spring clip is applied at 10) needed to prevent the GC from slipping.

5. It helps form the differentiated calibration (option 5a in Table 5).

## 64 energy creayed in a tube withdrawing consistent daily volumes of water from a catcement basin in a hight position

Small low-cost turbines can be used to reduce the dynamic pressure along the steel tube that takes the water from the tank or catchment basin to another smaller basin at an altitude above that of the actual irrigation system. These are fitted with a wheel having dual-spoon paddles, of acceptable cost and designed to carry 0.2-100 1/sec and capable of covering changes in altitude of 6-200 metres. These will produce a fair amount of electricity.

To heat the water, you can also other low-energy machines and equipment capable of heating the water up to the furthest points served by the VDI's. Cheap windmills, lead batteries or transformers can be used, as the cost can easily be offset by the sure advantages for the crops thanks to climatised irrigation.

Pressure regulating valves can then be used to adapt the water pressure in tubes on terraces (see fig. 33) so this drops below the 4th water pressure range in Table 4 and so simplified systems with minimally elastic tubes can be possible (see Table 2).

## 65 elasticity of the low-cost plug "a" (see fig. 37) depending on the temperature of the air

The low-cost PVC plug "a" shown in the prototype on fig. 37 with the elasticity indicated in fig. 40 D tends to harden at 6-7 °C, thus making it impossible to regulate the delivery rates by altering the insertion of the GC. The minimum air temperature with this type of plug "a" should be about 15°C if you want to adjust the drip rates easily.

To adapt the prototype VDI in fig. 37 with a PVC plug "a" (see fig. 40 D) to suit cold climates, you need to wait for the right time of day. If you can't depend on the air temperature, you must heat the water to at least 15°C for the time needed for all the VDI's to be reset.

If using the invention in fig. 37 at temperatures above 34°C, you need to use a different compound for the plug "a" shown in fig. 40 D.

When the prototype plug "a" in fig. 40 D is used at 40°C, it softens and so, after adjusting the VDI, the inner conduit walls could slowly stick to side CD (see fig. 39) and thus significantly reduce the original cross-section in conduits with a radius of curvature of 0.59 or 0.629 mm. As a result, the inner conduit wall could adhere to the fixed curvature to a considerable degree and so affect the required drip rate.

## 66 How to accept larger impurities in the water - sistems whit regular needs for correction in the delivery rate

To eliminate large impurities in very long IT's, you may need to make many corrections in the delivery rate within water pressure range 1 in Table 4. In fact, with this water pressure, the prototype shown in fig. 37 in a very elastic IT with a 7.8 mm countersunk universal hole is the best solution to get rid of the larger impurities.

If you use a small conduit with a trapezoid cross-section (see fig. 39) with depth "p" of 0.3 mm and a very elastic IT with ultimate elongation close on 230%, the inner conduit wall expands too little within the fixed curvature ABCD at IE (see fig. 39) when the GC is inserted. In other words, it doesn't expand as much as a stiff tube does with a 7.7 mm universal hole, thus being able to accept, with an IT with 230% ultimate elongation, a 7.8 mm universal hole and the VDI in fig. 37 with the conduit shown in fig. 38 A, impurities in the water of twice the size (compared to 0.11 mm at EL in fig. 39), but only within 0.3 Bar.

system configuration 1

Tubes plugged at either end with 2 stoppers "c" (see fig. 2). Parallel duty tubes run above these or at right-angles, providing the water through several capillary tubes at regular intervals, producing multiple corrections in the delivery rate (see fig. 21 B).

system configuration 2

2 gate valves "V" make a stretch of IT's autonomous when supplied with just one delivery rate correction via a capillary tube fitted with a tap (see fig. 22 B). This takes the water from the "T" ("E" or "E1" in Table 6) in the suspended duty tube (parallel or perpendicular to this) and at the right weight for irrigation purposes.
With more vertical connections (see fig. 22 B) using capillary tubes, you can correct the delivery rate at regular intervals in consecutive stretches of IT, each becoming autonomous and so with different drip rates.

system configuration 2 - slopes

Brief stretches of a medium elastic IT with 100% ultimate elongation or a minimally elastic IT with up to 60% ultimate elongation can be made autonomous. Also stiff IT's provided the water pressure is higher than 3.5 Bar.
This solution shows how important it is to section long stretches of IT's on a descending slope to about 200-300 m until you get 3 Bar or more and so form the necessary "minimum areas" by insertion of the GC even beyond the point shown in fig. 20 C (plug "a" type 1 in fig. 44 + GC in fig. 43).
Such insertions are needed to reduce the increase in water pressure (even at up to 4 Bar) in the "minimum areas" compatible with the use of irrigation water from rain tanks or very soft supplies.

system configuration 3 - plain

inadmissible particle size for the invention (see fig. 37)

If the "minimum passage" at d-d1 in fig, 20 A - 20 B is unsuitable in the prototype in fig. 37 for the size of the impurities in the water that have slipped through the natural filters of sand, or if water is used with more than 0.5 g/l of calcium and magnesium salts and such impurities have been found, the farmer may decide to use a conduit with a depth "p" (see fig. 18 C) greater than 0.3 mm.
Form short stretches of IT at the minimum water pressure needed to get the required delivery rate at the VDI's. This can be adjusted with the taps on the vertical capillary tubes that connect the duty tube and the underlying It (see fig. 22 B) after being fitted in the relevant "T"s ("F" in Table 6).
With this third type of system configuration, you can keep the delivery rate at the peripheral VDI's stable, which would otherwise be impossible with normal diameter tubes, and at the lower water pressure needed, without having to eliminate the minimum passages at the start of the tube to allow for the passage of the admissible size of impurities. This is indicated by the minimum area of types C1-C2 in fig. 20 A2 and 20 B2, but deeper than that of the small conduit (see fig. 37 A).
With this type of configuration, impurities with a particle size of more than 0.3 mm can be allowed in all parts of the system.

10 **Referenze to claim**

10  In a GC operating in a VDI placed in a very elastic IT and subject to limited water pressure, you have to increase the depth "p" in fig. 18 C in the small conduit as required in order to create a suitable minimum passage to allow for the disposal of larger impurities and obtain system configuration type 3 suitable for plains (see page 42).

67 **a few types of transfers**

1 The water is transferred to favour an IT where the pressure has become unacceptably low. This can be done by taking water from another IT where the level is too high, having first plugged all unused VDI's. The water is transferred in the right amount using the System hydraulic components and without upsetting the existing delivery rates.
2 The delivery that's become too much in one IT could be sent to another stretch of extended tube where there is an insufficient delivery rate or the water pressure is lower than the former and so ready to receive this. The stretch of additional tube could become autonomous (see page 41 , system configuration 2) or almost autonomous if you continue to use the water available in the original stretch of IT, but at the same time you take water from the IT with a surplus (the "donating" tube) until the right pressure is reached provided the altered drip rates in both connected sections do not adversely affect the crops.

Valves "V" are used to do this. One at the base of the donating tube connected to the tank used to get the right amount of water for the extended tube; another on the connection tube "2". Both the valves can be alternately opened to get new and acceptable drip rates, both benefiting the growth of the crop and without implying the need to reset the VDI's in the two IT's.

It should be noted, however, that each new setting of the drip rate in the invention has the precise agronomic aim of guaranteeing optimal moisture for the root structure (i.e. aimed at optimising the water consumption while still offering the best possible advantage for the crop in question).

3 If you want to increase the delivery rate to the VDI in an area of the irrigation system where the delivery has dropped considerably (e.g., caused by a fall in the discharge of a manifold), you can draw water from another source using an 8 mm capillary tube in the tube (see "F" in Table 6), at the base of each IT in the system, to get the necessary water and adjusting this with a tap (see fig. 22 B), followed by a pressure regulating valve to safeguard the required drip rate.

Alternatively, you strengthen the delivery rate by using a valve "V" (see fig. 32) in the manifold "a" in fig. 28 A to increase the delivery rate to the IT "b" via the connection shown in fig. 28 and so get multiple delivery for the increased number of VDI's in an extended stretch of tube.

IT "b" uses two valves to regulate the drip rate, with the fluid flowing in both directions. Having said this, however, the following points need to be resolved.

evaluation needed to extend IT's if you want to get stable and unchanged drip rates (not using the ADI system on page 47).

To irrigate the land using a stretch of IT that's been extended by using another shorter IT of the same composition and with the same simple VDI configurations suitable for use on plains (see page 47) without altering the previous ones, you need to fit the original IT with valve "V" (see fig. 32) upstream of the pressure regular. You also need to decide whether the original drip rates are increased too much due to the greater water pressure and delivery rate required to get a large number of deliveries.

The conversion of the system is correct if the pressure values found in the original length of IT + extended IT on page 47 are diligently kept in the original tube, and the drip rate is roughly that required at each VDI. If, on the other hand, the drip rates in the original IT are far too high, you need to reset the VDI's. This is also the case when the plug "a" shown in fig. 28 (far longer than the original plug and installed on a slight slope) requires more water pressure at the base of the original one in order to stabilise the required drip rate in the additional stretch, although this involves raising this to meet the original VDI configurations.

4 - slope

Imagine you want to length some IT's of varying composition and configured to get a constant delivery rate, such as those on a terrace (see fig. 33), while keeping the same delivery rates and not wishing to take water from the descending manifold (thus affecting the IT's in next terraces). In this case, you need to take excess water from another branch at a higher level into the lengthened stretch of IT. If there is no permanent surplus upstream, you need to take more water from the tank using the hydraulic components of the System (valves, nipples, capillaries, taps, pressure reducing valves, etc.) and even a garden hose.

5 See point 69 on page 49 for details of what to do in another more suitable configuration.

**68 Technical instructions needed to build a new system or convert an existing one**

Diagram of plain - (see discussion of ADI system on page 32). To vary the delivery rate of the VDI's, you first need to install the IT on the plain, or at right-angles to the line of maximum slope on the mountain, for this to become operative, with the same identical composition of the reference tube. Reference tubes proposed:

t1 - minimally elastic reference tube with 60 % ultimate elongation (see page 37) to irrigate with soft water or rain water with impurities less than 0.08 mm in diameter and with a maximum calcium salt content of 0.5 g/l.

Here, "p1" indicates the flow and pressure rates required in a working tube with an inside diameter falling within the two acceptable limits, being capable of guaranteeing the minimum, average and maximum delivery rate for the VDI's. such a rise in the pressure produced once a day elsewhere (e.g. in strips in a plain, see page 47) leads to the required drip rates being restored where these tended to drop. This situation affects the performance of the VDI configurations to varying degrees.

With an increase in the minimum areas after a brief rise in the water pressure in the small conduits (see page 40, line 19), larger impurities in the water can also be expelled, thus avoiding the possible blockage of the VDI's.

The maximum length of tube "t" is found by gradually reducing the length during the tests to get constant delivery rates for identical VDI configurations (with delivery rates ranging between 60 and 140 droplets/min - see test on page 50 - or even higher).

t2 - medium elastic reference tube with 110 % ultimate elongation to irrigate with water with impurities of about 0.2 mm in diameter. Compared to tube "t1", the calcium salt content can be anything between 0.5 and 1 g/l.

Here, "p2", like "p1", indicates the flow and pressure rates required to guarantee the same range of delivery rate for the VDI's. The length of tube "t2" should be the maximum possible found during testing. (To find this, take an IT fitted with identical VDI's and gradually increase the length of the tube with water running through it by opening/closing the valves "V" (see fig. 32) until you find the longest stretch where precise repetition of the required drip rates is possible.)

t3 - very elastic reference tube with 210 % ultimate elongation to irrigate with water with impurities of a diameter in excess of 0.2 mm and hardness higher than that with tube "t2".

The VDI's in this case must have a trapezoid small conduit (see fig. 18 C) with minimal increase at "p" compared to those in fig. 38 A and a smoother fixed curvature than in tube "t2".

Here, "p3" allows for a smaller delivery rate than with the previous two types of tube, provided the cross-section of the small conduits offer greater depth and smaller pressure rates.

There is also a variant for type 3: this is longer with more delivery rate corrections (see page 149 - system configuration 3 "plain") with the "minimum cross-section" of the VDI's having a greater depth "p" (see fig. 18 C) than the usual 0.3 mm of the conduit (see fig. 38 A).

To expel larger impurities in the water, greater "minimum cross-sections" are needed in the working tube, meaning that only the pressure rates within the first range shown in Table 4 are possible here.

If the system is configured in a different manner (i.e., not according to the configuration table for installation on a plain), you can use IT's of a suitable composition for each range of water pressure shown in Table 4:

| range 1 | 2 | 3 | 4 | 4a |
|---|---|---|---|---|
| 0.02-0.3 Bar | 0.3-0.7 | 0.7- | 2-3.5 | >3.5 |

medium ultimate elongation (see page 37)

| | range 1 | 2 | 3 | 4 | 4a |
|---|---|---|---|---|---|
| e1) very elastic | x | x | x | c. 2.5 Bar | |
| e2) medium elastic | x | x | x | x | |
| e3) min. elastic 30% ultimate elongation | x | x | x | x | x |
| e4) stiff | x | | x | | x | x | x |

The pressures highlighted and underlined are for the medium and very elastic IT's normally made from recycled plastic, hence cutting the cost of the system, and can also be used with different water pressure rates, although the VDI's here will obviously become more complex.

The operator can also insert an IT with a different degree of elasticity (i.e., not the same as the reference IT) in the irrigation system, but needs to determine the right VDI configuration (see tests on page 36), providing that he can get the required drip rate at several consecutive VDI's in a "homogeneous stretch" (i.e., a stretch of tube with identical VDI configuration).

**identical VDI configuration in "homogeneous stretches"**

See also the configurations described in the configuration table on page 45 (plug "a" + GC), attributed during testing to a known composition and widely available type of IT. A universal hole with one of the most common diameters (7.8 - 7.7, 7.6, 7.5 mm) is needed, plus any of the options in Table 5, as appropriate, and the fixed and extra accessories.

To get identical configuration, you must insert the GC to exactly the same degree each time to suit the min/max water pressure rates that limit the "homogenous stretch".

Table 3 indicates the various experimental configurations that can be tried out, or those recommended by technicians, from which you can select the most suitable for the "homogenous stretch" in view of the hydraulic material available. To do this, operate within the relevant "homogeneous stretch" that must have a length suited to the slope in question. Each "homogeneous stretch" is measured in centimetres, starting from previous configuration to the next.

Each identical VDI configuration is fitted with the spring clip in fig. 41 A offering the relevant degree of constriction, plus bland calibration of the GC, the degree of GC insertion at 17-1 in fig. 42, (see also 16 in fig. 19), the shim gap in fig. 37, the type of tie-coupling required at 10, plus the exact length of extraction "ls" required using the hose clamp (see fig. 41 C), using the shims (see point 74 on page 52) and any other useful accessories.

**sample**

This consists of plugs "a" of various compounds to ensure the efficiency of the VDI is unaltered and several GC's (like the plug "a") fitted with the various options, simple or combined, from Table 5, plus increasingly stronger spring clips (see page 26), tie-couplings and hose clamps. You can also add pieces of tube of a know composition or considered in the configuration table, having universal holes with one of the most common diameters (7.8 - 7.7, 7.6, 7.5 mm), and any other hydraulic materials needed to obtain the various VDI configurations that tests show are efficient in the long term, guaranteeing unaltered working of the invention (see fig. 37 and page 36, line 60 onward).

**configuration table**

There follows a more detailed description of the correct VDI configurations, or those needing to be corrected (see point 8 on page 48), a "homogeneous stretch" being attributed to each when using the commonly available types of tube (see the configuration table) in order to get constant drip rates within the min/max water pressure rates determined during testing.

**conversion table**

If you have to use some components in a VDI configuration from another "homogeneous stretch" in an IT of a different composition, but included in the configuration table, this table acts as "conversion table" as lets you quickly compare the list of components suitable for identical VDI configurations in the old system with those needed in the new one. This means you can then reuse the available material in new configurations, ensuring they are efficient at up to the highest water pressure values foreseen for the invention (see fig. 37).

Obviously, you will need to use variants to suit the converted VDI to the water pressure in the IT and the size of the impurities in the irrigation water, as well as the hardness of the water, repeating other tested configurations.

With regard to corrections in the delivery rate (see point 8 on page 48), it should be noted that the VDI can function:

- in IT's where the fluid flows at veryigh rates, as happens in tubes below a catchment basin or other waterways
- in an IT normally plugged with a stopper at one end, in order to be used on both a slop and on the plain, where the speed of the fluid is usually quite slow.

In a 200 m stretch of IT with an inside diameter of 2 cm and fitted with 600 VDI's with a drip rate of 120 droplets/min, the speed of the water in the initial sections will be just 0.16 m/sec. This means you can simply consider the hydrostatic values on a slope, as the dynamic values are often negligible (as in the reference "t", when the speed of the water doesn't increase the pressure due to the hydrostatic values, even if these exist).

Using the practical method (see point 8 on page 173), you can adjust the drip rates where these are above the required rate.)

**strips - inclination of reference tube "t"**

The configuration table is drawn up on the basis of all the tests, resulting in a list of all the possible configurations for the reference tube, or strips:

reference tube of minimum elasticity and 60% ultimate elongation, 200 m Here you should use rain water or similar for the irrigation water, with impurities of max 0.08 mm in diameter. The tube is placed on a slope of 20% with several "homogeneous stretches", each having three possible VDI configurations (called "strips").

reference tube of medium elasticity and 110% ultimate elongation with length and inclination as above, for impurities of 0.10 mm; and another medium elastic reference tube with 110% ultimate elongation for impurities of 0.20 mm of the same max length and inclination.

The calcium salt content of the irrigation water is between 0.5 and 1 g/l. Additive to ensure smoothness as per page 46..

reference tube of high elasticity and 170% ultimate elongation with max length and inclination as above, for impurities of 0.10 mm and soft water; and other short strips for impurities of 0.2 mm and 0.3 mm, using irrigation water a calcium salt content above 1 g/l, thus implying the need for greater VDI surface smoothness as per page 46, line 30). You then need to set the number of strips required for the best organisation of the irrigation system.

GC slipperiness additive - To increase the slipperiness of a GC made from PVC, either use a suitable compound or add Teflon coating when the "hydrotimeter" tells you the content of Ca and Mg salts in the water is 0.5-1 g/l. The GC also needs to be smoother when the content exceeds 1 g/l, provided the extra slipperiness doesn't conflict with the need for a suitable level of static attrition in a.p.

If the content of Ca and Mg salts exceeds 0.5 g/l, the slipperiness of PVC or silicon rubber plugs "a" also needs to be improved. The higher the content of salts above 1 g/l, the more slippery the plugs.

It may be necessary to find the exact level of surface slipperiness, after long periods of testing, for every plug "t" or strip, whether on the plain or a slope, compared to the basic level of the prototype (see fig. 37) in order to avoid the need for future servicing, even if the content of Ca and Mg salts is below 0.5 g/l.

**delivery rate**

each change in the drip rate means a different strip is needed.

**diagram of strips - slope**

This is drawn using the "reference tube" serving the working tube.

To organise the working tube with the fluid flowing up or down this, use a detection tube (consisting of several connected IT's (see fig. 2 and fig. 41 E), with valves "V" limiting the overall length supplied with water. The water pressure should be read at intervals along this.

Using the detection tube, measure the water pressure at several pressure gauges (held in the plugs "a" by the spring clip shown in fig. 41 D). These gauges are sensitive enough to detect water pressure of below 1/20 Bar.

**diagram - slope**

Before measuring the water pressure in the detection tube, draw a diagram for reference detailing the initial, or basic, water pressure (abscissa) and divide the full length of the IT on the basis of several accurate water pressure readings (ordinate).

The various sections of working tube should be placed parallel to the detection tube and the same measurements taken.

Mark on the diagram all the identical VDI configurations in the system to suit the pressure readings or those of the "homogeneous stretch" appearing in the configuration table for each different composition of working tube.

While recording these details, make a note also of the limits of the "homogeneous stretches" (for slopes) in each 10 metre section and the corresponding water pressures, marking the first ones in the working tube with a coloured GC so that you can easily identify a stretch of tube where the drip rate may need to be adjusted once the system is working.

**field operations**

After marking the "homogeneous stretches" on the diagram (slope) in accordance with the pressure gauge readings, you need to organise the VDI configurations in the working tube. Where the inclination is minimal, simply adjust the insertion of the GC in the tube for each new stretch.

Operations needed to make the working tube functional on a slope:

1) Fit the tube ends marked on the diagram in the working tube, prepare several "homogeneous stretches" with the relevant VDI configurations. Use the valve "V" at the base of the VDI to check whether the actual drip rate meets the required rate.

2) If the delivery rates fail to match the required rates, the GC's need to be extracted/inserted further along those stretches with the most obvious deviations from the required delivery rates when the system is working.

There may be various causes for different drip rates: the VDI's have been assembled too quickly; errors in reading the water pressure on the detection tube; the degree of elasticity of the working tube differs slightly from that of the reference tube "t", meaning that the individual tests on page 36 ed to be repeated.

While this simple hydraulic mechanism (2) lets you correct the most obvious differences in the drip rates in a few "homogeneous stretches", you may get some acceptable changes in the drip rates by adopting a specific diagram. During the many tests carried out on the delivery rate, after transferring the fluid for 15 or 30 seconds into a measuring beaker, you may find, in the case of tubes with a higher than normal flow rate, an unacceptable difference between the drip rates due to hydrodynamic pressures that have been added to the measured hydrostatic pressures once the system starts working. 3) After correcting the most obvious differences in the drip rates, see point 8 on page 48 for details of how to correct these roughly or until the level acceptable for the operator.

**strips - plain**

Draw up the configuration table using:

1) reference tube of minimum elasticity and 60% ultimate elongation, 300 m, with rain water or soft water, with impurities of max 0.08 mm in diameter.
The "homogeneous stretches" in the resulting strips, each with three or more configurations as required, guarantee the unaltered drip rate. Record the water pressure and delivery rate required every 10 metres so that the required delivery rate in the following stretch is unaltered.
2) reference tube of medium elasticity and 110% ultimate elongation with impurities of 0.10 mm and hardness just over 05. g/l. Tube of max length possible during testing fitted with VDI's of the right compound or with a suitable additive to get higher surface slipperiness than that of the prototype (see fig. 37).
Another strip suitable for impurities of 0.20 mm, max length, for harder water (over 1 g/l) than in the previous tube "t".
3) reference tube of high elasticity and 170% ultimate elongation with max length, for impurities of 0.10 mm and soft water, with pressure rates falling within the relevant ranges specified in Table 4.
Another strip for very elastic tubes with 170% ultimate elongation suitable for impurities of 0.20 mm. Record the water pressure and delivery rate required every 10 metres so that the required delivery rate in the following stretch is unaltered, using a suitable additive to correct the surface slipperiness to cope with a salt content of > 1g / 1. You then need to set the number of strips ( plain ) and slipperiness additive required for the best organisation of the irrigation system (see page 46

**delivery rate - plain**

each change in the drip rate means a different strip is needed.

variation in delivery rates - plain

The system described above lets you find the minimum drip rates for a system installed on a plain and for long sections of minimally elastic or stiff IT's. However the tubes could alter the normal delivery rate at the VDI's due to rises/drops in the water pressure, so that the many repeated "minimum cross-sections" can keep the drip rates at long distances within acceptable levels for the crops via reductions in the water pressure.

**deciding on the organisation with any working IT - plain**

In a 100 m length of minimally elastic IT, read the values in the strips or the first reference tube measuring 200-300 m and then use the inventions in the strip to get the same water pressure and delivery rate read at 200 m at the base of the working tube too. This will guarantee the required irrigation performance.

**Practical method for finding the right VDI configuration in a plain and on a slope**

The invention (see fig. 37) is based on an integrated configuration consisting of:

basic configuration: plug "a" + GC (see fig. 38 A or fig. 38), radius of curvature 0.059 mm or 0.629 mm; strengthened configuration: basic + any of the options from Table 5. These configurations can then be adjusted using the fixed accessories (see fig. 41 A) of varying strength and even the extra accessories (see fig. 41 C and 41 C1).

Before using a VDI in a plain or on a slope, the following operations are necessary:

1) Measure the hardness of the water using a "hydrotimeter", but without actually determining its exact content of Ca and mg salts (only precise lab tests can do this - instruments that measure conductance can give you a good rough idea).
2) Use a filter to check that the size of the impurities in the water remains roughly the same over long periods. The VDI's themselves can also be used to do this (see page 55), by checking to see to degree to which they've been obstructed or otherwise after a set period.

3) Take a section of the IT you want to use and attach it to a manifold to check whether the water intake is enough. Similarly, check to see if the water pressure required for the irrigation system is actually achieved by pouring water into a tank and then seeing if the volume obtained in one minute is enough to get suitable irrigation of the crop during the summer in the same period of time.

4) PLAIN (see the ADI system described on page 32) - determine the range of delivery rates needed and use a tube with one of the compositions indicated in the configuration table and of a length equal to or less than that of the reference tube "t" (see page 43).

5) Alternatively, you can use an IT "t" (plain) with constant delivery rates and configure the VDI's as described on page 47.

6) SLOPE - see the example of the IT "t" (slope) for constant delivery rates, suing one of the configurations described on page 46.

You can use VDI configuration type A for both types of installation - in a plain 5) or on a slope 6) - or as described in Tables 2-4 (composition details in the configuration table, together with details of the possible applications of the VDI). However, different configurations not included in the configuration table are still possible.

mixed configuration - type B

7) Using the test on page 130, lines 6-24, assess the effectiveness of the mixed configuration type B. Since this doesn't appear in the configuration table, you'll need to find the exact values for each "homogeneous stretch", just as is necessary with any VDI in an IT of a different composition I.e., not in the configuration table).

8) correcting the delivery rates

If the drip rates differ widely from the required rates, pressure gauges need to be fitted in the two plugs "a" on the VDI's either end of the "homogeneous stretch" so that you can determine the unacceptable variation in the drip rate.

Having compared the actual drip rate within a "homogeneous stretch" with that shown in the configuration table, you may find that you have to adjust the delivery rates within a "homogeneous stretch" including the two VDI's at either end by replacing the spring clip, the seal or even the GC etc., until you get the exact required drip rate.

However, it may be enough just to alter the degree of insertion of the GC's in a "homogeneous stretch", in the right proportion, using the relevant shims in the shim gap shown in fig. 37.

## 69 organisation of a small irrigation plant on a slope

Several connections are required (see fig. 35 A and page 72) between the lengths of manifold "a" available along the most practical slope (see fig. 33) and repeat those shown in fig. 28 with tubes type B. These gradually intersect with "a" at intervals of >100 m and at different angles with the fluid flowing in the opposite direction "b" after passing through the copper rotation bend (tube C).

An equal number of small diameter IT's lead off tube "b" (connected end-to-end) called capillary tubes, in the opposite direction and parallel to tube "a" for a distance of about 30-40 m.

Further down, at the next connection, another tube "b" has the same number of capillaries branching off it for a distance of about 30-40 m.

At the connection shown in fig. 28, you can also fit some horizontal branches for the terraces (see fig. 33) to get the ADI system described on page 155 or IT's that rise or fall slightly, to suit the different slope of each terrace. If you take water from manifold "a" to irrigate crops on a new terrace, you need to readjust the other drip rates. However, the best solution would be to take water from manifold "a" and protect the system from possible drops in the drip rates by using irrigation produced solely on one terrace at a time, one after the other.

An important aspect of the invention requires that water is taken from the manifold for each plain of irrigation and then passed through the heating tanks (see page 56) so that the solar energy panels can gradually increase the temperature of the water in line with the temperature of the air. In such a case, however, you need to guarantee the water pressure needed by the ADI system (see TABLE on page 43) in order to get the right drip rate.

## 70 reasons for a reduction in the cross-section of the small conduit

A reduction in the cross-section of the small conduit in a.p. results from:

- expansion of the inner conduit wall within the concave facets, starting with the reduction of the variable area "x" shown in fig. 18 C (or "y" in fig. 17 C) with minimum insertion of the GC.
- sinking of the convex facets of the GC in the soft inner conduit walls.

The reduction in the cross-section of each small conduit in VDI's in the same IT also depends on certain fixed factors (f) and variable factors (v) such as:

| | | | | |
|---|---|---|---|---|
| degree of insertion of the GC | 1 | v | | |
| diameter (Ø) of the universal hole | 2 | f | or | v* / |
| (closely connected to the degree of elasticity of the IT) | | | | |
| thickness of the inner conduit wall | 3 | f | | |
| elasticity of the inner conduit wall | 4 | f | | |
| and its composition | | | | |
| elasticity of the IT | 5 | f | | |
| thickness of the IT | 6 | f | | |

* Ø This is the IT option offering a reduction in the diameter of the universal hole in order to maintain the required VDI performance when this becomes precarious (see Table 4, page 35, line 24). In other words, when the 7.8 mm universal hole needs to be replaced towards the end of the 4th water pressure range with the 7.7 or 7.6 mm diameter hole.

The cross-section of each small conduit can be further reduced by starting with the detail in fig. 38 A or 38, then using the half-moon sections with 0.59 or 0.629 radius of curvature and finally adopting the maximum reduction possible with depth "p" (see fig. 17 C) tapering towards the knob or by using GC option 3 described on page 39 (see also page 39, line 36), which is far more effective if associated with option 2 in Table 5 (see fig. 43).

In VDI's with plug "a" of the same composition and in the same system, factors 1, 2, 5 and 6 can vary; weather conditions may also require that you change factor 4 or the compound in the plug "a", and even factor 3 in order to reduce the cross-section of the small conduit. To guarantee top performance of the VDI, when deciding on the appropriate configuration you will also need to make sure that factors 5 and 2 are compatible.

Plug "a" can be changed to great advantage using factors 3 and 4, for example (see page 49, elasticity of the inner conduit wall) when you take one of the samples to avoid the unwanted blockage of the small conduits (see page 48, lines 38-39) or when you strengthen the minimum area with another (see page 14, lines 60-64).

**71 tests on the delivery rates of the VDI's in smaller universal holes**

The results of tests conducted on a stiff IT with optional universal holes are shown below:

diameter of universal hole

| mm | 7.5 | 7.6 | 7.7 |
|---|---|---|---|
| 1 Bar | 60 droplets | 48 cc | 150 cc |
| 2 Bar | 70 droplets | 96 cc | 240 cc |
| 2.8 Bar | 140 droplets | 130 cc | 350 cc |

The tests were conducted on a 2.8 mm thick IT with universal holes having walls angled at 5° off the axis of symmetry, thus contributing to a delay, although imperceptible, in the point of maximum reduction in the cross-sections of the small conduits with respect to the curvature "c1" or the MAX arrow in fig. 19.

Particularly slow drip rates were obtained in the VDI inserted in 7.6 and 7.7 mm universal holes, relying on just the use of the tie-coupling (see fig. 41 C) + spring clip (see fig. 41 A).

The VDI shown in fig. 37 and the conduit in fig. 37 A were used for the tests, suitable for use in the 2nd range of water pressures listed in Table 4 (up to 0.7 Bar).

The expansion of the inner conduit wall within the concave facets of the GC and the sinking of the convex facets into this wall become very important when the GC is inserted at more than 14.75 mm (beyond that shown in fig. 20 C; see also fig. 42), producing a very small minimum cross-section due to the use of a stiff IT.

Insertion up to and beyond that shown in fig. 20 C in stiff IT's does, however, become a little difficult if repeated in several VDI's over long periods, as the operator needs to apply a lot of pressure to insert the GC in 7.5 mm universal holes.

The advantageous passive resistance obtained in a.p. is useful in increasing the stability of the GC even over 2.8 Bar.

We have not taken into consideration a 7.8 mm universal hole for the prototype GC .(see fig. 37 A) as this implies a more complex VDI configuration even below 1.5 Bar.

**72 measuring the insertion of the GC**

The axis y-y indicated in the horizontal cross-section of the VDI in fig. 20 B and 20 C passes through the line d-d1 at the edge of the a.p., where both maximum reductions in the cross-section of the small conduits are possible, in line with the two facing concave facets.

The VDI could then be inserted as shown in fig. 20 in a flat wall, such as tube "F" in a tank (see fig. 34), thus simplifying the progress of a.p. in fig. 19, and the 8 small conduits, in varying positions, in line with tne diameter of the IT used.

Axis y-y in fig. 20 B and 20 C is on a perpendicular plane to the axis of symmetry. Consecutive, even reductions are made in the cross-section of the 8 small conduits to the maximum of their reduction detected at the outer edge of the universal hole (cylindrical).

The MAX arrow in the cross-sections (see fig. 19 and 42) indicates the point of maximum projection of the curvature of the IT, corresponding to the maximum insertion of the GC and thus maximum compression of the inner conduit wall, thanks to the action of the convex facets at the point where, with another configuration of the GC, you could get maximum expansion of the inner conduit wall within a concave facet.

If we use an IT with an outside diameter of 14.8 cm ("c4" in fig. 44) and compare this with "c2" with diameter 26.4 mm, there will be a greater reduction in the small conduit due to greater length of movement of the GC (1.45 mm) in IT "c4" compared to "c2" in a prototype VDI (see fig. 37).

You should not start from MAX to measure the insertion of the GC (17 in fig. 19), but normally measure this from axis y2-y2 (see fig. 42) or any other, such as y1-y1 or y3-y3 (see fig. 44) or the most suitable axis in the case of using an IT of a different diameter.

With this invention, you need to consider the insertion at 17 in fig. 19 (less) and "f" in fig. 42 or 17-1, normally measured along the chord of the arc formed by the outer diameter of the IT used, to which an axis is joined (e.g., y2-y2 in fig. 44). This is easily recognised as the reference in order to produce precise insertions of the GC and should be referred to constantly when increasing or decreasing the insertion to alter the configuration of the VDI while organising the new irrigation system.

Axis y2-y2 in fig. 44 coincides with the chord of the arc formed by an IT 26.4 mm in diameter, established within the common limit set by the 5.3 mm diameter of the through-hole of the plug "a", prototype 1 or the prototype shown in fig. 37.

Axis y2-y2 is perpendicular to the axis of symmetry of the through-hole and thus creates a reduction in some cross-sections of the small conduit when the GC is first inserted, already resulting in a minimum reduction in the required delivery rate.

When the GC reaches y2-y2 (see fig. 44) in an IT with an outside diameter of 26.4 mm, minimum initial reductions are already created at 12 (see fig. 19) from the MAX point up to about 70% of the cross-section of the small conduits. L71: axis d-d1 measures 9.75 mm when the GC is inserted as shown in fig. 20 B (see fig. 42 and 43; prototype in fig. 37), with the indication of the insertion in fig. 20 B d-d1 still valid for simple definition.

The same "basic" insertion of 9.75 mm also needs to be considered for any other axis determined as a result of using an IT with another outside diameter (e.g., c1, c3, c4 etc., in fig. 44).

The distances 9.75 mm with insertion d-d1 shown in fig. 20 B and 14.75 mm d-d1 in fig. 20 C for the prototype (see fig. 37) are also shown in fig. 42 and 43 when using an IT with an outside diameter of 13.2 and thickness of 2.4 mm. In all the IT's used, you must calculate the insertions of the GC in order to get the right drip rates for the crop in question, normally between d-d1 in fig. 20 B and above d-d1 in fig. 20 C, also shown at 16 in fig. 37, or, more practically, between the shim gap in fig. 37.

When the distance 9.75 mm (d-d1 in fig. 20 B) collimates with y2-y2 at 16, there are 6.438 mm when using plug "a" type 1 (see fig. 44) and a GC type 1 (see fig. 42), i.e., the prototype in fig. 37.

To facilitate the calculations needed to measure the insertion of the GC, you can round down the length of the arrow "f" in fig. 42 and 44 to 0.25 mm instead of 0.264, as the mean difference between the IT's of varying outside diameters used, as, for instance, shown in fig. 44: diameter c1 = 23.6; f = 0.301 mm; c2 f = 0.268 mm and c3, "f" = 0.223 mm, being a constant that needs to be borne in mind when inserting the GC.

Arrow "f" = 0.25 mm incides by 3.8% on 6.43 mm (GC type 1 in fig. 42 + plug "a" type 1 in fig. 44), representing the greater insertion of the GC required compared to y2-y2, to be counted from MAX and used as a basis for future insertions to get these to correspond to precise delivery rates, each for a specific "homogeneous stretch" (see page 45).

Each indication as to the different insertion of the GC in the prototype (see fig. 37) is always relative to 17/1 = 17 in fig. 19 - "f" in fig. 42, as is also the case in the configuration table on page 161.

**73 concerning the insertion of the GC**

To measure the insertion of the GC with the various prototypes, you need to see the knurled surface in the VDI (see fig. 37) by looking at this from above, through the vertical surface of the outer ring (3.2 mm high). This knurled surface has a millimetre scale (see fig. 17 A) and limits the corresponding checked notch (see GC option 8 in Table 5).

Insertions of the GC based on knurling and notches is less precise than those using shims, which allow for adjustments at 16 in fig. 19 of precise steps of 1/20 mm, but you can also use a slightly smaller shim (e.g., 1/10 mm). 1) in a fixed irrigation system, i.e., using an IT with constant composition and diameter, you can get easy insertion of each GC by resorting to differentiated calibration (option %A in Table 5). This involves just one notch, placed at MAX (see fig. 42) when the GC is extracted.

If the common insertion is d-d1 = 9.75 mm + "f" = 0.25 mm in fig. 20 B plus the greater insertion required at Max, you get a reduction in the required cross-section of the small conduits with this VDI configuration.

Then, if the notch is quickly moved to MAX (see fig. 42 and 43) when the GC is firmly extracted, the teeth D1 and D2 immediately hit against the protrusion (see Table 5) so that the VDI is suited to different "homogeneous stretch", since tube "t" in fig. 19 changes, in order to repeat the required drip rate.

2) systems where the diameter of the tubes keeps changing, but the compound is the same

Let's assume we have a GC inserted in a tube in the same system and still with a diameter of 26.4 mm for the sake of simplicity (see fig. 42).

The insertion of the GC has the aim of getting the right configuration of the VDI in the given "homogeneous stretch", i.e., that found in the configuration table as "strip" and used in the diagram of the system on a slope (see page 46).

Both in the case of the VDI (see fig. 37) and other prototypes, insert the GC by 10 mm from MAX, i.e., d-d1 = 9.75 mm (see fig. 20 B; or 17-1 in fig. 42) + f = 0.25 mm. The reading on the knurled surface (see fig. 37) is 14.54 mm, thus letting you get a "constant" of 4.54 mm.

In the case of extra insertion beyond that d-d1 in fig. 20 B (10 mm) or to switch to a new "homogeneous stretch" using a type of IT included in the configuration table, you must add the "constant" to the various readings. However, the GC can be inserted accurately and quickly using the shims in the shim gap (see fig. 37) to switch to the new "homogeneous stretch" (see page 190, lines 1-3) counting 17/1 = 9.75 mm + 0.2 mm + constant (4.54) and then measuring the useful length needed to form the shims at 16 in fig. 19 and the shim gap in fig. 37.

3) in systems consisting of IT's with constant composition and diameter.

Using the tubes "t" in the table on page 155, or other reference tubes (strips for plain or slope in point 68), you can read the useful distance of insertion of the GC in the configuration table required for the "homogeneous stretch" in question.

Thus, if you find 10 mm at MAX to form a VDI (see fig. 37) with insertion d-d1 as shown in fig. 20 B (the "homogeneous stretch" adopted here for the sake of simplicity), you need to add the 3 mm of lf1 to the 6.43 mm at 16 to get a thickness of 9.43 mm (see also page 53 line 15), for the prototype in fig. 37, to pass in the same way to adding others (those in the configuration table for the relevant GC insertion).

To measure the delivery rate of the VDI's, you need to use a gauge to test the volume of the water passing through the VDI in 10 min/sec or a little more and so discover if this is compatible with the required rate.

using the tie-coupling

If you use the shims, the actual configuration times are cut dramatically. You can get virtually stable delivery rates by adding and removing thin plates of just 1/20 mm to the previous shim.

However, if you have to use the tie-coupling in cases 1), 2) and 3) at point 72 on page 185 above, you need to use the hose clamp at 1.s. (see fig. 41 C) in order to get the required drip rate by accurately unscrewing the body "1" as required.

Rest the pack of shims on the support "a" and push it against the body "1" while unscrewing this and stop as soon as the shims manage to enter "ls" (i.e., the shim gap has increased enough to accept these).

In another solution, press the pack of shims at "a" (see fig. 41 C) with body "1" by screwing this on top, and then suddenly remove the shims at the right moment.

**74 shim pack**

The shims consist of slightly magnetic flexible plates grouped together in a single pack, like a colour sample book.

Each plate is 1/20 mm thick, measures 10x5 cm and can be added to the others to create a single shim to be inserted in the shim gap (see fig. 37). Take hold of the knob and push this against a suitable number of shims held between your fingers so that the check ring of the GC stops at the required point, i.e., at the moment when you can quickly extract them and so go on to configuring the next VDI.

Each plate is marked with a number and its thickness when added to the others, as well as that of the entire pack of shims still to be used.

The pack can thus be thicker than the actual shim gap of the prototype (see fig. 37) in order to adapt itself to the shim gap of another prototype.

a) To be established in the configuration table:

The insertion calculated as 9.95 mm (17-1 in fig. 42) to be produced in line with the indications in diagram (slope) and diameter considered as 9.75 mm + 0.20 mm in order to get the thickness 9.23 mm (9.43-0.20) at the shim gap for the VDI shown in fig. 37.

In the case of an IT with a composition appearing in the configuration table, the following values should be noted for the 1st "homogeneous stretch" beyond d-d1 in fig. 20 B: 16 + 1f1 = a shim gap (see fig. 37) of 9.23 mm and 9.95 mm (9.75 + 0.20) at 17-1, close to the corresponding water pressure values.

b) In the case of an IT with a different composition, even if not included in the configuration table, the shim is completed in the shim gap (see fig. 37)

using insertion 17-1 of the GC, determined through testing (see page 36) for the same "homogeneous stretch", thus getting an increase or reduction the shim needed in the shim gap (see fig. 37) to move onto the next "homogeneous stretch".

c) correcting the configuration of the VDI's in the case of 7.55, 7.65 and 7.75 mm universal holes (see page 161).

These "samples" are indicated in at least one configuration appearing in the configuration table with the necessary insertions for a GC, also including the options in option 5.

**75 Comments on fig. 38, 39, 40, 41 and 42**

Usual compression of the PVC prototype plug "a" with Shore 70 hardness and 1.19 g/cm$^3$ density.

Fig. 40 C shows the original thickness of the wall of the plug "a" type 1 (see fig. 44) in cross-section (1.7 mm). If placed in a stiff IT with a 7.8 mm universal hole, the thickness goes from being 1.7 mm (see cross-section A-A) to about 1.9 mm in fig. 40 D, mean value, with a slight imprecision in the circularity of the through-hole.

Both the greater thickness of the inner conduit wall and the imprecision in the inner curvature in fig. 40 D indicate the acceptable degree of elasticity of the PVC plug "a", meaning that the VDI (see prototype in fig. 37) still works well at up to 3.5 Bar.

The compressed inner conduit wall in fig. 40 B has seen its thickness drop in a specific VDI configuration to 1.4 mm and to 1.36 mm in another (see fig. 40 A) when the GC is inserted (see d-d1 in fig. 20 C and fig. 42), but its thickness can still be reduced further by inserting the GC type 2 (see fig. 43) up to 18.4 mm.

**76 fig. 37, 42, 43 and 44 - a few notes on the results of certain GC insertions in view of the degree of elasticity of the IT's used.**

Fig. 44 shows the two half-plugs "a" to be used with the GC type 1 (see fig. 42) and type 2 (see fig. 43).

The prototype 1 is a VDI designed to operate in IT's of identical thickness (2.4 mm), even if the degree of elasticity can vary a little.

The inside radius of an IT measuring 21.60 mm is shown, although there is no need to use only UNI tubes, so that operators can also get interesting irrigation levels using the available tubes in the 2 prototypes shown in fig. 44.

Curvatures C1, C2 and C3 in fig. 44 are IT's with the same inside diameter, but of different thickness. When the GC (17-1 in fig. 42) is inserted to the same degree, in curvature C3 (5 mm thick), the faceted section 14 of the GC is inserted to a greater degree in the a.p. and there is a greater shim gap (see fig.. 37). With insertion of GC type 1 (see fig. 42), when the cathetus "a" collimates with the axis y2-y2 of the plug "a" type 1, provided both are placed in a stiff tube, you can get an interesting reduction in the delivery rate and the insertion is not difficult. However, when the cathetus "b" collimates with y2-y2, there is a small reduction in the delivery rate using an IT of medium elasticity (ultimate elongation under 120%).

To reduce the delivery rate even further in very elastic tubes (and tubes with medium elasticity over 120%), you need to insert the GC to at least 18.4 mm and use GC type 2 (see prototype fig. 43), fitted with option 3 in Table 5 in the stretch "1" of a constant diameter. This needs to be weighted at "p" in fig. 17 C and 18 C (see also fig. 38 C) to reflect the impurity and harness of the water, thus obtaining an interesting reduction in the drip rate when the GC is inserted to 18.4 mm.

Insertion of 18.4 mm or more is required when the IT's soften too much as a result of the hot summer sun.

Fig. 43 shows the three degrees of weighted GC insertion: cathetus a for stiff tubes, cathetus b for medium elastic tubes with ultimate elongation of up to 120% and "distance 18.40" for medium elastic tubes with ultimate elongation over 120% or very elastic tubes.

**77 prototype VDI type 1 with plug "a" type 1 (see fig. 44) + GC type 1 (see fig. 42)**

VDI type 1 can be used in IT's with minimum and medium elasticity (see page 37).

In tubes with ultimate elongation of 150% working at 2 Bar, you can use just the extending tab with a reinforcement ring (see fig. 25 C), as you cannot depend on just the seal (see fig. 25 B) which, if applied in the thickness of about 1.5 mm in an IT some 2.4 mm thick, would not allow for the spring clip (see fig. 41 A) to sit properly in F1 (see fig. 42) when the cathetus "a" lies over axis y2-y2, nor in F2 when cathetus "b" lies over axis y2-y2, due to the suppression of the space needed for the formation of 10 in fig. 37.

This space 10 requires just 2.4 mm, more than enough for the insertion of the spring clips with a ring measuring 1.5 mm in diameter or more, or those of the prototype (see fig. 37) placed in small diameter tubes, whose curvature has reduced the length of the conduit 13 (see fig. 19) excessively. However, the same could be made from a ring with a diameter of more than 2.7 mm if using IT's with an inner radius of 10.8 mm and external radius of 13.2 mm.

No spring clips can be used with the prototype 1 if fitted with an IT having curvature c4 (see fig. 44), an inside diameter of 10 mm and thickness 2.4 mm.

Cathetus "b" of the VDI type 1 can lie over axis y2-y2 (see fig. 44) without plugging lf1. This same prototype could be used with the spring clip in fig. 41 A in IT's with a thickness of just over 2.4 mm on the condition that they have the right diameter.

In tubes being roughly 1 mm thick and with an inside diameter of 10.8 mm, the cathetus "a" of the prototype GC type 1 (see fig. 42) lies over y1-y1 in the plug "a" type 1 (see fig. 449, without actually plugging lf1. The VDI type 1 in fig. 37 is thus suitable for use in metal tubes 1-2.4 mm thick. Cathetus "b". lies over y2-y2 without plugging lf1 and so is suitable for tubes with medium elasticity with ultimate elongation up to 120% and being 2.4 mm thick, as well as tubes with ultimate elongation over 120% as the spring clips and tie-coupling can be used to advantage here.

Plug "a" type 1 can also be used with GC type 2 (see fig. 43) to complete the insertion at 18.4 mm with respect to axis y1-y1, and thus to advantage in a very elastic braided tube just 1 mm thick, doing away with the need to use the seal in fig. 25 B for several "homogeneous stretches" replacing its function with the same GC type 2 inserted to 18.4 mm to create greater pressure on the walls of the universal hole at AR1 (see page 7) and to strengthen the water-tightness of the VDI, even if only slightly.

The VDI type 1 also shown during the tests (see page 50) that there are no signs of leakage from AR1 when working at about 3 Bar in a slightly elastic tube with optional universal holes.

**78 VDI prototype 2 (see fig. 44)**

This prototype 2 consists of a plug "a" type 2 (see fig. 44) + GC type 2 (see fig. 43) and is suitable for use in stiff tubes of any minimum thickness. The fact that cathetus "a" exceeds axis y1-y1 and that cathetus "b" can be brought close to this when the VDI is working means it is only suitable for "medium elastic" tubes 1 mm thick.

VDI type 2 is also suitable for use in very elastic tubes with a thickness of just over 3.5 mm as the distance 18.4 mm almost reaches the respective reference axis y-y.

You can still place the spring clips and the tie-coupling correctly with a 5 mm thick IT with an inside diameter of 10.8 mm and a plug "a" fitted with a 1.5 mm thick seal (see fig. 25 B). If only the extending tab (see fig. 25 C) is used, excluding the seal, you can use IT's up to about 7 mm thick, still counting on the spring clip (see fig. 41 A) + tie-coupling (see fig. 41 C).

In stretch 1 with a constant diameter as shown in fig. 43 and using more elastic IT's than foreseen, you can use a decreasing depth "p" as GC option 3 in **Table** 5.

**79 acceptable levels of impurity in the water - irrigation tests - treatment of the water for use of the invention**

test - blockage of minimum cross-section.

If you feel that it's probable that the small conduits will become blocked due to impurities in the water of varying nature, these need to be filtered in a suitable bed of quartz sand and then a test lasting a week needs to be conducted, using up to thirty VDI's as a screen, using shims to get the "minimum cross-sections" required in the future plant.

If the drip rate slows down in any of the VDI's, the water needs to be filtered more, by using a deeper bed of sand (perhaps with finer sand) capable of retaining the smaller mineral impurities and also filtering the water more often in sieves, even using fine-packed filters to trap organic impurities.

If, however, the water is found to be too hard, you will need to use the low-cost devices that exploit internal magnetic fields to modify the calcium carbonate by changing its chemical structure to form crystals of aragonite, which doesn't stick to wet walls and is easily washed away.

Continued and steady conversion of the bicarbonate into aragonite takes a long time before you can prove that it keeps the drip rate unaltered in the long term, i.e., without the slightest trace of scaling on the wet surfaces of the VDI.

**80 problems when choosing the irrigation water for slopes**

If you use hard water and System components such as VDI's, valves "V", plugs "F" (see fig. 25 H), nipples, IT's with an additive to increase the slipperiness of the surface or any other component needed to dispose of the calcium salts, you risk being faced with far greater costs. Once again, it's far better to use low-cost magnetic field equipment to convert the calcium carbonate.

It's inevitable that the greater surface slipperiness of the VDI's obtained with a suitable chemical compound is destined to become consumed until the user of the irrigation system is forced to do something about the build-up of scaling in the small conduits. Initially seen as a whitish matt coating in transparent plugs "a", as time goes by, you find that the drip rates gradually drop.

To avoid such risks in an irrigation system on a mountain slope and keep maintenance costs down (which would eventually offset the advantages of the System), you can use the abundant masses of snow and stream water in this important application, provided they have picked up only small amounts of calcium salts as they flow down the mountain.

To cut the length of the interval between glacier ice thawing and its being captured, and so reduce the collection of salts as far as possible, you can take the water at one or two points in certain areas where you find there is a good flow of the water after the latest thaw.

Such efforts also imply frequent analysis of the water in each season to be sure the water is soft at each intake before sending this to a catchment basin or several tanks to act as an extra supply from late Spring until the early and more consistent snowfalls in Autumn. This water should be mixed with stream water, making sure that no signs of scaling are found in the small conduits of VDI's in the long term.

Only after lengthy trials, yet to be conducted, could you establish the minimum content of calcium salts in a certain type of water and so avoid the possibility of slower drip rates in the VDI's in the future.

A reduction in the drip rate can, of course, occur when the mixture of the water is not correct, or if the magnetic field devices used in the field have failed to convert the bicarbonates into aragonite properly in the presence of ferrite, often found in stream water and thus quickly annulling the conversion process.

If you use deferizzation systems to stabilise the performance of the magnetic field devices, you may find that this is not actually the case. There are no results of long-term tests to prove that the operation of the invention remains unaltered in the long term when used with all the types of irrigation water normally used in the mountains.

Without questioning the effectiveness of the costly water sweeteners that need regular and costly servicing, it is interesting to be able to rely on the thawing of the snow, even if caused artificially during winter, to become an extra source of water in late Spring.

The removal of scaling from many thousands of VDI's would be a very difficult enterprise and should be avoided at all costs (just think of the time needed to reset all the VDI's in a plant).

More generalised cleaning of VDI's could consist in removing the GC's and then the plugs "a" from the IT's, then placing these together with in fine sand in a washing machine, adding other solutions to remove the scale as required.

If used with water that's too hard (currently indicated by the level of calcium carbonate just below 1 g/l), it's a good idea to avoid any slow-down in the drip rate by using a chemical compound to increase the surface slipperiness of the PVC or silicon plug "a" and use this with a GC of suitable composition.

If using water from the manifold to cover the significant drops in altitude from the snow level to the catchment basin and from here to the crop fields, exploiting the water in mountain streams at the same time with at least two small turbines at the most profitable points, you can often generate an interesting amount of electricity, enough to heat the irrigation water for the greenhouse and, at the same time, help form the artificial environment.

**81 summary description of the thermal tank**

This is a tank capable of holding a greater volume of water than that needed each day for the crops in the summer months and is built with a strong steel frame with thick sheet metal walls or prestressed reinforced cement panels. The irrigation water is heated inside this by exploiting renewable energy. Several thermal tanks taking water from the same catchment basin could heat the daily amounts of water needed for one or more hectares, benefiting from the large amounts of electricity produced by windmills on the crest of the mountain. If there are no such windmills as the wind is too weak (or non-existent) to generate the energy, small turbines can be used to make up for drops in the voltage in the heating cables and to satisfy other needs for electricity for other greenhouse activities.
By adjusting the intensity of the electricity running through the heating cables at the bottom of each thermal tank, you can speed up the heating of cold water from the manifold, having taken these from a higher altitude than the catchment area. Solar panels with a compensation coil can also be used to correct drops in the energy supply and so heat the water.

**82 a few ways to stabilise the temperature of the water in the IT's**

1) You can start by stabilising the temperature of the water in IT's plugged with a stopper at one end (see fig. 2) by using heating cables running along these at set lengths and so adjust the temperature of the fluid, now running at a slower speed, to get delivery at the right temperature from the VDI's.
2) The water is made to circulate in the IT's fitted with lengths of heating cables. The heat created can be read on thermometers inserted in several plugs "a"; the electric intensity adjusted using a transformer to produce the required temperature of the water.
3) This is an irrigation plant on a plain or negligible slope, consisting of many parallel IT's of the same length and connected at regular intervals to those above where these intersect. The heated water circulates in the latter and is released into the former through multiple capillary tubes (see fig. 27) that correct the delivery rate according to a repeated modulus (na, nd, ne, nb).

Heating cables lie on top of the delivery tubes. The electric intensity of the cables can be adjusted to suit the fixed delivery rate at the VDI's and the ADI system pressure levels (see page 43) to get the required temperature read on the mercury thermometers inserted in the plugs "a" in the tubes below.
To cut costs, you can used the "totally stabilised" VDI's (see page 40) with low delivery rates and small diameter tubes to get energy savings compared to the larger diameter tubes, requiring the circulation of excessive amounts of water for irrigation purposes (though necessary to heat the greenhouse environment).

```
                P

     ------+-na ------------------------------+-nd-----

     ------+-nb------------------------------+-ne------

     ------+-nc------------------------------+-nf-----
                    n = connection
                     fig. 22 A

                                              pl
```

**83 AGRONOMIC AIMS OF THE INVENTION**

advantages of using pre-heated irrigation water

When the soil cools substantially, the membranes of the roots change to absorb less water

a) Drips from VDI's at an agronomic temperature in the field, or in a greenhouse with insufficient heating, can avoid damage to the crops caused by very low seasonal temperatures, allowing for greater absorption of the water and so promote growth in winter vegetables, already in decline if the roots are at a temperature of below 10°C.

b) The temperature of the irrigation water must at least be close to that of the vegetation and the layer of soil around the root system, however tepid irrigation water can offer acclimatized irrigation (i.e., as though the air temperature has risen).

According to the most recent agronomic research, the water should be considered as being cold if the temperature is 3/4 below that of the air. Cold irrigation water can lead to physiological dysfunction in crops, especially if vegetable or fruit crops, as these are delicate species and so surely benefit more from droplet irrigation with pre-heated water.

**84 preparing the soil**

The soil to be irrigated by the VDI's may require a special type of preparation for sowing, with parallel furrows filled with worked earth to form tracks along which the IT's can be laid. These furrows, about 50 to 100 cm apart or more, can also contribute to great savings in energy in terms of limited subsoiling, usually needed, and obtained using special devices on the motorised hoes that can also be adapted to motorised hoes used to make a furrow with a wide enough cross-section to contain the entire root system of the species most frequently grown.

Having set the special hoe device to the right width, you then need to consider future transformations, thus planning the formation of a trapezoid furrow (20-30 cm deep; smaller base 20 cm; larger base 25 cm) that can then be enlarged during earthing up.

Having prepared the soil for sowing, the IT's need to be laid in the ground and fixed with a fork (see fig. 21 F) or hung overhead (see fig. 21 G or even higher) to get the rain effect. The seeds can now be sown using a special instrument at the points previously wetted by the VDI's, thus guaranteeing accurate irrigation of the future root systems.

The uncultivated areas between each pair of IT's is about a metre wide. Weeds may grow here unless you often drive mechanical means at least 20 cm from the IT's, letting you cut the weeds quickly to be used for green-manure.

**85 energy research for acclimatized irrigation of crops in a plain using the invention**

In a plain, you can sometimes use the hydrodynamic energy of a course of water; the speed of the wind is generally less here than the minimum speed required to generate energy using low energy windmills and so these need to be backed up by several accumulators to make up for drops in the wind speed.

The reduced drip rates produced using the VDI's can be heated using minimum quantities of electricity, but this still needs to be organised carefully (see point 82 on page 203) to get a constant heat throughout the irrigation system. You could first try raising the optimal temperature of the water through simple solar irradiation, storing the volumes of irrigation water required under glass in a greenhouse (kept clear with the aid of special demisting devices).

In a plot of land in a plain measuring about 2000 m$^2$, you may need up to 3750 l/h to supply its 7,500 VDI's and so electricity generators (using photovoltaic + wind energy) will be needed to repeat the acclimatized irrigation the same day.

Using common water panel with a catchment surface of 2 m$^2$, with the vector fluid circulating in this taking the heat to the boiler, you can heat some 250 litres of water twice a day to a temperature of 30°C. Four panels of the same type can both heat the irrigation water and form an artificial environment for a greenhouse measuring 1000 m$^2$, where its 1250 VDI's deliver 0.35 l/h, benefiting the environment of the greenhouse at the same time.

The task of raising the reduced temperature of the drip rates is also much easier in smaller plots, as you only have to add one or two solar panels (and possibly used a low energy windmill). However, in large greenhouses in a plain, you need to rely on the efficacy of high energy windmills.

Each farmer should weigh up the pros and cons of purchasing the equipment needed to get acclimatized irrigation, by first carefully assessing whether he can thus get higher crop quality and yields from his land.

Also the ripening of the fruit at the right moment can be a good reason for accepting the full costs of acclimatized irrigation, deriving company profitability from the overall "crop advantage".

To establish whether or not sound advantages are possible for a given crop, all you need do is carry out some simple tests (described below) to ascertain just how much water you can save and whether it's worth having an acclimatized irrigation system, with the water at the right temperature and exploiting renewable sources of energy.

**86 Parallel tests to identify the crop advantages**

The tests can be extended until the fruit are ripe, but should also cover other periods of particular interest for agronomists.
Test 1 - at normal irrigation water temperature 3/4 below that of the air temperature, or in the closest source.
Set up 10 VDI's with 10 different weighted drip rates per species and observe which delivery rate produces the best "crop advantage" for the development of the crop during the various stages, comparing the natural climate with the artificial greenhouse environment.

Test 2 - several agronomic temperatures

To help identify better the crop advantage possible with the water at a temperature 3/4 above that of the seasonal air temperature.
This test can be conducted at the same time as Test 1 above, using different IT's but with the same drip rates as before.
At least two different IT's are thus used to conduct Tests 1 and 2, under the same environmental conditions, giving one of these a weighted water temperature. Several tubes could be used for Test 2, with different temperatures in each, read on the thermometers inserted in plugs "a", to find which drip rate and which temperature of the water offers the best "crop advantage" once the fruit has ripened.
Finally, in this series of tests, you can find both the temperature and the drip rate needed to repeat the "crop advantage", in terms of the quality and weight of the fruit, and the organoleptic properties. You can also get a good approximation of the ripening period of the fruit.

Test 3 - alternating droplet irrigation (see page 32)

This test lets you extend the research on the basis of the "crop advantage" obtained after Test 1, putting aside the idea of heating the irrigation water due to the unwelcome costs incurred when buying electricity generators, batteries, inverters, heating cables, not to mention the additional labour costs, and the more complex organisation of the irrigation system. This offers a different solution for acclimatized irrigation in view of the encouraging crop advantages (in other tests or during cultivation) such as the quality and weight of the fruit and organoleptic properties, as well as the ability to make accurate forecasts of the ripening period of the fruit.

**methods of comparison**

With Test 3, the farmer becomes even more like a scientific researcher, identifying the best temperature of the irrigation water, the best drip rate and whatever other data are needed for each crop.
In Test 3 (ADI system on page 32), two IT's are used, each given different irrigation times (type 1 or 2) and pauses (types b and 1), but with the same volume of daily irrigation of the same crop. If need be, this additional test lets you find the maximum savings in water with an even less frequent drip rate (irrigation type 2, see page 32) or those rhythms that may offer further "crop advantages" as shown during Tests 1 and 2 above.
Thus, in Test 3 you can decide whether to carry out acclimatized irrigation or irrigate with the water at the temperature in Test 1. You need to record the validity of each parameter in order to compare this with that obtained in another seasonal test later on using the "comparison technique" right from the start, based on a concrete agronomic basis.

**87 ample agronomic research**

In addition to the tests carried out using several different IT's, temperatures and drip rates, the changes shown on page 33 , the assessments and operations on page 33 favouring alternating droplet irrigation to get the advantages found in Test 3, you also need to fertilise the crops well at regular intervals, having first found the actual fertilising requirements for the area concerned.
The fertiliser should be added in the trapezoid furrow, as recommended by experts or by doing it yourself, having first consulted the usual specialised information on this matter, to give the soil the missing nutritional elements. These include:

nitrogen, phosphorus anhydride, potassium, lime; nitrogen mineral fertilizers; phosphate, potassium, lime, animal and mixed minerals; manure, peat or organic matter; green manure, and so on.

The farmer needing to fertilise his crops should also consider the following 4 known rules of fertilisation:

- less production with greater doses;
- the maximum (when you exceed the maximum amount for each fertiliser, you get a drop in the yield and worse quality);
- dominance (which nutritional element is most useful for the plant);
- the minimum (or production regulated by the element that is found in relatively low quantities in the soil).

Thus, just as the farmer had to be careful in assessing the effects of irrigation of the plants following sowing, sprouting and initial ripening of the fruit during tests 1, 2 and 3, the farmer also needs to carefully dose the missing nutritional elements so that he can then compare the quantity and quality of the final harvest with the results obtained during the previous tests or harvests.

**88 notes on results obtained with the VDI**

The VDI has an important role to play in the many tests mentioned above, the reasons being:

1. It helps determine the minimum daily irrigation needed for the plant ( Tests 1,2 and 3).
2. It helps you find the exact volume of daily irrigation needed for each crop on the basis of the "crop advantages" obtained (the weight and quality of the fruit, its look, etc.), in other words, after Tests 1, 2 and 3. After Test 3 you can discover just how effective the acclimatized irrigation really is.
3. The VDI is also helpful in establishing via Tests 1, 2 and 3 above whether it's worth incurring the extra cost of equipment and machinery to raise the temperature of the irrigation water using renewable energy.

**89 other advantages of using the VDI**

1. It cuts the risk of wasting water in drought-stricken areas, while still helping keep normal yield quality and quantity.
2. It speeds up the development of the plant with a minimum rise or fall in irrigation to suit what can be deduced from the results of Tests 1 and 2.
3. It increases the quality of the fruitage, while also removing the need to use plant pharmaceuticals and pesticides, making for great advantages in farmlands that have been subject to prolonged and ill-judged aggression. **90**

**savings in energy with the invention**

1. Compared to other droplet irrigation systems, the VDI makes it easier to heat only the exact hourly volumes of pre-heated irrigation water required by the crops and at the required temperature, normally using low hourly quantities of electricity and which can often be obtained by exploiting just renewable sources of energy.
2. To irrigate partially tilled soils with the VDI, you can get energy savings thanks to limited linear break-up of the ground, by tilling only the areas where this is strictly necessary and so not prejudice the better development of the plant.

**91 advantages in the greenhouse**

1. The VDI irrigates moderately, without suffocating the roots (too much water produces a lack of oxygen and thus leads to the death of part of the roots. This results in their cells offering a foothold for disease-carrying organisms, which can spread more rapidly in greenhouses and pose a greater risk for the health of the crops).
2. For the above reasons, the VDI means less recourse to pesticides and thus a better chemical state of the soil in the greenhouse.
3. The VDI produces a smaller concentration of water evaporation due to its minimum delivery rates, thus meaning less condensation and greater transparency of the glass, and hence less dispersion of heat from the greenhouse.
4. The use of the invention often means there is no need to build special draining systems for percolating irrigation water. **92**

**means and criteria for the System hydraulic connections function of plug E**

Connection between 2 IT's (see fig. 21 A and 21 A1) + capillary tube (see fig. 21 B).

Coupling for capillary connection (see fig. 21 E).

Assuming that plug "E" consists of 2 plugs "a" type 2 (see fig. 44) with 2 opposing pressure rings and a membrane (see fig. 21 D), to be removed on the first connection of the type shown in fig. 21 A or 21 C, 21 A1, 21 B or 21 E. All hydraulic operations required for the System can be done without the need for conventional plumber's tools and so almost always means you don't actually need to call on the services of a plumber.

Plug "E" lets you make quick connections between the tubes of various composition or between a metal pipe and another elastic tube (see fig. 21 C and 21 A1). Plug "E" is also used to make "elastic bends" in the System (see page 61) and acts as a good coupling for connecting capillaries to other capillaries quickly and safely (see fig. 21 E).

Steel spring clips type A or B (see fig. 41 A) are used with the plug "E" in the connections shown in fig. 21 C. These clips need to be tightened as appropriate to stabilise the two pressure rings of plug "E" correctly in the IT's (see point c) on page 3).

The water-tightness of the connection shown in fig. 21 C can be strengthened with the application of the seals shown in fig. 25 B, of suitable thickness, which make the hollow shaft of plug "E" enter further into each universal hole and so compress the AR1 (see page 7) further in both cases.

If you run short of capillary tubes, you can use plug "E" to make any length of IT available act as a capillary tube. In this case, an elastic IT type 2 (see fig. 21 A1) should be plugged with a stopper and then connected at short intervals with several other plugs "E" to tube 1 supplying the necessary flow of water.

To increase the flow of water in the connection shown in fig. 21 A1 between perpendicular tubes, where one doesn't have the right degree of elasticity, instead of trying to bend this with difficulty to make it pass over the other, it's better to use a series of connections (see fig. 21 C) in a short stretch of tube: a third tube "C" is placed between the two tubes to create the connection shown in fig. 28.

**93 elastic bend**

After bending the tube "C" (see fig. 28) without this causing too much reduction in the cross-section of the elbow, you can arrange this to become an "elastic bend" by using several plugs "E" to create multiple connections (see fig. 21 C) between two stiff tubes or tubes with insufficient degrees of elasticity.

In the type of connection shown in fig. 21 C, give plug "E" an extending tab (see fig. 25 C), a seal of suitable thickness (see fig. 25 B) for an "elastic bend" ("C" in fig. 25 B) based on a medium elastic tube with just over 120% ultimate elongation that's been plugged with a stopper at the end as shown in fig. 35 to get water-tightness up to about 2 Bar.

Plugs "E" are inserted at intervals of about 4 cm in the suspended lengths ("s1" and s2"). A spacer (see fig. 41 F) is then added to one in every three plugs "E" placed between the bend "C" and each of the two tubes shown in fig. 28. A hose clamp is then used to tighten everything (see fig. 41 G), taking care not to deform the elastic tube too much.

Each system must have several "elastic bends" for the various types of connection needed, using IT's of varying length, diameter and thickness, provided they are elastic enough to be bent at 90°. They then need to be fitted with several universal holes in order to match the number of connections in "E" (see fig. 21 C) as required.

If the elbow is too tight in an "elastic bend" (see fig. 28) at 90°, you need to use the required number of hose clamps to secure a short stretch of thin rolled, folded and welded copper sheet inside this.

The larger plug "E1" (see fig. 25 H) can replace the «sample» plug "E" to create an "elastic bend", as this is suitable for multiple connections of the type shown in fig. 21 C, but requires universal holes 14 mm in diameter.

elastic bend with plug "E1"

Plug "E1" is connected to another plug "E1" by means of a cylindrical hollow element more than 5.5 cm in length inserted in the through-hole in each plug "E1" until it hits against the respective protrusions "P" (see fig. 25 H). The water-tightness of the two joins can be strengthened with the options for plug "a" listed in Table 5.

**94 Connections between capillary tubes (see fig.21 E) with plugs "E" and "E2" (see Table 6)**

Only after removing the membrane from the plug "E" can you use this as a coupling for capillaries. The System hydraulic connections allow for fast connections between distant tubes, requiring several unions between the lengths of capillary tube to hand.

Capillary tubes with an inside diameter of just 3.5 mm can be inserted in the plug "E", or of another diameter to suit the functioning of VDI's in small family irrigation systems

To make the connection shown in fig. 21 E with coupling "E", the shaft needs to be secured using two very strong steel spring clips (see fig. 41 A) capable of protecting both the capillary tubes from the risk of coming away accidentally.

Plug "E" (see fig. 21 E) again acts a stable coupling in suspended connections of the capillary tubes (see fig. 21 G), with two hose clamps (see fig. 41 D) tightly secured on the hollow shaft to hold these in place as the tubes are under a certain amount of pressure as a result of their weight.

Fig. 21 F shows a fork fixed in the ground, after passing through the knot made with a capillary tube just before being inserted in plug "E". This fork (see fig. 21 F) blocks the capillary tube with its knot to stop it from being extracted (see fig. 21 E) either as a result of its own weight or minimal accidental tears.

**95 application of plug "F" (see fig. 25 H)**

**Figures:**

22 A - connection between parallel IT's using the nipples
22 B - connection between 2 distant IT's using a threaded capillary tube

The system includes plugs "F" or "F1" (see Table 6) that act as 90° T's (see fig. 26) with an octagonal screw already inserted. This screw should be removed when you want to make a connection, either by screwing in a threaded capillary tube, valve "V" (see fig. 32), a nipple (see fig. 22) or other in its place.

Plugs "F" and "F1" differ from plugs "E" and "E1" (see fig. 25 H), though similar, as they have a threaded through-hole.

Fig. 25 A, 25 B, 25 C and 25 D show the options possible for plug "a" and these can also be used with the other types of plug or T in the System. These include pressure rings with extending tab, seals, reinforcement rings and protrusions.

The four construction features mentioned above improve the water-tightness when used singularly. All should be used in a T, however, when the IT is more elastic than necessary and so has led to a leak or greater loss from ARI (see 7 ).

Plug "F" can cause wear, leading to a reduction in water-tightness, due to excessive penetration of the hard edges of the universal hole in the hollow shaft, especially in view of the high levels of compression at e1-f1 in fig. 25 H created by the nipple as this advances.

In such a case of shear, plug "F" needs to be made from a very strong compound (polyamide 6/nylon or polytetrafluoroethylene/teflon), while also offering the right amount of surface slipperiness in order to prevent the formation of scaling in the long term.

Without excessive loss in its initial bending strength, plug "f" must also ensure that the pressure ring continues to adhere to the pressure area (see fig. 36) in the long term in order to guarantee water-tightness here.

To insert plug "F" fully in the IT, after placing this at a slight angle in the universal hole, place a short screwdriver in its through-hole and then push it with the flat part of the handle (see fig. 3 C) and turn until it enters the universal hole. This is made easier if you squeeze its hollow shaft.

Elastic seals (see fig. 25 B) of an increasing thickness to suit the rise in water pressure and the increase in the elasticity of the IT's need to be added to plug "F" (see fig. 22 A, 22, B, 25 A, 26, 26 A, 27, 28, 29, 30, 31, 32, 34 and 35 A).

The seal (see fig. 25 B and the prototype in fig. 25 G) acts like a suction cap on the pressure area (see fig. 36), as does the pressure ring with an extending tab, though the former must have the same degree of elasticity to couple correctly with the other.

The seal is placed at the base of the tab "e" (see fig. 25 A) and must be pushed until it passes the other end of this. Then push it until it adheres firmly to the hollow shaft of the plug "F" (e1-e2 in fig. 25 D).

how to make the connections (see fig. 22 A and 22 B)

Fig. 22 A shows two parallel IT's close to each other, made from metal pipe or minimal elastic tubes and connected by a nipple. When the IT's are far apart (see fig. 22 B), a capillary tube must be screwed into the corresponding T's ("F" in fig. 25 H).

The connection shown in fig. 22 A can be reproduced several times at short intervals between IT's of different diameters and can thus increase the water pressure between them as required. Seals G1 and G2 are then inserted against the nut "d" in each nipple (see fig. 22 A) to prevent leakage from the nut screw.

To produce the universal holes needed to make multiple connections (see fig. 22 A), you need to use the flexible mask (see fig. 23) to trace indelible holes with a pencil carefully. These circles are later used to make the universal holes at precise intervals.

Universal holes can also be made closer together, provided you can still screw the nipples in easily with a simple screwdriver, in a consecutive manner from start to finish and vice-versa until they are all tightened to the same degree.

When the IT to be connected as in fig. 22 A is a large manifold and the length of the shaft of the plug "F" is too short to cross its full thickness, you need to use plug "F1" (see fig. 25 H) instead. This is longer than plug "F" and should be used with a nipple with a longer hollow screw to guarantee compression of both the protrusions "P" (see fig. 25 H).

The coupling "F2" in fig. 25 H is used to connect threaded capillary tubes. See Table 7 for details of its dimensions and technical features.

Plugs "F", "F1" and "F2" (see Table 7) with a through-hole of 8 mm in diameter let you screw in nylon or copper capillary tubes with an inside diameter of roughly 5.8 mm.

The larger universal holes (14 mm in diameter) needed for T's "F", "F1" and "E1" are made in IT's with an inside diameter of 30-35 mm to avoid unwanted loss resistance (this is the case if the holes are made in a smaller diameter tube), as a result of the large size of the pressure ring and seal. A small diameter tube requiring larger T's should be connected with smaller T's for a short stretch (see page 63,line 50) to another tube 1-2 metres in length with an inside diameter of 30-35 mm, which can take the larger T's without excessive loss resistance (see fig. 25 and Table 7). This tube can then be connected using larger nipples to other larger T's in another identical tube or one with a bigger diameter (see fig. 22 A and 22 B).

## 96 copper bend

When the water pressure exceeds 3 Bar, only metal pipes can be used to make connections (see fig. 28), using a bend made from copper - tube C - bent at 90°.

The usual connections (see fig. 22 A) are used with this bend, with the nipples screwed between each pair of plugs "F" (see fig. 25 H) or "F1".

Any short copper pipe of suitable diameter can be bent with a blowtorch to get a perfect elbow. Make the required number of 14 mm universal holes in this and then plug with a stopper at the ends as shown in fig. 35.

To guarantee the water-tightness of the system, you often have to adopt plugs "F" (see fig. 25 H) with the options in Table 5 inserted in the tubes with their octagonal headed screws (see fig. 26) screwed tight until such time that the connections shown in fig. 22 A and 22 B may be needed.

## spacers

To stabilise the connection between the tubes and the "copper bend", place the spacers in fig, 41 F along the overlying lengths (s1 and s2 in fig. 28) and secure as shown in fig. 41 G. These bends can be used to get specific loss resistance in the connected tube ("b" in fig. 28) by activating a weighted number of nipples along s1 and s2.

See page 69 escription of the connection (see fig. 28); this uses the same components as that in fig. 25.

## other series of T's not included in Table 7

Several series of T's ("F", "F1" and "E1") may be required, with a diameter smaller or bigger than that of the prototypes (see fig. 25 H). Each needs to have a universal hole of a certain diameter, found through experimentation, to suit the composition and inside diameter of the tube used, within which the T creates a sustainable loss resistance, while at the same time guaranteeing perfect water-tightness.

The T's in Table 7 have a through-hole measuring 8 mm in diameter and are to be inserted in a universal hole of about 14 mm (see fig. 25 H), provided this is in a tube with a minimum inside diameter of 30 mm. Each series of T's not foreseen on page 69 ( see Table 7 and fig. 25 H) has a through-hole with different diameters (steps of 2 mm) compared to the usual diameters in Table 7.

## 97 fig. 23 - flexible mask for marking the universal holes

About 2 cm high by 40 cm long, this is used to mark the position of the universal holes at set intervals "i" without having to detach this first, as this is attached to the tubes of normal diameter with spring clips or a hose clamp.

The indelible circles pencilled on the IT (see fig. 23) are used to form the uniform holes at precise intervals and especially in multiple connections (see fig. 22 A) having coinciding axes of symmetry with those in the IT's opposite.

## 98 rare or repeated holes in stiff and elastic resin tubes

Universal holes can be quickly made in the field using a heated cross-head screwdriver and then trimming the holes with a manual countersink tool (see fig. 3 B) with sharp blades or fine abrasive surfaces.

To use a VDI in tubes of varying thicknesses and to get the right delivery rate, you need to stop drilling the holes with tool B2 at the exact point required. Check each hole with a gauge to discover if it is close to the required diameter. This is particularly useful when adding new holes to an existing tube in the field.

Tool 41 B

If you have to grind a lot of rough holes, you can use the tool shown in fig. 41 B with countersink tool B2 on a special drill bit and fitted with a height adjustable spacer tab "a". Pass the stiff shim corresponding to the IT used through window "f" in tool 41 B and then secure in its seat with the hose clamp between nut "d" and the octagonal base "b" of tool B2.
You can thus make precise universal holes with tool B2 (diameter "D" = 7.8 mm) between curvatures "c" and "c1" and, in any case, more towards "c" (see fig. 19) since, when the hole is closer to "c", you can grind this from the base of the seat of tab "a" up to the inner wall of an IT of varying diameter and thickness "h".
As well as telling the operator that the required grinding of the universal hole is complete when this is touched, the tab "a", or rotary ring, also provides a good base to prevent deformation in elastic IT's, mainly in the area next to that where countersink tool B2 is working, worsened by the weight of the drill.
The tab tells the operator the exact moment to check the perfect completion of the universal hole when this rubs the outside of the tube. This can be better checked by inserting a stiff, well calibrated cylindrical dowel.
Even if the diameter of the universal hole has been tested several times by inserting the 7.8 mm cylindrical dowel, also announced by the repeated rubbing of the tab "a" (see fig. 41 D), you may find that there is a slight difference in the delivery rate of VDI's working at the same water pressure and with the GC inserted to the same degree, due to unacceptable imprecision in a hole.

**metal pipes and slightly elastic tubes**

Finished universal holes can be made in metal pipes or stiff resin or slightly elastic tubes in a workshop using slightly tapered borers mounted on drills moving up and down a vertical track. This mechanism offers the advantage of being able to stop the countersink tool at the precise point required, thus obtaining perfectly precise universal holes.
In the case of VDI type 1 and 2 (see fig. 44), you can make cylindrical or countersunk universal holes with a range of diameters starting from 7.45 mm for very elastic tubes to 7.5, 7.55, 7.6, 7.65, 7.7 or 7.75 mm, depending on the degree of elasticity found in the tube after the tests on page 36.

**99 equipment needed in the field to make universal holes in metal pipes and slightly elastic tubes.**

In a system with many VDI's (prototypes 1 and 2 in fig. 44), you need to use several different drill bits to get a rough seat for the universal hole (e.g., using a 7.3 mm drill bit to make a rough hole that will then be bored to get a universal hole of 7.5 mm).
In the field you mainly use a hand-drill or electric drill, with very slow rotation speeds to get precise and immediately finished universal holes after boring with cylindrical or slightly tapered borers.
It's also a good idea to have some smaller diameter borers (by 1/20 mm) to create some more tapered universal holes.
These slight reductions in the diameter of the universal holes have shown during tests that the reduced "minimum cross-section" (see fig. 20 C) at this point in a slightly elastic tube with about 60% ultimate elongation lets you get the same drip rates as those possible with the same VDI in a stiff tube with an optional 7.6 mm universal hole. The minimum delivery rates in both cases are virtually identical at the highest water pressure rates.reached by the invention.

**100 light vice for making holes in the tubes**

To make holes in the tubes in the field, you can use a light vice (see fig. 24). This can be produced by any workshop using a simple short length of large diameter steel pipe: through-holes are made in this and hollow cylindrical bodies 1, 2 and 3 with internal threading are then welded to this. The second of these bodies is aligned with that of the guide wall (see fig. 24 A).
Fig. 24 A also shows the circular ring ("c.c.") when the operator has managed to make the circle pencilled concentric within the guide wall in order to stabilise this by tightening the three screws.
Before tightening these screws completely, check the precise formation of the circular ring (see fig. 24 A) using a torch if there isn't enough daylight. Then secure the tube in the vice and chase using a steel bit with diameter a little less than "d".
Using strong steel guide walls, unaffected by excessive wear from constant rotation of the drill bit, you can correctly direct the drill bit at right-angles to the axis of symmetry of the tube to get rough holes and then the borer to get the finished hole.

**101 bigger plugs acting as T's at 90° and their options in Table 5**

The options of plugs "a" used to guarantee water-tightness in the T's used under difficult water pressure conditions are:

- the pressure ring with extending tab
- the seal
- the metal reinforcement ring
- the protrusion "P"
- the very strong spring clip (see fig. 41 A) as a fixed accessory for the shafts of the various T's, even when fitted with one or a selection of the options mentioned above.

To simplify the description, here we shall only consider the 4 options applied to the plug "F", numbering their respective functions with reference to fig. 25 A, B, C and D.

**fig. 25 A - extending tab**

The extending tab in fig. 25 C forms a V-shaped step (together with the inner ring in fig. 36) to make it easier for the plug "F" to enter in an optional universal hole, even if fitted with a seal (see fig. 25 B and 25 G) of the right thickness.
The extending tab creates a wider area of pressure (see fig. 36) than usual (see fig. 25 C), creating a suction cup type of adherence (1).
The great turbulence of the fluid could more easily open a gap under the normal pressure ring (see fig. 25 C, 25 and the prototype) leading to infiltration from d-e and e-f in fig. 26 A. However, the thin edge of the extending tab (see fig. 25 C) absorbs less vital force of the fluid and depends on stable adherence guaranteed by its suction cup type of grip.
The extending tab and the seal (see fig. 25 G, prototype) together press against their respective chambers "c1" and "c2" with a suction cup effect depending on the thrust received both from the hydrostatics and the hydrodynamics, thus strengthening the water-tightness at e2-d2 further to varying degrees.

**fig. 25 B - seal**

In elastic tubes, the seal forces the shaft of the plug "F" to enter further into the universal hole depending on the thickness of the seal. This (2) produces the static attrition required between the wall of the universal hole and that of the shaft of the plug "F", benefiting the water-tightness at e2-f1 in fig. 25 G, prototype.
To increase the water-tightness of "F" even further, you can increase the inclination of the outside wall of the shaft (angle $\gamma$ in fig. 25 H) in a series of sample plugs "F".

**fig. 25 A - protrusion "P"**

This has a different size and position depending on the composition of the sample T and is found inside the through-hole in line with the pressure ring (see fig. 36 and 26 A) and the point where (3) this may later be compressed as the hollow screw advances (thrust towards d-e and e-f in fig. 26 A and 25 E), thus getting the angular pressure required to guarantee the water-tightness of plug "F".
The protrusion "P" by itself is not always enough to strengthen the angular pressure (at d-e and e-f in fig. 26 A; d1-e1 and e1-f1 in fig. 25 D), but is particularly needed in the case of very elastic tubes with universal holes whose diameter is not small enough.
When the simple protrusion "P" ends up being completely compressed (see fig. 25 G), it produces only a reasonable amount of pressure in chambers c1 and c2. To increase the water-tightness of the plug "F", you will need to use the option described below.

**fig. 25 D - reinforcement ring**

This works best when a very strong spring clip (see fig. 41 A) stabilises the plug "F" to the point that the pressure applied by the pressure ring (see fig. 36) against the area of pressure is increased substantially. A strong steel reinforcement ring also helps make up for a loss in elasticity over time in the pressure ring due to protected bending.
The increase in pressure applied by the reinforcement ring alone on the chamber c1 or c2 (like that applied by the protrusion on its own) produces (4) an improvement in the water-tightness in the areas of pressure "S" and "S1" in fig. 25 D.

The stable water-tightness obtained when the protrusion + reinforcement ring are used together in the same t ("F", "E" or "F1") is the best technical solution as it's more effective (2) than when these are used separately, considered at (3) d-e and e-f and (4) d-e in fig. 26 A above.

To get water-tightness at "S" or "S1" in fig. 25 D thanks to the use of the protrusion + reinforcement ring, benefiting the formation of a better suction cup effect in chambers c1 and c2, the protrusion "P" must create sufficient thrust against the reinforcement ring and be positioned at the point (found through testing) that leads to the most effective advance of the other.

**102 simple and combined use of the 4 plug "a" options in Table 5**

Combined pressure effect (5) (see fig. 26 A and fig. 25 D).

comments on fig. 26 A

functions of the protrusion

Any screw in the invention that advances will press against the protrusion completely, thus creating useful pressure on the hollow shaft of plug "F" at e-f, less so at d-e. This will then produce a slight shift in the T-shaped reinforcement ring towards y-y, until this turns off its original position (axis of symmetry x-x).

This situation creates the thrust in direction 1 that makes the reinforcement ring turn to get the thrust required at "h" (see fig. 26 A) to guarantee the water-tightness of the stretch d-e relative to the greater mechanical pressure at this point.

The T-shaped reinforcement ring sinks into the tested resin compound used for plug "F" (thus also encouraging its rotation) to concentrate the pressure at "t" in fig. 26 A.

The position, plug "F" compound, projection and size of the protrusion are all factors that together produce the direction and intensity of the optimal thrust (1 in fig. 26 A). However, if you keep trying to get more pressure at "t", you could risk neglecting the more extended angular pressure at d-d and e-f and the intensity needed to get better water-tightness in plug "F".

To get the right levels of thrust at d-e and e-f, you need to use several T's, fitting these with combinations of the options described below in order to get water-tightness with unfavourable water pressure levels.

function (5), option 3 B, low-cost solution of the reinforcement ring, with "P" as shown in fig. 26 A and 25 E.

This is a construction solution that lets you get an acceptable rise in pressure at d-e and e-f.

**Table 6**

options in Table 5 for T's "E1", "F" and "F1" in order to avoid leaks or greater losses at AR1 (see page 27).

**Description of how the construction options for the T's work**

1) **option 3B**

configuration 25 E

function (5).

When the protrusion "P" is compressed by the hollow screw of the nipple as this advances, it produces angular pressure at d1-e1 and e1-f1.

With thrust "1" (see fig. 26 A), obtained through testing towards the lower part of the T-shaped reinforcement ring, you get greater pressure at "t", while thrust in direction 2 is also produced, pressing against e1-f1.

2) **option 3 B1**

Here the **protrusions** "P" and "P1" are set at heights h1 and h2 respectively (see fig. 25 E, solution 2).

When protrusion "P" is compressed by the hollow screw of the nipple as this advances, this creates a thrust in a specific direction towards the lower section of the T-shaped reinforcement ring and is more effective than is the case with option 3 B when it comes to getting greater pressure at "t".

With protrusion "P1" at height h2, there is more effective pressure at e1-f1 (see fig. 25 E) when completely flattened.

The pressure against the inner walls of the IT, pushing these against the walls of the universal hole, is thus increased at d1-e1 and e1-f1 with option 3 B1, something the previous T-shaped reinforcement ring was unable to deliver.

3) **option 3 C**

configuration (see fig. 25 F)

Protrusions "P" and "P1" work in the same manner here as in option 3 B, with a new sample T in plug "F".
Option 3 C is used in a plug "F" with extending tab; protrusion "P1" is set at height "h2", suitable for tubes of the usual thickness.

a) protrusion "P" requires a greater projection "sp1", when compressed by the hollow screw as this advances, to get a fair amount of thrust on T-shaped reinforcement ring, which is hinged here in "c" (see fig. 25 H) by a mesh sunk into the body of the plug "F".
The T can press strongly against e1-d1 with its swelling (see fig. 25 H) along "t" and sinks into chamber "c1".
b) With protrusion "P1" having a suitable extension to press the shaft of plug "F" harder against the universal hole (as happens with option 3 B1), there is consistent pressure in e1-f1 making for greater water-tightness.

As "P1" is flattened, the nodes of the mesh are also compressed, to secure this before stretching it and to guarantee safe hinging of the T-shaped reinforcement ring at c in fig. 25 H, thus making it possible to rotate this better and increase the intensity of thrust in direction 1.

4) **Option 3 C** is applied in a configuration (see fig. 25 G) where the extending tab is combined with a complete option 2A seal.
a) Protrusion "P" with greater projection "sp1" produces more consistent towards the base of T here than in option 3 B1, making this rotate, and producing with its swelling concentrated pressure on ribbing "n", but also extended to the more elastic area of the plug "F" (see fig. 25 H) to get further pressure at e and the area of most pressure "a".

When the ribbing "n" is pushed by the swelling of the T, chamber "c2" is compressed even further and the water-tightness between the extending tab and the seal, and between the seal and the area of pressure, is increased.

**option 2A**

This is a seal with ribbing that is more efficient in stabilising the water-tightness at e2-d2 (see fig. 25 G), as the swelling produces concentrated thrust on the ribbing "n", using its pronged detail ("n" in fig. 25 G) extended towards the end of the seal and, having passed chamber "c2", continues to press this until thin (this flap is quite elastic and subject to a lot of turbulence in the fluid in certain tubes) (see page 45,lines 58-59).

**5 possible "sample" T-shaped reinforcement rings** (see fig. 25 H for **dimensions**)

**1) Plug "F" in fig. 26**

This has an ordinary pressure ring and the dimensions shown in fig. 25 H and detailed in Table 7. Without any options, the basic plug "F" is already suitable for use at about 4 Bar in minimal elastic or stiff tubes with a 14 mm Universal hole.
Its 8 mm through-hole offers adequate delivery in the connections shown in fig. 22 A and 22 B. Remove the solid screw (see fig. 26) to fit the capillary tube, nipple, valve "V" and even the mercury thermostat.

**2) T with option 3 A - reinforcement ring function (4)** (see page 66,line 21) This plug "F" has been fitted with the normal pressure ring (see fig. 25 E) with a simple T-shaped reinforcement ring, at an angle, plus the usual spring clip (see fig. 41 A and 41 D). This offers water-tightness at over 4 Bar.
**3) T with option 3 B** - reinforcement ring function (5) + protrusion as in fig. 25 E

This is a technical solution where plug "F" has protrusion "P" to produce angular pressure in d1-e1 and e1-f1.
The protrusion "P" is positioned to get suitable thrust in direction 2 (see fig. 26 A) at e1-f1 and another in direction 1 directed towards the base of the T-shaped reinforcement ring, in order to get valid concentrated pressure at "t". This is emphasised by the swelling, to get water-tightness of the T at over 6 Bar.
If the IT is too elastic, however, with a universal hole larger than necessary, you should use the configurations shown in fig. 25 H or 25 g.

## 4) Option 3 C, configuration in fig. 25 H

When you need to create more pressure at e1-f1 in the presence of a highly elastic tube subject to irradiation by the summer sun, also fitted with a universal hole whose diameter has been found to be too wide during tests, you need to use the extra protrusion "P1". This is compressed by the hollow screw of the nipple as it advances, thus guaranteeing the water-tightness at water pressure levels where the «sample» T previously had problems.

As the protrusion "P1" is flattened, also the mesh should be evenly compressed and well secured in order to get useful hinging (see fig. 25 H) of the T-shaped reinforcement ring at "c". This makes for far better rotation.

To make the thrust in direction 1 (see fig. 25 D) more effective, protrusion "P" needs to be placed in the most suitable position to get increased pressure at "t" in the chamber "c1" in a new T.

To increase the thrust at "t", you can also use the maximum projection "sp1" of the protrusion "P". This requires that the hollow screw has the necessary lead-in (see fig. H). With such construction details, you can maintain the water-tightness of plug "F" in a metal pipe at over 7 Bar.

## 5) Different plug "F" with sample T option 3 C + seal option 2 A (see fig. 25 G)

This last configuration of the plug "F" is more expensive than the previous T's and should only be used when all the other construction solutions have been unable to stabilise the water-tightness.

With a T-shaped reinforcement ring, mesh and protrusion "P" with maximum projection "sp1" (option 3 C), you can get a fair amount of pressure on the area of greater pressure "a" (see fig. 25 H). This is consolidated by the ribbing "n" on the seal option 2, having a suction cup effect on chamber 2, thus perfecting the water-tightness with the pronged detail ("n" in fig. 25 G) which also presses up against the edge of a seal at times subject to significant water turbulence.

Protrusion "P1" (option 4) at height h2 serves to hinge the T at "c" (see fig. 25 H) and so produce more thrust at "a2, while the greater width of the $\gamma$ angle (see fig. H) can further help maintain the water-tightness of the plug "F" at e1-f1 in minimal elastic tubes or metal pipes working at more than 7 Bar.

## Table 7

Summary of the construction and technical details of the T's and the bends

( Since there are no working models of the T's yet in order to indicate the precise water pressure values possible without leakage, the figures below are merely approximate. The pressure levels indicated for the use of the T's are those for systems on a slope.)

The T's "F", "F1", "E" and "E1" are used to get more connections, replacing conventional 90° T's (see fig. 22 A, 22 B and 21 B), between tubes of differing diameters and composition; likewise, the T's are also useful to create bends.

## Basic plug E (see fig. 44 for dimensions)

This is the same size as two plugs "a" type 2 joined together (see fig. 44) and fitted with corresponding pressure rings (see fig. 36), diameter 13.3 mm, 26.2 mm long. This plug is used in the connections shown in fig. 21 A, 21 A1, 21 B and 21 C.

-    possible water pressure:

    up to about 1.5 Bar in connections fig. 21 A and 21 A1. The seal shown in fig. 25 B needs to be used at this pressure, together with the extending tab (see fig. 25 C), for the plug to work in minimum elastic tubes.
    .at over 1.5 Bar you need to add a copper capillary tube (see fig. 21 B) at "E", fitted with plug "a" options 1, 2, 3B or 4 in Table 5.

-    composition:
    Teflon/polytetrafluoroethylene or nylon/polyamide 6, or PVC if using sweet water.

    .universal holes: preferably reduced or optional, to be made in view of the composition of the tube used to guarantee safe and easy insertion of the T. **LARGER T's**

**E1 - larger, used as a conventional 90° T (see fig. 25 H)**

dimensions:

- ring with extending tab, diameter = 29.4 mm
- normal outer ring, diameter = 22 mm
- normal pressure ring for reinforcement ring in fig. 26 A ( (smaller than that in fig. 25 H), H = 15 mm
- extending tab, H =16 mm
- through-hole, diameter = 8 mm
- membrane (see fig. 9 B) to be removed when first used. To stop the flow, insert the GC (fig. 13) and hold in position by a hose clamp (see fig. 41 D) on the hollow shaft of plug "E1" (see fig. 36).

applicable pressure: c. 2 Bar

composition: Teflon, Nylon, PVC

connection types:

1) You can replace plug "E1" for "F" in the configurations shown in fig. 25 E and 25 F to avoid having to use threaded capillaries in the connection (see fig. 21 B), thus preferring to use a smooth copper capillary tube connected via the coupling "E2" in fig. 25 H to another tube in nylon or PVC.
2) Similar connection to fig. 22 A between parallel tubes:
Here you use a hollow cylindrical body more than 50 mm long, taking into account height "h" in fig. 41 F of the sample fixed to the spacer, and to be inserted in the respective through-holes of "E1" to ensure that the corresponding protrusions are well and truly compressed.

How to make the connection in fig. 22 A:

After inserting the two T's "E1" in the corresponding tubes:

a) use a large spring clip (see fig. 41 D) to distance the IT's;
b) next insert the cylindrical body in the through-holes of the corresponding T's "E1" and the spacers in fig. 41 F between the tubes;
c) after connecting the tubes to the spacers in fig. 41 G using the hose clamp (see fig. 41 D), stabilise the water-tightness of each plug "E1" using function (5) of the protrusion + reinforcement ring. In other words, when the hollow cylindrical body is inserted to the right degree to produce extended compression of the corresponding protrusions. Next, firmly pull both the shafts of "E1" with a pair of pliers in order to apply spring clips (see fig. 41 D) at d1 in fig. 36.

The spacers in fig. 41 F offer supports that can be adjusted in height using extremely thin, stiff waterproof shims. These shims help perfect the "E1" + hollow cylindrical body + "E1" connection that requires suitable traction on the hollow shafts of "E1" in order to get the right pressure for each pressure ring (see fig. 36) on the corresponding area of pressure.

3) This connection is used between two tubes at right-angles, or intersecting at various angles, in which case several connections of the type shown in fig. 22 A for "E1" are required. This happens in the case of the bend shown in fig. 28 .(see page 63). The connection often becomes more complex in configurations like those in fig. 25 E, 25 F and 25 G in order to get better water-tightness.

**Coupling "E2"** (see fig. 25 H):

Its dimensions are the same as two T's "E1", joined lengthways, including 2 normal pressure rings (see fig. 25 H) that prevent the spring clips in fig. 41 A and 41 D (see also fig. 21 E) from coming away. dimensions:

rings:

- diameter = 22 mm
- H = 39.4 mm, (4.5 + 10.5 + 1.3) x 2

through-hole = 8 mm
pressure: over 2 Bar (with copper capillary tube)
composition: Teflon, Nylon, PVC
connection types: see fig. 21 E and 21 G.

**Basic plug "F"** (see fig. 25 H)

dimensions:

- external ring: diameter = 29.4 mm with extending tab
- diameter = 22 mm (normal)
- through-hole = 8 mm
- H = 15 mm, normal pressure ring
- H = 16 mm, (with extending tab

applicable pressure:

for model 1 in Table 6 on page 245: up to 4 Bar (no options)

- option 3 A: over 4 Bar (configuration as in fig. 26, plus reinforcement ring)
- option 3 B: just over 5 Bar (function (5) in fig. 25 E)
- option 3 B1: over 6 Bar
- option 3 C: over 7 Bar (configuration as in fig. 25 F)
- option 3 C + 2 A: over 7 Bar (configuration as in fig. 25 G)

composition: Teflon, Nylon, PVC

connection types:

• between parallel tubes or perpendicular tubes with nipples (see fig. 22 A)
• between distant tubes (see fig. 22 B and 27)
• see also fig. 28, 29, 30, 31, 32, 34 and 35 A, always secured with very strong spring clips.

Notes: plug "F" is placed in the system at the points where the tubes have an octagonal screw in them (see fig. 26). This screw has to be replaced in order to make System connections.

Plug "F1" (see fig. 25 H)

dimensions:

- normal pressure ring: diameter = 29.4 mm with extending tab
- diameter = 22 mm (normal)
- H = 21 mm, normal pressure ring
- H = 22 mm, (with extending tab
- through-hole = 8 mm

applicable pressure: same as for "F"
composition: same as for "F"
connections: same as for "F", but can be used with thicker IT's.

**Coupling "F2"** (see fig. 25 H)

dimensions:

- pressure ring: diameter = 22 mm
- length = 39.4 mm
- through-hole = 8 mm

The dimensions of the "F2" are the same as two plugs "F1", joined lengthways, including 2 normal pressure rings (see fig. 25 H) with internal threading of opposite directions to take the metal or nylon capillary tubes. This coupling can withstand water pressure over 7 Bar.
Two spring clips (see fig. 41 D) are placed on the shaft in fig. 21 E to prevent leakage from the nut screw. To improve the water-tightness even further, a few strands of hemp can be wound around the threading of the capillary tubes, up to the seal ("a" in fig. 27); the relevant nuts "b" can then be tightened to press these seals against the two corresponding pressure rings in the "F2".
composition: Teflon, Nylon or PVC.
connections: see fig. 21 E and 21 G.

**Elastic bends and copper bends**

(see pages 61 and 63)

These consist of tubes with optional universal holes (7.45, 7.5, 7.55, 7.6, 7.65, 7.7 or 7.75 mm in diameter; normal diameter = 7.8 mm) and suitable for insertion in plugs "E". These tubes have a universal hole measuring 13.75, 13.80, 13.85, 13.90 or 13.95 mm in diameter (normal diameter = 14 mm), accepting the T's in Table 7, including those with a thicker seal with ribbing (option 2 A on pag. 37). The nipples "I" screwed into these must be made from a compound that withstands excessive wear in the shaft, even if this is compressed for long periods by the stiff walls of the universal hole.
The bends can incorporate T's "E1" at up to 2 Bar or T's "F" and "F1" between 4 and 7 Bar with the relevant options listed in Table 5.
T "E1" is plugged with the stopper (see fig. 13) and held in position with the spring clip in fig. 41 D. The octagonal headed screw (see fig. 26) is used in plugs "F" and "F1" until such time that one of the System connections is required.
Caps "c" (see fig. 35) are hammered into the ends of the bends, held in position with a brace and hose clamps.

**103 Examples of connection between two IT's using a threaded or smooth capillary tube**

(see fig. 27)

```
              T                                        T
         configuration                            configuration

         25 F |                              |  25F
              |                              |
         or   |  + F2 + copper capillary + F2 +  |   or
          .   |                              |
         25 G |                              |  25e
              |                              |
        | a      |  | b  |          c         | d  | |   e   |
```

case 1 - the configuration in fig. 25 G at "a" and "e"

The water pressure here exceeds 7 bar. Minimally elastic IT's are used. Both the plugs "F" at either end are fitted with a seal, extending tab, reinforcement ring, protrusion "P" with projection "sp1" and protrusion "P1"

(option 3 C) plus a copper capillary tube.

In b and e, the capillary tubes are screwed into either end of the coupling "F2". The shafts of these tubes are secured with spring clips (see fig. 41 D and 21 E), and nuts "b" if necessary (thoroughly tightened), to compress each seal "a" in fig. 27 with hemp wound around the threading as well as around the threading of the capillary tube inside the "F2".

case 2 - configuration in fig. 25 E

At "a" and "e", the plug "F" has option 3 B1 for water pressure over 6 Bar; "b" and "e" represent the coupling "F2" with the capillary tubes screwed into this (both sets of threading are secured with a few strands of hemp, while the hose clamps in fig. 21 E are fixed on top).

case 3 - pressure under c. 3 Bar.

Here you can still use a tube with minimum elasticity and T "E1" with option 3 B1 (see fig. 25 E, solution 2) at the connection points "a" and "e". A smooth copper capillary tube is inserted in the T and held in position on the shaft of the "E1" with a hose clamp (see fig. 41 D).
The coupling "E2" is used at "b" and "d", secured with strong spring clips (see fig. 41 D), having first inserted the copper capillary tube (or possibly a nylon tube).

Connection method:

Apply the hose clamps shown in fig. 21 E above the shaft of "E2" to tighten the two capillary tubes inside this. If using a nylon capillary tube (or one of a different material) that may deform under the force of the hose clamp,
**[0761]** and thus cause a leak, you need to immerse this in very hot water to fit a strong, flat ring made from stainless steel (1/10 mm thick) or similar within the gap at the exact point where the clamp will be applied to compress the shaft of the "E2" from the outside.
summary of tube connection types:

1) (see fig. 28)
Every T "F" has a corresponding nipple (see fig. 22 A) in the multiple connection between any two intersecting IT's at various angles. The elastic or copper bend is adapted to this.
2) (see fig. 21 A1)
To connect a tube of sufficient elasticity 1 to a stiff or minimally elastic tube 2, using one or more connections as shown in fig. 22 A. In this way, the two tubes run parallel for a short stretch, with multiple connections ("E1" - hollow cylindrical element + "E1" or "F" + nipple + "F") as shown in fig. 41 G. The elastic tube is then sent off again in the required direction.
3) connection between elastic tubes of slightly varying diameters
If the diameter of the two tubes to be connected differs only slightly, you can use a normal connection (see fig. 2, left-hand side) using the component in fig. 41 E with one or more hose clamps (see fig. 41 D) on each tube behind this.

**How to make the connection in fig. 35 A**

This is particularly suited to metal pipes on a slope working at over 7 Bar. Insert the nipples in the T "F" or "F1 already placed in the IT's, but without actually tightening these fully. Then use a pair of pliers to pull the nipples in order to fit a very strong spring clip on the T at d1 in fig. 36.
Then tighten the nipples, using the spacers in fig. 41 F placed between the two tubes to ensure that they are perfectly parallel.
Before securing the tubes with the large hose clamp in fig. 41 G, make sure that the corresponding T's "F" in each connection of the type shown in fig. 22 A have been tensioned sufficiently by the spacers. If this is not the case, insert enough stiff flat metal shims between the IT and the spacer (see fig. 41 F) and then tighten the hose clamps properly.
To guarantee the water-tightness where leaks have been found during testing in the connection shown in fig. 35, use the seals fitted with option 2 (thicker than those in fig. 25 G - prototype, options 3 C + 2 A on page 68). Wrap as much hemp as possible around the threading of the nipples.

Insert the two tapered PVC caps "c" (see fig. 35) in metal pipes using a heavy hammer and then hold in position with steel braces with strong ribbing and completely coated in resin. These braces should be fixed to the tube with one or more hose clamps and tensioned correctly to prevent the caps "c" from being ejected at loads of over 7 Bar.

**105 Valve "V"** (see fig. 29 and 30)

Valve "V" in fig. 30 is designed to be screwed into a smaller plug "F" than those in Table 7. Such a plug is inserted in a 7.8 mm universal hole or the duty hole in a thick VDI in an IT of normal diameter.

This Valve (type 1) has the fluid flowing along the cylindrical cavity inside the hollow screw (see fig. 30), measuring just 2 mm in diameter, thus letting you slowly change the volume of the bag.

In valve "V" type 2, the hollow screw (see fig. 29) is screwed into a plug "F" with the dimensions shown in Table 7, with a 8 mm through-hole and a universal hole of 14 mm in order to be inserted in the IT, using tubes with a minimum inside diameter of about 30 mm.

Construction type 1 of valve "V" for IT's with a 7.8 mm universal hole.

The bell "B" in fig. 29 is threaded on the outside so that the spigot "c" can be screwed into this, thus drawing the cylinder "c1" with it, producing a shift in the fluid from the bell to the bag "s" (see fig. 30 A and 31 A) and vice-versa.

By tightening the spigot "c" in fig. 29, you can determine the expansion on the bag "S4" in fig. 31 or "S3" in fig. 30. Alternatively, you can gradually change the insertion of this to get the precise minimum drip rates required. The elastic edge of the nylon bag in fig. 30 A must be sufficiently clamped to the tapered shaft of "F" when it lies between the its large 4 mm grooves (see fig. 30). This is placed between two planes at right-angles to the axis of symmetry of the shaft. The underlying fabric of the bag must be compressed between the walls of the universal hole and the external walls of the plug "F".

This repeated compression maintains the water-tightness of the valve even with regard to the fluid flowing inside; to guarantee even further that there will be no leaks from the valve, you can compress the elastic edge of the bag (see fig. 30) with a resin tie clamp or that shown in fig. 41 D, in any case fitted with a suitably wide flat ring.

To insert valve "V" type 1 in an IT, first you need to insert the bag as shown in fig. 30 A or 31 A in the 7.8 mm universal hole and then the plug "F" (smaller than those in Table 7). Carefully push the elastic edge (see fig. 30) into the corresponding groove and then screw the valve "V" into a plug "F" capable of guaranteeing the right water-tightness.

To make the valve operative, start by placing the plunger "c1" in the right position to suit the maximum capacity attributed to the type of bag being used. Next use a magnetised screwdriver passing through the double window (see fig. 29) to unscrew the screw "g5" and so fill the bell "B" with water to the maximum level. Then tighten the screw "g5", before adjusting the aperture of the valve.

Valve "V" type 2 for larger universal holes

This is the type of valve needed in plugs "F" (see table 7 for dimensions), but which is first inserted in a 14 mm universal hole.

For the valve to work, you need to use a bag consisting of a threaded, hollow cylindrical element made from resin (see fig. 30 B and 31 B) and quite thin, to be screwed inside the hollow screw and fitted with a stop ring plus neoprene seal "g6".

This type of valve can be easily moved from one place to another in the system as follows: unscrew the spigot "c" until the bag dries out; then take hold of the body "C2" and extract the valve completely from the plug "F", extracting the bag at the same time; finally, seal the plug "F" with its screw (see fig. 26) until you need to use it again.

concerning the bags:

The bags shown in fig. 30 A and 31 A (type 1) slip onto the shaft of the smaller plug "F" than those in Table 7. The bag in fig. 30 A is suitable for use with a common elastic garden hose, while that in fig. 31 A is slightly strengthened and should be used with metal pipes or minimally elastic tubes at pressures of up to 2 Bar.

Both the bags fig. 31 A and 31 B offer the advantage of pressing a wider inside surface of the IT when filled with water, thus becoming stable with respect to the pressure of the fluid that tends to vary its configuration as the pressure changes. Once the spigot has been loosened, the water in these bags is reabsorbed due to the speed of the fluid (see "s1" in fig. 30), which flows with the dynamics described on page 45 , line 58.

The fabric of the bags in fig. 31 A and 31 B can be thickened so that the valve "V" can stabilise the progressive minimal variations in its volume, provided the fabric can withstand this and so keep the overall dimensions of bag "s4" unaltered and efficient even when the load exceeds the maximum water pressure indicated for the use of the VDI.

The bag in fig. 20 A can be used when the water pressure is well below 2 Bar, used in a medium elastic tube with up to about 100% ultimate elongation. The bag in fig. 31 A is suitable for water pressure of just over 2 Bar, provided it is strengthened and fitted in a minimally elastic or stiff tube. The bag in fig. 30 B can withstand pressure of more than 4 Bar, while that in fig. 31 B is suitable for pressures of over 7 Bar (though both these bags need to be strengthened appropriately).

(When the bags in fig. 30 A and 30 B are empty and moved by the flow of the water, they reduce the cross-section at "s1" in fig. 30 by about 1/6 in an IT with a small inside diameter; while the cross-section at "s2" shows the size of the bag when the flow of water is very slow.)

Position of the valve in types 1 and 2

You can conveniently rest the valve on the ground and screw it into a plug "F" (smaller than those in Table 7), already inserted in a 7.8 mm universal hole, or into another T ("F" or "F1") with the dimensions indicated in Table 7, already inserted in a 14 mm universal hole in line with that of the VDI.

If you want to avoid resting the valve on the ground, you can keep it upright (see fig. 32) using the fork to hold it stable with its four arms and in a 14 mm universal hole in another tube.

Once the valve has been stabilised, you can adjust the volume of the bag by screwing the spigot "c". This has a scale (see fig. 29) that lets you read the exact degree of aperture.

List of main valve components and accessories, with details of the functions of both construction types:

1 construction type 1

Nylon bags with a slightly strengthened elastic edge (see fig. 30 A and 31 A); both types of bag are suitable for garden hoses with an inside diameter of about 20 mm, fitted with 7.8 mm universal holes. The bag in fig. 31 A is strengthened to withstand higher water pressure (just over 2 Bar).

2 construction type 2 - bags with threaded shanks (see fig. 30 B and 31 B)

The bag in fig. 31 B has a greatly strengthened fabric to withstand pressure of over 7 Bar. Like that in fig. 30 B, it has a stop ring and seal. Both bags are intended to be screwed onto a plug "F" of the size shown in Table 7. This plug is then inserted in a 14 mm universal hole, already inserted in a tube with a minimum inside diameter of 30 mm.

3 construction type 1

plug "F" smaller than that used in type 2 above (implying the use of the plastic tie clip, or a steel clamp (see fig. 41 D), fitted with a flat ring, capable of compressing the elastic edge "1" of the bag within the groove shown in fig. 30.

4 construction type 2

plug "F" of the same size or bigger than those in Table 7.

5 construction types 1 and 2

spigot "c" and metal body "c2"

The spigot has threading inside and a millimetre scale on the outside consisting of slightly milled, dark lines on a cast aluminium body anodised in a light colour to contrast with the dark external metal body "c". This difference in colour makes it easier to read the degree of aperture of the valve.

A wide window is found in the flat top of the spigot "c". This is lined up with the corresponding surface in cylinder "c1" below when screwing.

6 construction type 1

hollow screw in body "c2"

In plug "F" (smaller than those in Table 7), the hollow screw has smooth cylindrical inside walls and requires the construction of a specific body ("c2").

7 construction type 2

hollow screw in body "c2"

Here the body "c2" has a hollow screw with internal threading (see fig. 29) that makes it possible to screw the bag holder into this.

8 construction types 1 and 2

cylinder "c1" and spigot "c" in fig. 29

The cylinder "c1" has two milled grooves where semi-rigid resin seals ("G1" and "G2" - for plunger efficiency) are inserted, allowing the cylinder to be pushed and drawn by the spigot "C" within bell "B". The spigot "c" has a curved window that coincides with that of the cylinder "c1" below, allowing for the insertion of the rod in device "d" for tightening or loosening the screw "v" when filling the bell "B".

9 construction types 1 and 2

semi-rigid resin seals "G3"

These are about 1/3 the length of the external circumference of the external metal body; both are snapped onto the thickness of the external wall to become an extension of this same wall (metal body "c2"). When seal "G3" moves against the elastic seal "G4", the spigot "c" cannot be accidentally unscrewed. Seal "G3" also acts as an indicator of the degree of aperture of the valve when read against the millimetre scale on the outside of the spigot "c".

10 construction types 1 and 2

seal "G4"

This seal also helps prevent infiltration of the water into the screwing chamber, which would affect the characteristics of the lubricant.

11 construction types 1 and 2

pressure screw "v1"

This screw secures the spigot "c" with its soft tip (made from a strong resin hood). The pressure applied increases as screw "v1" is tightened. This helps tell other operators of the need to keep the degree of aperture of the valve unaltered.

12 construction types 1 and 2

screwing chamber (see fig. 29)

This has the function described at points 10 and 11 above.

13 construction types 1 and 2

device "d" entraining the cylinder "c1"

This is a stainless steel rod complete with two hoods, the bottom one being fixed, the top one detachable. This device is used to keep the bodies "c" and "c1" in fig. 29 connected during the tightening and loosening of the spigot "c".
For device "d" to work, the rod in fig. 29 is passed through the two aligned windows in bodies "c" and "c1" and then threaded into the two aligned centre holes of the cylinder and the spigot using a suitable tool. At the same time, the rod passes through the washer with 4 circular holes (or seats) where the bearings rotate. These bearings limit the sliding attrition that develops between "c1" and "d" when turned, thus adjusting the valve (see device in fig. 29).

As soon as the rod passes through the bodies "c" and "c1", it comes up against the large rounded hood with a small slot in the base and two facing horizontal cylindrical holes leading into this. The horizontal through-hole in the end of the rod should be lined up with these.

A split pin is inserted through all three holes to connect the hood and the rod and so stabilise the entire connection when both the split ends of the split pin are separated.

14 construction type 2

fork

The vertical position of the valve in fig. 32 is obtained by using a special fork with 4 arms, cast together with the cover. Two of these (the longer arms) are to be fixed firmly in the ground to keep the valve upright.

The valve must then depend on a plug "F" in 14 mm universal holes above the IT

if you use an IT that's too elastic and subject to prolonged exposure to the summer sun, it's worth keeping the valve "V" raised, to prevent its weight from causing the T "F" to sink into IT. To do this, you can use a simple strap to secure the valve at "f" (see fig. 32) and keep it raised at the required point above the IT.)

15 Other components of the valve are the seals in fig. 29.

(end of description)

**Claims**

1. A variable droplet irrigator (VDI) suitable to be inserted into a hole of an irragator tube **characterised by** an elastic plug comprising a hollow tapering shaht having a longitudinal axis a first external ring outside the hole and a pressure ring which in use is positioned beyond the hole, at the ends of the tapering shaft ; a stiff grooved counterplug having a gradually reducing cross section axially extending into the hollow shaft of the plug ; said grooved counterplug comprising convex shaped facets to provide small conduits between the plug and counterplug ; the pressure exterted by the wall of the hole of the irrigator tube on the exterior shaft wall of the plug and the opposing pressure exterted by the convex shaped facets of the counterplug on the interior shaft wall of the plug, causing , as the counterplug is progressively axially inserted into the plug , an expansion of the shaft wall of the plug into the small conduits, the counterplug being provided, at one end with retaining teeth, upon the convex facets, to avoid the risk of being ejected from the plug.

2. A variable droplet irrigator according to claim 1) **characterised in that** the plug is made of the silicon rubber with hardness of about 60A Shore and ultimate elongation of 350%.

3. A variable droplet irrigator, according to claim 1) **characterised in that** a spring clip is applied to shaft of the plug.

4. A variable droplet irrigator according to claim 1) **characterised in that** the small conduits have a trapezoidal cross section area.

5. A variable droplet irrigator according the claim 1) **characterised in that** the counterplug is provided with a knob.

6. A variable droplet irrigator according to claim 1) chracterised in that the counterplug is provided whith an axially extending millimetre scale for adjustment of the insertion of the counterplug into the hollow shaft of the plug.

7. A variable droplet irrigator according to claim 1) and 5) **characterised in that** the small conduits of trapezoidal cross sectional area have a depth of 0,3 millimetre.

**Patentansprüche**

1. Der variable Tropfensprenger eignet sich zur Einführung in die Öffnung eines Bewässerungsrohres und zeichnet sich aus durch einen elastischen Verschluss, der einen spindelförmigen Hohlschaft mit Längsachse hat, einen ersten Aussenkranz ausserhalb der Öffnung und einen Druckkranz, der bei Benutzung jenseits der Öffnung am Ende des spindelförmigen Schafts positioniert ist; einen steifen gerillten Gegenverschluss mit sich stufenweise reduzierender Querschnittsfläche, die längs in den Hohlschaft des Verschlusses reicht. Dieser gerillte Gegenverschluss hat eine konvexförmige Facette, die kleine Leitungen zwischen Verschluss und Gegenverschluss bilden. Der durch die Wand der Öffnung des Bewässerungsrohres gebildete Druck am Ende der Wand des Verschlussschaftes und der durch die konvexe Facette des Gegenverschlusses gebildete Gegendruck auf der Innenwand des Verschlussschaftes verursachen eine Ausdehnung der Wand des Verschlussschaftes innerhalb der kleinen Leitungen, da der Gegenverschluss an einem Ende einen Anhaltestift über den konvexen Facetten hat, um ein Ausstossen durch den Verschluss zu vermeiden.

2. Charakterisierungsmerkmal des variablen Tropfensprengers laut Anspruch 1) ist ein Verschluss aus Silikongummi mit Härte von ca. 60 A Shore und Bruchdehnung von 350%

3. Charakterisierungsmerkmal des variablen Tropfensprengers laut Anspruch 1) ist eine Federmanschette (spring clip), die am Verschlussschaft angebracht ist.

4. Charakterisierungsmerkmal des variablen Tropfensprengers laut Anspruch 1) sind kleine Leitungen mit trapezförmigen Querschnittsflächen.

5. Charakterisierungsmerkmal des variablen Tropfensprengers laut Anspruch 1) ist ein Gegenverschluss mit Knauf.

6. Charakterisierungsmerkmal des variablen Tropfensprengers laut Anspruch 1) ist ein Gegenverschluss, der axial mit einer Millimeterskala versehen ist, damit der Gegenverschluss beim Einfügen in den Hohlschaft des Verschlusses angepasst werden kann.

7. Charakterisierungsmerkmal des variablen Tropfensprengers laut Ansprüche 1) und 5) sind kleine Leitungen mit trapezförmiger Querschnittsfläche und Tiefe von 0,3 mm.


## Revendications

1. L'irrigateur goutte à goutte variable est conçu pour être inséré dans le trou d'un tuyau d'irrigation, **caractérisé en ce qu'**il présente un bouchon élastique comprenant un fût creux fuselé ayant un axe longitudinal, une première couronne extérieure au-dehors du trou et une couronne de pression qui, pendant l'utilisation se trouve au-delà du trou, à l'extrémité du fût fuselé ; un contre-bouchon rigide rainuré ayant une surface de section qui se réduit progressivement, qui s'étend axialement dans le fût creux du bouchon ; ce contre-bouchon rainuré comprend des facettes de forme convexe (ou facettes convexes) pour former de petites conduites entre le bouchon et le contre-bouchon ; la pression exercée par la paroi du trou du tuyau d'irrigation à l'extérieur de la paroi du fût du bouchon et la pression contraire exercée par les facettes de forme convexe du contre-bouchon sur la paroi intérieure du fût du bouchon provoque l'expansion de la paroi du fût du bouchon dans les petites conduites, puisque le contre-bouchon est muni, à une extrémité, d'une dent de retenue au-dessus des facettes convexes, pour éviter le risque de son expulsion hors du bouchon.

2. Irrigateur goutte à goutte variable selon la revendication 1), **caractérisé en ce qu'**il présente un bouchon en caoutchouc silicone ayant une dureté d'environ 60 A Shore et un allongement à la rupture de 350%

3. Irrigateur goutte à goutte variable selon la revendication 1), **caractérisé en ce qu'**il présente une collier à ressort qui est appliquée sur le fût du bouchon

4. Irrigateur goutte à goutte variable selon la revendication 1), **caractérisé en ce qu'**il présente des petites conduites ayant une surface à section trapézoïdale.

5. Irrigateur goutte à goutte variable selon la revendication 1), **caractérisé en ce qu'**il présente un contre-bouchon muni d'un bouton.

6. Irrigateur goutte à goutte variable selon la revendication 1), **caractérisé en ce qu'**il présente un contre-bouchon muni sur le côté d'une échelle millimétrique pour l'ajustement du contre-bouchon dans le fût creux du bouchon.

7. Irrigateur goutte à goutte variable selon les revendications 1 et 5, **caractérisé en ce qu'**il présente des petites conduites à surface à section trapézoïdale ayant une profondeur de 0,3 mm.

TANK
FIG. 1
IRRIGATION TUBE
A
-C-FIG. 2-
b
-V- 32°
FALL IN PRESSURE

FIG. 2
WATER OUTLET
CLAMP
GARDEN HOSE
IRRIGATION TUBE
GARDEN HOSE
C
STOPPER
FIG. 41 e

FIG. 3A
CUT
WATER OUTLET
PLUG IN

FIG. 3B
B1
A
B2
CHECK RING
*b*
α

FIG. 3C
α

3D
INTERVAL
*b*
*b*

3F.

ROUGH SEAT FOR WATER OUTLET
3E
*b*

FIG. 4
HORIZONTAL CROSS-SECTION
VERTICAL CROSS-SECTION
FRONT OF PLUG
PIERCED HOLES
MEMBRANE

FIG. 5
HELICOIDAL RELIEF
CAPILLARY WITH PLUGS

UNIVERSAL HOLES

FIG. 6

FIG. 7
IRRIGATION TUBE
LOOP
MAIN PATH
CAPILLARY TUBE
STRIP

FIG. 8 OVERHEAD IRRIGATION TUBE
SMOOTH COUNTERPLUG FOR SPRINKLING -FIG.13 -
IRRIGATION TUBE
CAPILLARY TUBE
SUPPORT
SPRINKLING
SUPPORT

EP 1 269 012 B1

FIG. 9

HORIZONTAL CROSS-SECTION OF IRRIGATION TUBE

a

b

FIG. 9a

HORIZZONTAL CROSS-SECTION OF PLUG "a"

REINFORCEMENT RING

IRRIGATION TUBE WALL

PRESSURE RING

PRESSURE AREA

CLAMP

DIRECTION OF THRUST BY CLAMP

MEMBRANE

CAPILLARY TUBE

RELIEFS FOR BETTER OF CAPIL-LARY TUBE

FIG. 9b

FRONT VIEW OF IRRIGATION TUBE WITH PLUG "a"

MEMBRANE

PLUG

CUT

FIG. 10

PLUGS "a"

FREE DELIVERY FROM SHUTTER-TYPE ORIFICE

1A

GUSHING

PLUGS "a" AND "b"

2A

DROPLETS

3A

INTENSE DRIPPING

4A

MINI-VARIABLE DROPLET IRRIGATOR

FIG. 19

77

FIG. 11

FIG. 12

SFEROIDAL MEMBRANE
IRRIGATOR

FIG. 13

D1

D2

ℓ2

FIG. 14

HOOK    IT    GUIDE

JOINT

SPACE

FIG. 15

SPACE

PLUG "b" OR HOLLOW SCREW IRRIGATOR

FIG. 16

HOLES

d1

d2

THRGADED HOLLOW
CYLINDRICAL
ELEMENT

SEAL

FIG. 17A

D1  d1  D2

TEETH

FACETING

NOTCHES

EDGE OF FACET

d2

SMOOTH SHAFT

SHECK RING

KNOB

A — A

FIG. 17B
CROSS-SECTION
A-A

TOTAL AREA

HALF-MOON

FIXED AREA

VARIABLE AREA

E  F

ℓ

P1  P

y1

FIG. 17C

FIXED COURVATURE
OF THE SMALL CONDUIT PASSAGE

MINIMUM PASSAGE

R.C.

FIG. 18A

A ⌐

A ⌐

FIG. 18B

CROSS-SECTION    A-A

TOTAL AREA

FIXED AREA

MINIMUM PASSAGE

FIXED CURVATURE

CHORD

FIG. 18C

VARIABLE X AREA

CURVATURE OF INNER CONDUIT WALL

MINIMUM AREA

MAXIMUM EXPANSION OF INNER CONDUIT WALL

EP 1 269 012 B1

FIG. 19  VARIABLE DROPLET IRRIGATOR  V D I

VERTICAL CROSS-SECTION

REDUCTION

UNIFIED CONDUIT

THROTTLING

MINIMUM PASSAGE

PROTRUSION

PLUG "Q" OPTION 4

UNIFIED CONDUIT

CHECK RING

DRIP UNIT

KNOB

LENGHT OF SMOOTH SHAFT

SEE fig. 43

FIG. 20
MEDIUM ELASTIC TUBE

FIG. 21-a

FIG. 21-a-1

FIG. 21-c
HORIZONTAL CROSS-SECTION OF PLUG E

1

PLUG        E

2

II WITH PLUGS

PRESSURE AREA

A          A

B          B

PLUG E WITH CAPILLARY TUBE

FIG. 21-b

FIG. 21-d
FRONT VIEW PLUG E

FORK

FIG. 21-g

FIG. 21-f

MEMBRANE          CUT

FIG. 21-e

CLAMPS

84

FIG. 22A

— NIPPLE —

G1  G2

A  B
C

-P-

d

FIG. 22B

SEAL

PLUG "F"

FIG. 23

i

FIG. 24

GUIDE WALL

1

LIGHTVICE

2

3

CIRCLE DRAWN
IN PENCIL
CHASING

p

c.c.

FIG. 24a

— PLUG F —

FIG.25-a

SHAFT

EXTENDING TAB

f1
e1

SEE FIG.34

O P T I O N S

SEAL VARIOUS THICKNESS

EXTENSION OF SEAL

FIG.25-b

PROTRUSION

FIG.25-c

OPTIONS

REINFOCEMENT RING

$S_1$
$S$

$c_2$

$c_1$

1

$f_1$
$e_2$
$c_2$
$S_2$
$S$

$e_1$

$d_1$ $d_2$

$c_1$

FIG.25-d

h

J

y
a

FIG. 25e

SWELLING

2,8 f1

d1 e1

4,5

7 mm. SP.

P

OPTION 36-1

P1

h1 h2

25f

f1

d1 c1 e1

3

5,5

3,7 7 mm. SP1

P1 P h1 h2

25g

d2 c2 d1 c1 n c e2 e1

SWELLING

f1

P1

P h1 h2 SP1

FIG. 26

G1

FIG. 26 a

h

a

s a

x

t

g

f

y

x

P R 2

PRESSURE RING

HORIZONTAL CROSS-SECTION

VERTICAL-CROSS SECTION

FIG. 27

ANOTHER CAPILLARY TUBE

a b

E2 - COUPLING

FIG. 28

S1

v. FIG. 32

TUBE "a"

TUBE "C"

TUBE "b"

TUBE "C"

COPPER CONNECTION TUBE "C"

SCREW FIG. 26

NIPPLE FIG. 22A

S2

EXTRA TUBE

FIG. 28 a

NIPPLE

b

TUBE "C"

tube-a-

VALVE -V- FIG. 32

FIG. 29
VERTICAL CROSS SECTION.

VALVE "V"    SPIGOT C
DEVICE "d"    SPIT PIN
TAB

WINDOWS

SCALE

G1
G2
C1
V g5

G3
G4

V1
G4

BELL
B

EXTERNAL METAL BODY

-C2-

p1

g6

g7    PROTECTION WALL

SCREWING CHAMBER

LARGHER PLUG "F"
FROM TABLE 6

HOLLOW SCREW

S1

BAG.
SEE FIG. 30

FIG. 30

FIG. 31

GROOVE — EDGE

S1

S3

S2

S4

DRAWINGS

30a

30b

STOP RING

ELASTIC EDGE

SEAL 96

IN STRENGTHENED FABRIC

31a

BAG-HOLDER

31b

IN STRENGTHENED FABRIC

COVER

FIG. 32

SUPPORT FORK

c

f

b

CLAMP

FIG. 33

FIG 34

4º STEP

TANK          LARGER PLUG F

FIG. 35 α

SPACER
FIG. 41 f

TUBE 2

TUBE 1

c

c

FIG. 35

c

BRACING

EP 1 269 012 B1

TAV. 36

NOMENCLATURE

CAPILLARY TUBE

THRESHOLD

PLUG "Q"

EXTERNAL RING

SPRING CLIP

d1

OUTHER WALL OF SHAFT

PLUG SHAFT

PRESSURE AREA (Q.P.)

d

INTERNAL RING OR PRESSURE RING

MINIMUM DIAMETER OF PLUG "Q" SHAFT

REINFORCEMENT RING

FIXING RELIEF

TRESHOLD THROUGH-HOLE

THROUGH-HOLE

IRRIGATION TUBE IT

PROTRUSION

PLUG F

UNIVERSAL HOLE WITH CYLINDRICAL WALLS

SEAL

FIG. 37
VDI PROTOTYPE 1
0.02 – 0.3 bar

FIG. 37 PART 2
VDI PROTOTYPE

8 mm.

EP 1 269 012 B1

96

TAV. 39 - VDI PROTOTYPE 1

STIFF IT
VERY ELASTIC PLUG "a"
GC INSERTION AS 20C
7.7 mm DIAMETER UNIVERSAL HOLE

IG   0.269 mm.
IE   0.183 " "
EG   0.086 " "
—EL  0.117 " "
—E1L 0.208 . .

O3
O2
O1
0.761

PARTICLE SIZE
"     MEDIUM

- 39-a -

CROSS-SECTION OF SHALL CONDUITS
IN d-d1 mm. 14.75 —SEE FIG. 38-d-
$A = mm^2\ 0,129$
$A1 = mm^2\ 0,064$
$A2 = mm^2\ 0,042$

ACTUAL DEFORMATION
OF INNER CONDUIT WALL

H     $mm^2 0,032$
$mm.\ 0,99$   X od Y
I

A

EXPANSION OF WALL AFTER
INSERTION OF GC 20B-20C
E1

ESPANSION OF WALL
AFTER INSERTION OF
GC 20 C

$mm^2 0,124$
$z: 0,761\ mm.$
E

D

E1
E
0,3

VERIFICATION OF
PARTICLE SIZE
FOR TRAPEZOID
CONDUIT

E
P
L

z.C. 0,629   F
z.C. 0,59    G

B

L
0,7
A2   A1   A

C

z = 2.54
GC SHAFT
P1
G

EP 1 269 012 B1

FIG. 40A
DEFORMATION OF INNER CONDUIT WALL IN PROTOTYPE WHIT STIFF IT, 2.3 mm THICK
20C - d-d1 mm 14.75

40B
20B - d-d1 mm 9.75

40C
INNER CONDUIT WALL FREE AT CROSS-SECTION A·A FIG.37

40D
INNER CONDUIT WALL AT CROSS-SECTION A - A IN FIG.37, BUT DEFORMED DUE TO SIMPLE REDUCTION ACTION OF THE UNIVERSAL HOLE IN THE STIFF IT

TIE-COUPLING

SPACER

41·f

41·g

ALTERNATIVE
SOLUTION TO
HOSE CLAMP

WASHER

41C1

FIG. 41C

41·d

#1:1

-d-

s=h

b
α
B2
a

41b

TUBE
THICKNESS

D
7,8mm.

SUPPORT FOR
SHIMS

41·a

FIG. 41 e

41 h

7,7mm.

EP 1 269 012 B1

FIG.42    GC 1 (SEE FIG 44 AND 37) - SPECIALIZED AREAS OF PROTOTYPE GC1

VERTICAL CROSS-SECTION

FIG. 43        GC2      - SEE FIG. 44 -

29.4 mm.

VERY ELASTIC

SEE PAGE 54 LINES 15-18

MEDIUM ELASTIC

- STIFF

lf1

18.4

2.4

x  y2

β 26'51".41

55

5137

ℓ

D

b

SPACE AREA

a

a₀

p₀

EXCESS AREA

4.85

ℓ CONSTANT
D                "
GC OPTION 3 - TABLE 5 -
10.4

3

1.25

20 C
d-d₁

5   x  y2

20 B
d-d₁

9.75

EP 1 269 012 B1

FIG. 44

VDI PROTOTYPE 2
PLUG "a" 2 + GC 2
—FIG. n. 43—

UNIVERSAL HOLE

10.8 mm. ∅ INSIDE

7.8 mm.
UNIVERSAL HOLE

VDI PROTOTYPE 1
PLUG "a" 1 + GC 1
—FIG. n. 42—

PROTOTYPE 2
PLUG "a" 2

PROTOTYPE 1
PLUG "a" 1

EXTERNAL RING THRESHOLD

UNIVERSAL HOLE

MAX

EP 1 269 012 B1

**EP 1 269 012 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4132364 A